(19) Europäisches Patentamt
European Patent Office
Office européen des brevets

(11) **EP 4 546 726 A1**

(12) **EUROPEAN PATENT APPLICATION**
published in accordance with Art. 153(4) EPC

(43) Date of publication:
**30.04.2025 Bulletin 2025/18**

(21) Application number: **23826333.9**

(22) Date of filing: **19.06.2023**

(51) International Patent Classification (IPC):
**H04L 25/03** $^{(2006.01)}$

(52) Cooperative Patent Classification (CPC):
**H04L 25/03; H04W 72/0446; H04W 72/50**

(86) International application number:
**PCT/CN2023/101019**

(87) International publication number:
**WO 2023/246685 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 CN 202210731471**

(71) Applicant: **Vivo Mobile Communication Co., Ltd.
Dongguan, Guangdong 523863 (CN)**

(72) Inventors:
• **HUANG, Wei
Dongguan, Guangdong 523863 (CN)**
• **TAN, Junjie
Dongguan, Guangdong 523863 (CN)**

(74) Representative: **Michalski Hüttermann & Partner
Patentanwälte mbB
Kaistraße 16A
40221 Düsseldorf (DE)**

(54) **INFORMATION SENDING METHOD AND APPARATUS, INFORMATION RECEIVING METHOD AND APPARATUS, DEVICE, AND READABLE STORAGE MEDIUM**

(57) The present application belongs to the technical field of communications. Disclosed are an information sending method and apparatus, an information receiving method and apparatus, a device, and a readable storage medium. The information sending method in the embodiments of the present application comprises: a first device sending a first signal, wherein the first signal comprises a first part and Q second parts; the first part occupies M first time units, and data in the M first time units is the same; each second part occupies P second time units, and data in the P second time unit is the same; and the data in the first time units is the same as or the opposite of the data in the second time units, M being an integer greater than or equal to 2, P being an integer greater than or equal to 4, and Q being an integer greater than or equal to 1.

A first device sends a first signal

21

FIG. 2

# EP 4 546 726 A1

**Description**

## CROSS-REFERENCE TO RELATED APPLICATIONS

This application claims priority to Chinese Patent Application No. 202210731471.4, filed in China on June 24, 2022, which is incorporated herein by reference in its entirety.

## TECHNICAL FIELD

This application pertains to the field of communications technologies, and specifically relates to an information sending method and apparatus, an information receiving method and apparatus, a device, and a readable storage medium.

## BACKGROUND

In a bistatic backscatter communication system, a received signal is a superposition of a wanted backscatter signal and a direct link interference signal with the same frequency, and a strength of the direct link interference signal may be much greater than that of the backscatter signal. Therefore, cancellation of strong direct link interference is a technical prerequisite for realizing speed, coverage, reliable transmission and large-scale connection improvement in backscatter communication. In the related art, the direct link interference cancellation method is to implement demodulation of backscatter communication (Backscatter Communication, BSC) modulated signals under strong direct link interference by combining a repetition structure of radio frequency signals with BSC baseband signals. However, the demodulation performance of this method is limited by factors such as a difference value between the repetition structure and a channel delay, a received signal to noise ratio, a noise rise, and a decision threshold, which leads to poor demodulation performance.

## SUMMARY

Embodiments of this application provide an information sending method and apparatus, an information receiving method and apparatus, a device, and a readable storage medium, so as to resolve the problem of poor demodulation performance of BSC modulated signals at present.

According to a first aspect, an information sending method is provided, including:

sending, by a first device, a first signal, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1.

According to a second aspect, an information sending method is provided, including:

receiving, by a second device, a first signal sent by a first device, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1;

performing, by the second device, backscatter modulation on the first signal by using a second signal to generate a third signal; where the second signal includes a first sub-signal and Q second sub-signals, the third signal includes a third part and Q fourth parts, the first sub-signal is used for modulating the first part to obtain the third part, and the Q second sub-signals are used for modulating the Q second parts to obtain the Q fourth parts respectively; a reference bit, of the first sub-signal, carried in the third signal is represented by a first correlation value or a second correlation value, the first correlation value is a correlation value of a difference value between data in adjacent first time units in the third part, and a second correlation value is a correlation value of a difference value between data in adjacent time units in a third time unit, the third time unit includes M first time units in the third part and a target second time unit in a target part, the target part is any one of the Q fourth parts, the third signal carries Q information bits of the Q second sub-signals, and each information bit is represented by a correlation value corresponding to a difference value between data in adjacent second time units in the fourth part; and

sending, by the second device, the third signal.

According to a third aspect, an information receiving method is provided, including:

receiving, by a third device, a third signal sent by a second device; where the third signal includes a third part and Q fourth parts, the third part occupies M first time units, and each of the fourth parts occupies P second time units, where M is an integer greater than or equal to 2, P is an integer greater than or equal to 4, and Q is an integer greater than or equal to 1;

constructing, by the third device, a third correlation value used when a reference bit carried in the third signal is a first value, constructing a fourth correlation value used when the reference bit carried in the third signal is a second value, and for each of the fourth parts, constructing a fifth correlation value of a difference value between data in adjacent second time units in each of the fourth parts; where the reference bit corresponds to a first sub-signal included in a second signal, the third correlation value is a value related to a difference value between data in adjacent first time units in the third part, and the fourth correlation value is a value related to a difference value between data in adjacent first time units in the third part; and

performing, by the third device, demodulation based on the third correlation value, the fourth correlation value, and the fifth correlation value to obtain information bits, of Q second sub-signals included in the second signal, carried in the third signal.

According to a fourth aspect, an information sending apparatus is provided, applied to a first device and including: a first sending module, configured to send a first signal, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1.

According to a fifth aspect, an information sending apparatus is provided, applied to a second device and including:

a first receiving module, configured to receive a first signal sent by a first device, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1;

a modulation module, configured to perform backscatter modulation on the first signal by using a second signal to generate a third signal; where the second signal includes a first sub-signal and Q second sub-signals, the third signal includes a third part and Q fourth parts, the first sub-signal is used for modulating the first part to obtain the third part, and the Q second sub-signals are used for modulating the Q second parts to obtain the Q fourth parts respectively; a reference bit, of the first sub-signal, carried in the third signal is represented by a first correlation value or a second correlation value, the first correlation value is a correlation value of a difference value between data in adjacent first time units in the third part, and a second correlation value is a correlation value of a difference value between data in adjacent time units in a third time unit, the third time unit includes M first time units in the third part and a target second time unit in a target part, the target part is any one of the Q fourth parts, the third signal carries Q information bits of the Q second sub-signals, and each information bit is represented by a correlation value corresponding to a difference value between data in adjacent second time units in the fourth part; and

a second sending module, configured to send the third signal.

According to a sixth aspect, an information sending apparatus is provided, applied to a third device and including:

a second receiving module, configured to receive a third signal sent by a second device; where the third signal includes a third part and Q fourth parts, the third part occupies M first time units, and each of the fourth parts occupies P second time units, where M is an integer greater than or equal to 2, P is an integer greater than or equal to 4, and Q is an integer greater than or equal to 1;

a processing module, configured to construct a third correlation value used when a reference bit carried in the third signal is a first value, construct a fourth correlation value used when the reference bit carried in the third signal is a second value, and for each of the fourth parts, construct a fifth correlation value of a difference value between data in adjacent second time units in each of the fourth parts; where the reference bit corresponds to a first sub-signal included in a second signal, the third correlation value is a value related to a difference value between data in adjacent first time units in the third part, and the fourth correlation value is a value related to a difference value between data in adjacent first time units in the third part; and

a demodulation module, configured to perform demodulation based on the third correlation value, the fourth correlation value, and the fifth correlation value to obtain information bits, of Q second sub-signals included in the second signal, carried in the third signal.

According to a seventh aspect, a communication device is provided, including a processor and a memory, where a program or instructions capable of running on the processor are stored in the memory. When the program or the instructions are executed by the processor, the steps of the method according to the first aspect, or the steps of the method according to the second aspect, or the steps of the method according to the third aspect are implemented.

According to an eighth aspect, a readable storage medium is provided, where a program or instructions are stored in the readable storage medium, and when the program or the instructions are executed by a processor, the steps of the method according to the first aspect, or the steps of the method according to the second aspect, or the steps of the method according to the third aspect are implemented.

According to a ninth aspect, a chip is provided, including a processor and a communication interface, where the communication interface is coupled to the processor, and the processor is configured to run a program or instructions to implement the steps of the method according to the first aspect, or the steps of the method according to the second aspect, or the steps of the method according to the third aspect.

According to a tenth aspect, a computer program/program product is provided, where the computer program/-program product is stored in a non-transitory storage medium, and the computer program/program product is executed by at least one processor to implement the steps of the method according to the first aspect, or the steps of the method according to the second aspect, or the steps of the method according to the third aspect.

According to an eleventh aspect, a communication system is provided, where the communication system includes at least two of a first device, a second device, and a third device, where the first device is configured to implement the steps of the method as described in the first aspect, the second device is configured to implement the steps of the method as described in the second aspect, and the third device is configured to implement the steps of the method as described in the third aspect.

In the embodiments of this application, the first signal is sent, so that a repetitive time domain structure of the first signal may be used and combined with a baseband signal waveform and modulation mode of a BSC transmitting device in the scenario of backscatter communication, so as to eliminate strong direct link interference/self-interference, reduce demodulation complexity of BSC modulated signals, and improve demodulation performance of BSC modulated signals, thereby improving system performance of backscatter communication.

BRIEF DESCRIPTION OF DRAWINGS

FIG. 1A is a block diagram of a monostatic backscatter communication system to which embodiments of this application are applicable;

FIG. 1B is a block diagram of a bistatic backscatter communication system to which embodiments of this application are applicable;

FIG. 2 is a flowchart of an information sending method according to an embodiment of this application;

FIG. 3 is a schematic structural diagram of a first signal according to an embodiment of this application;

FIG. 4A and FIG. 4B are schematic diagrams of distribution of a first signal according to an embodiment of this application;

FIG. 5 is a flowchart of another information sending method provided according to an embodiment of this application;

FIG. 6 is a flowchart of an information receiving method according to an embodiment of this application;

FIG. 7A to FIG. 7D are schematic diagrams of baseband waveforms in Example 1 of this application;

FIG. 8A to FIG. 8H are first schematic diagrams of baseband waveforms in Example 2 of this application;

FIG. 9A to FIG. 9H are second schematic diagrams of baseband waveforms in Example 2 of this application;

FIG. 10A to FIG. 10D are third schematic diagrams of baseband waveforms in Example 2 of this application;

FIG. 11A to FIG. 11H are schematic diagrams of baseband waveforms in Example 3 of this application;

FIG. 12 is a schematic structural diagram of an information sending apparatus according to an embodiment of this application;

FIG. 13 is a structural schematic diagram of another information sending apparatus according to an embodiment of this application;

FIG. 14 is a schematic structural diagram of an information receiving apparatus according to an embodiment of this application; and

FIG. 15 is a schematic structural diagram of a communication device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application may be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are usually used interchangeably. The described technologies may be used for both the foregoing system and radio technologies, as well as other systems and radio technologies, such as a new radio (New Radio, NR) system or a 6th generation (6th Generation, 6G) communication system.

For ease of understanding of the embodiments of this application, the following content is first described.

Backscatter communication (Backscatter Communication, BSC) is a typical passive IoT device, which uses radio frequency signals from other devices or environments for signal modulation to transmit its own information. Basic composition modules and main functions of a backscatter communication transmitter include:

- Antenna unit: configured to receive radio frequency signals and control commands, and further configured to send modulated backscatter signals.
- Energy collection module or energy supply module: this module is configured to perform radio frequency energy collection for a backscatter communication device, or perform other energy collection, including but not limited to solar energy, kinetic energy, mechanical energy, thermal energy, or the like. In addition to the energy collection module, a battery-powered module may be included. In this case, the backscatter communication device is a semi-passive device. The energy collection module or the energy supply module supplies power to all other modules in the device.
- Microcontroller: controls baseband signal processing, energy storage or data scheduling status, on/off switching, system synchronization, or the like.
- Signal receiving module: configured to demodulate control commands or data sent by a backscatter communication receiver or other network nodes.
- Channel coding and modulation module: performs channel coding and signal modulation under control of the controller, to implement modulation by selecting different load impedances under control of the controller through a selector switch.
- Memory or sensor module: configured to store identity (Identity, ID) information, position information, or sensor data of the device.

In addition to the above typical composition modules, a future backscatter communication transmitter may further integrate a tunnel diode amplifier module, a low noise amplifier module, and the like to improve receiving sensitivity and transmit power of the transmitter.

Optionally, the basic composition modules and main functions of the backscatter communication receiver include:

- Antenna unit: configured to receive modulated backscatter signals.
- Backscatter signal detection module: configured to detect backscatter signals sent by the backscatter communication transmitter, including but not limited to amplitude shift keying (Amplitude Shift Keying, ASK) detection, phase shift keying (Phase Shift Keying, PSK) detection, frequency shift keying (Frequency Shift Keying, FSK) detection, quadrature amplitude modulation (Quadrature Amplitude Modulation, QAM) detection, or the like.
- Demodulation and decoding module: demodulates and decodes detected signals to recover an original information flow.

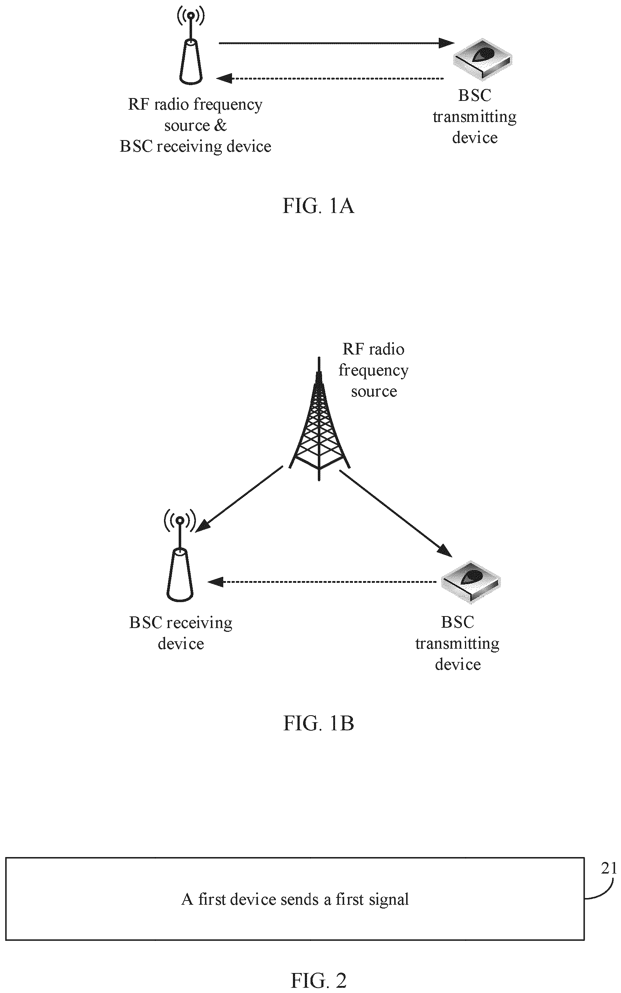

FIG. 1A is a schematic diagram of a monostatic backscatter communication system (Monostatic Backscatter Communication System, MBCSs) to which the embodiments of this application are applicable. The MBCS system includes a BSC transmitting device (such as a tag (Tag)) and a reader (Reader). The reader (Reader) includes a radio frequency (Radio Frequency, RF) source and a BSC receiving device, and the RF radio frequency source is used to generate RF radio frequency signals to power the BSC transmitting device/tag. The BSC transmitting device backscatters a modulated RF radio frequency signal, and the BSC receiving device in the reader demodulates the signal after receiving the backscatter signal. Because the RF radio frequency signal sent from the BSC transmitting device may experience a double near-far effect caused by signal attenuation of a round-trip signal, energy attenuation of the signal is large, so the MBCS system is generally used for short-distance backscatter communication, such as conventional RFID applications.

FIG. 1B is a schematic diagram of a bistatic backscatter communication system (Bistatic Backscatter Communication Systems, BBCSs) to which the embodiments of this application are applicable. Different from the monostatic backscatter communication system (Monostatic Backscatter Communication System, MBCSs), an RF radio frequency source, a BSC transmitting device, and a BSC receiving device in the BBCS system are separate, thereby avoiding the problem of large round-trip signal attenuation. In addition, the performance of the BBCS communication system may be further improved by properly placing the RF radio frequency source. It should be noted that an ambient backscatter communication system (Ambient Backscatter Communication Systems, ABCSs) is also a type of bistatic backscatter communication system. However, unlike the BBCS system whose radio frequency source is a dedicated signal radio frequency source, a radio frequency source in the ABCS system may be a radio frequency source in an available environment, such as a television tower, a cellular base station, a Wi-Fi signal, or a Bluetooth signal.

Different from a self-interference signal in the monostatic backscatter communication system, direct link interference between the radio frequency source and the BSC receiver is present in the bistatic backscatter communication system. Because the direct link interference may be a modulated signal, and the BSC receiver generally does not know a modulation characteristics of the direct link signal, complexity of direct link interference cancellation is higher.

To resolve the problem of poor performance of BSC modulated signals under strong interference at present, the embodiments of this application aim to eliminate strong direct link interference/self-interference through a repetitive time domain structure of carrier signals and the baseband signal waveform and modulation mode of the BSC transmitting device for backscatter communication. Specifically, on the one hand, the repetitive time domain structure of the carrier signals is used to eliminate direct link interference/self-interference; on the other hand, a correlation value of a difference value between adjacent time units of a reference signal and a correlation value of a difference value between adjacent time units of an information signal may be used to jointly carry bit information, so that the BSC receiving device can demodulate a modulated signal only by judging polarity of the modulated signal, thereby reducing demodulation complexity of BSC modulated signals and improving demodulation performance of the BSC modulated signals.

Optionally, the embodiments of this application may be applied to monostatic backscatter communication or bistatic backscatter communication. The following description mainly uses cross-link interference/direct link interference under bistatic backscatter communication as an example, but it is not limited to this.

The following specifically describes in detail an information sending method and apparatus, an information receiving method and apparatus, a device, and a readable storage medium provided in the embodiments of this application through some embodiments and application scenarios thereof with reference to the accompanying drawings.

Refer to FIG. 2. FIG. 2 is a flowchart of an information sending method according to an embodiment of this application. The method is applied to a first device, and the first device is a radio frequency source, including but not limited to a device for transmitting radio frequency signals/carrier signals, such as a base station and a television tower. As shown in FIG. 2, the method includes the following steps.

Step 21: The first device sends a first signal.

In this embodiment, the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1. In this case, one first part and Q second parts form one basic signal block.

When data in two time units are opposite, it can be understood that polarities of the data in the two time units are opposite. For example, polarity of data in one time unit is negative, and polarity of data in the other time unit is positive; or, polarity of data in one time unit is positive, and polarity of data in the other time unit is negative.

Optionally, a first time unit and a second time unit are time units of a same type, and may include any one of the following: symbol (symbol), slot (slot), subframe (subframe), frame (frame), or the like. For example, both the first time unit and the second time unit are slots, or both the first time unit and the second time unit are frames, or both the first time unit and the second time unit are symbols.

Optionally, a data length corresponding to the first time unit is N, and a data length corresponding to the second time unit is N, where N is a positive integer greater than a first threshold, and N may be random. The first threshold is a value related to a channel delay, and is at least greater than a value of the channel delay and may be set based on actual requirements.

In some embodiments, the first signal is a signal for providing a radio frequency carrier and/or a radio frequency function, which may be referred to as a carrier signal, a radio frequency signal, a radio frequency carrier signal, or the like, which is not limited.

In some embodiments, the first part may be referred to as a reference block, such as a reference slot (Reference slots). The second part may be referred to as an information block, such as an information slot (Information slots).

In some embodiments, the first signal may be expressed as s(t), which satisfies the following time domain structure:

$$s(t) = \begin{cases} s(mN + n) = x(n), 0 \le m < M, 0 \le n < N \\ s(mN + n) = c \cdot x(n), M \le m < M + PQ, 0 \le n < N \end{cases}$$

where the value range of m is 0 to M + PQ. When $0 \le m < M$, it represents a corresponding first time unit, and when $M \le m < 2M + PQ$, it represents a corresponding second time unit. A value range of n is 0 to N-1, indicating a data sampling value or data symbol in the first time unit/second time unit. x(n) indicates the n-th data symbol or data sampling value in the first time unit/second time unit. $c \in \{1, -1\}$ indicates polarity of the second part relative to the first part, for example, if c = 1, the polarities of data in the first time unit and the second time unit are the same, and if c = -1, the polarities of data in the first time unit and the second time unit are opposite.

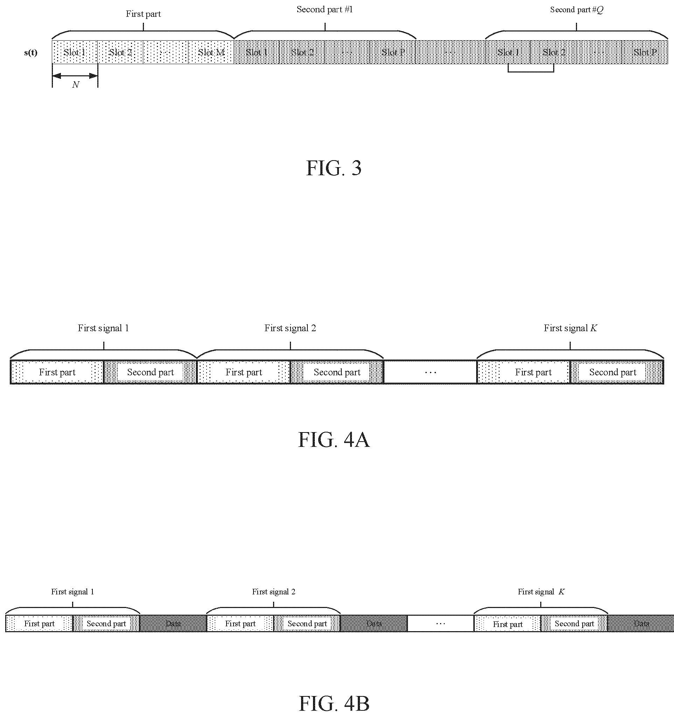

In some embodiments, for example, both the first time unit and the second time unit are slots (slot), the structure of the first signal may be as shown in FIG. 3.

In this way, the first signal is sent, so that a repetitive time domain structure of the first signal may be used and combined with the baseband signal waveform and modulation mode of a BSC transmitting device in the scenario of backscatter communication, so as to eliminate strong direct link interference/self-interference, reduce demodulation complexity of BSC modulated signals, and improve demodulation performance, thereby improving system performance of backscatter communication.

Optionally, the data in the first time unit and the second time unit may be non-random sequences or random sequences.

For example, the data in the first time unit and the second time unit may be non-random sequences generated by using a preset method. For example, the data in the first time unit and the second time unit may be a chaotic sequence generated based on the second-order Chebyshev (Chebyshev) polynomial function, where the chaotic sequence is a non-random sequence and may be expressed as $x(n + 1) = 1 - 2x^2(n)$. where a value range of n is 0 to N-1, indicating a data sampling value or data symbol in the first time unit/second time unit, and x(n) indicates the n-th data symbol or data sampling value in the first time unit/second time unit.

In this embodiment of this application, to smooth the noise, the first device may send K repeated first signals when sending the first signal, each first signal is a basic signal, and the K repeated first signals may be distributed in a centralized manner or a distributed manner, where K is an integer greater than or equal to 2. In the centralized manner, it can be understood that P repeated first signals are distributed together. In the distributed manner, it can be understood that P repeated first signals are spaced apart.

For example, the K repeated first signals may be distributed in a centralized manner, as shown in FIG. 4A; or the K repeated first signals may be distributed in a distributed manner, as shown in FIG. 4B.

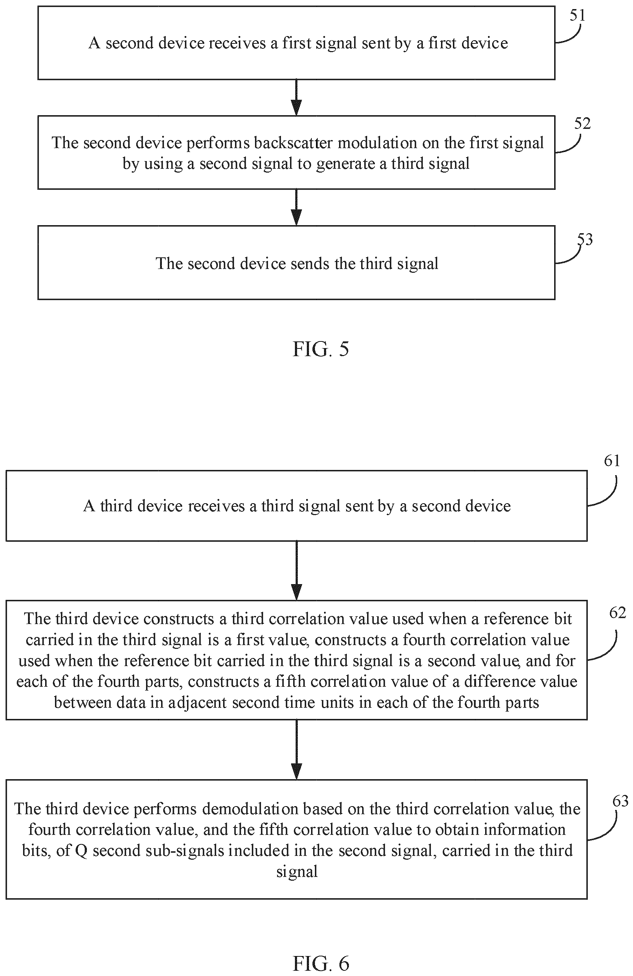

Refer to FIG. 5. FIG. 5 is a flowchart of an information sending method according to an embodiment of this application. The method is applied to a second device, and the second device is a BSC transmitting device, including but not limited to a tag (Tag), a passive or semi-passive Internet of things (Internet of Things, IoT) device, and the like. As shown in FIG. 5, the method includes the following steps.

Step 51: The second device receives a first signal sent by a first device.

In this embodiment, the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1.

Optionally, a first time unit and a second time unit are time units of a same type, and may include any one of the following: symbol (symbol), slot (slot), subframe (subframe), frame (frame), or the like. For example, both the first time unit and the second time unit are slots, or both the first time unit and the second time unit are frames, or both the first time unit and the second time unit are symbols.

Optionally, a data length corresponding to the first time unit is N, and a data length corresponding to the second time unit is N, where N is a positive integer greater than a first threshold, and N may be random. The first threshold is a value related to a channel delay, and is at least greater than a value of the channel delay and may be set based on actual requirements.

It should be noted that when the second device receives the first signal s(t) sent by the first device, a signal received by the second device is a carrier signal obtained after the first signal s(t) undergoes fading of a channel $h_{st}(t)$ from the first device to the second device.

Step 52: The second device performs backscatter modulation on the first signal by using a second signal to generate a third signal.

In this embodiment, the second signal is a baseband signal for modulating the first signal. The first signal includes a first part and Q second parts, and the second signal includes a first sub-signal and Q second sub-signals. The first sub-signal corresponds to the first part and is used for modulating the first part to obtain the third part, and the Q second sub-signals correspond to the Q second parts one by one and are used for modulating the Q second parts to obtain the Q fourth parts respectively. The third part occupies M first time units, and each of the second parts occupies P second time units. After modulation, a reference bit, of the first sub-signal, carried in the third signal is represented by a first correlation value or a second correlation value, and the first correlation value is a correlation value of a difference value between data in adjacent first time units in the third part. In this case, the reference bit is represented by a correlation value of the third part alone. The second correlation value is a correlation value of a difference value between data in adjacent time units in a third time unit, the third time unit includes M first time units in the third part and a target second time unit in a target part, and the target part is any one of the Q fourth parts. In this case, the reference bit needs to be represented by the fourth part. The third signal carries Q information bits of the Q second sub-signals, and each information bit is represented by a correlation value corresponding to a difference value between data in adjacent second time units in the fourth part.

Optionally, to facilitate modulation and demodulation, the target part is preferably a 1st fourth part in the Q fourth parts, and the target second time unit is preferably a 1st second time unit in the target part, that is, the 1st fourth part is used as a third part in a broad sense, and a correlation value of the reference bit is calculated by using the 1st second time unit in the 1st fourth part.

Optionally, if the target part is used for calculating the correlation value of the reference bit, data in an M-th first time unit (that is, the last first time unit) in the third part has the opposite polarity to the data in the target second time unit in the target part, so as to ensure modulation performance. For example, a level of the last first time unit in the third part is opposite to a level of the 1st second time unit in the 1st fourth part.

Step 53: The second device sends the third signal.

For example, after the second device receives the first signal s(t) sent by the first device, a channel delay and a delay spread from the first device to the second device are estimated. Using the channel delay and delay spread from the first device to the second device as a starting point, the third signal d(t) generated after modulation using the second signal (BSC baseband signal) may be denoted by:

$$d(t) = \alpha b(t) * h_{st}(t) * s(t)$$

Where $\alpha$ is a reflection coefficient of an incident signal in the second device (BSC transmitting device), b(t) is a second signal (BSC baseband signal), and $h_{st}(t)$ is a channel coefficient from the first device to the second device. That is, the second device backscatters, based on a reflection coefficient $\alpha$, a radio frequency signal obtained through BSC modulation.

In this way, in the scenario of backscatter communication, the repetitive time domain structure of the first signal is used to eliminate direct link interference/self-interference; and a correlation value of a difference value between adjacent time units of a reference signal and a correlation value of a difference value between adjacent time units of an information signal may be further used to jointly carry bit information, so that the BSC receiving device can demodulate a modulated signal only by judging polarity of the modulated signal, thereby reducing demodulation complexity of BSC modulated signals.

In this embodiment of this application, when M is equal to 2, it is necessary to determine the correlation value of the reference bit in combination with the target part. If the reference bit carried by the third signal is a first value, the reference bit is represented by a correlation value of a first difference value and a second difference value, or if the reference bit carried by the third signal is a second value, the reference bit is represented by a correlation value of a third difference value and a fourth difference value; where the first difference value is a difference value obtained by subtracting data in a 1st first time unit from data in a 2nd first time unit in the third part of the third signal, and the second difference value is a difference value obtained by subtracting data in the target second time unit from the data in the 2nd first time unit in the third part of the third signal; or, the first difference value is a difference value obtained by subtracting the data in the 2nd first time unit from the data in the 1st first time unit in the third part of the third signal, and the second difference value is a difference value obtained by subtracting the data in the 2nd first time unit in the third part of the third signal from the data in the target second time unit; and the third difference value is a difference value obtained by subtracting the data in the 2nd first time unit from the data in the 1st first time unit in the third part of the third signal, and the fourth difference value is a difference value obtained by subtracting the data in the target second time unit from the data in the 2nd first time unit in the third part of the third signal; or, the third difference value is a difference value obtained by subtracting the data in the 1st first time unit from the data in the 2nd first time unit in the third part of the third signal, and the fourth difference value is a difference value obtained by subtracting the data in the 2nd first time unit in the third part of the third signal from the data in the target second time unit.

Optionally, when M is equal to 3, the third part of the third signal may be used alone to determine a correlation value of the reference bit. If the reference bit carried by the third signal is a first value, the reference bit is represented by a correlation value of a fifth difference value and a sixth difference value, or if the reference bit carried by the third signal is a second value, the reference bit is represented by a correlation value of a seventh difference value and an eighth difference value; where the fifth difference value is a difference value obtained by subtracting the data in the 1st first time unit from the data in the 2nd first time unit in the third part of the third signal, and the sixth difference value is a difference value obtained by subtracting the data in a 3rd first time unit from the data in the 2nd first time unit in the third part of the third signal; or, the fifth difference value is a difference value obtained by subtracting the data in the 2nd first time unit from the data in the 1st first time unit in the third part of the third signal, and the sixth difference value is a difference value obtained by subtracting the data in the 2nd first time unit from the data in the 3rd first time unit in the third part of the third signal; and the seventh difference value is a difference value obtained by subtracting the data in the 2nd first time unit from the data in the 1st first time unit in the third part of the third signal, and the eighth difference value is a difference value obtained by subtracting the data in the 3rd first time unit from the data in the 2nd first time unit in the third part of the third signal; or, the seventh difference value is a difference value obtained by subtracting the data in the 1st first time unit from the data in the 2nd first time unit in the third part of the third signal, and the eighth difference value is a difference value obtained by subtracting the data in the 2nd first time unit from the data in the 3rd first time unit in the third part of the third signal.

Optionally, when M is equal to 3, the correlation value of the reference bit may be determined in combination with the target part. If the reference bit carried by the third signal is a first value, the reference bit is represented by a correlation value of a ninth difference value and a tenth difference value, or if the reference bit carried by the third signal is a second value, the reference bit is represented by a correlation value of an eleventh difference value and a twelfth difference value; where the ninth difference value is a difference value obtained by subtracting the data in the 1st first time unit from the data in the 2nd first time unit in the third part of the third signal, and the tenth difference value is a difference value obtained by subtracting the data in the target second time unit from the data in the 3rd first time unit in the third part of the third signal; or, the ninth difference value is a difference value obtained by subtracting the data in the 2nd first time unit from the data in the 1st first time unit in the third part of the third signal, and the tenth difference value is a difference value obtained by subtracting the data in the 3rd first time unit in the third part from the data in the target second time unit of the third signal; and the eleventh difference value is a difference value obtained by subtracting the data in the 2nd first time unit from the data in the 1st first time unit in the third part of the third signal, and the twelfth difference value is a difference value obtained by subtracting the data in the target second time unit from the data in the 3rd first time unit in the third part of the third signal; or, the eleventh difference value is a difference value obtained by subtracting the data in the 1st first time unit from the data in the 2nd first time unit in the third part of the third signal, and the twelfth difference value is a difference value obtained by subtracting the data in the 3rd first time unit in the third part from the data in the target second time unit of the third signal.

Optionally, when M is equal to 4, the third part alone may be used to determine a correlation value of the reference bit. If the reference bit carried by the third signal is a first value, the reference bit is represented by a correlation value of a thirteenth difference value and a fourteenth difference value, or if the reference bit carried by the third signal is a second value, the reference bit is represented by a correlation value of a fifteenth difference value and a sixteenth difference value; where the thirteenth difference value is a difference value obtained by subtracting the data in the 1st first time unit from the data in the 2nd first time unit in the third part of the third signal, and the fourteenth difference value is a difference value obtained by subtracting the data in a 4th first time unit from the data in the 3rd first time unit in the third part of the third signal; or, the thirteenth difference value is a difference value obtained by subtracting the data in the 2nd first time unit from the data in the 1st first time unit in the third part of the third signal, and the fourteenth difference value is a difference value obtained by subtracting the data in the 3rd first time unit from the data in the 4th first time unit in the third part of the third signal; and the fifteenth difference value is a difference value obtained by subtracting the data in the 2nd first time unit from the data in the 1st first time unit in the third part of the third signal, and the sixteenth difference value is a difference value obtained by subtracting the data in the 4th first time unit from the data in the 3rd first time unit in the third part of the third signal; or, the fifteenth difference value is a difference value obtained by subtracting the data in the 1st first time unit from the data in the 2nd first time unit in the third part of the third signal, and the sixteenth difference value is a difference value obtained by subtracting the data in the 3rd first time unit from the data in the 4th first time unit in the third part of the third signal.

Optionally, the first value is equal to 1 and the second value is equal to 0; or, the first value is equal to 0 and the second value is equal to 1. In this way, through setting of 0 and 1, a demodulation process of the modulated signals can be simplified.

It should be noted that for correlation values of different difference values, the different difference values may be obtained through correlation calculation. The correlation calculation may include, but is not limited to, multiplication, summation, or the like. For example, the correlation value of the first difference value and the second difference value may be equal to a product of the first difference value and the second difference value; the correlation value of the fifth difference value and the sixth difference value may be equal to a product of the fifth difference value and the sixth difference value; the correlation value of the ninth difference value and the tenth difference value may be equal to a product of the ninth difference value and the tenth difference value; and so on. The correlation value of different difference values can represent a similarity degree of different difference values or a similarity degree of polarity change.

It can be understood that the above representations of reference bits when M is equal to 2, 3, or 4 are only examples, which is not limited in this application. When M is equal to other values, other representations of reference bits may be used based on modulation requirements.

In this embodiment of this application, a correlation value of the information bit may be determined by using a preset and pre-configured modulation rule in combination with the number P of second time units occupied by the fourth part. Information bit representation manners corresponding to different fourth parts, that is, manners for determining correlation values of the information bit corresponding to different fourth parts may be the same or different.

Optionally, when P is equal to 4, if the information bit carried by the third signal is equal to a third value, the information bit is represented by a correlation value of a seventeenth difference value and an eighteenth difference value, or if the information bit carried by the third signal is equal to a fourth value, the information bit is represented by a correlation value of a nineteenth difference value and a twentieth difference value; where the seventeenth difference value is a difference value obtained by subtracting data in the 3rd second time unit from data in the 4th second time unit in a fourth part corresponding to the information bit, and the eighteenth difference value is a difference value obtained by subtracting data in the 1st second time unit from data in the 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

Optionally, the third value is equal to 1 and the fourth value is equal to 0; or, the third value is equal to 0 and the fourth value is equal to 1. In this way, through setting of 0 and 1, a demodulation process of the modulated signals can be simplified.

Refer to FIG. 6. FIG. 6 is a flowchart of an information sending method according to an embodiment of this application. The method is applied to a third device, and the third device is a BSC receiving device, including but not limited to a reader, a base station, a terminal device, and the like. It should be noted that when this embodiment of this application is applied to monostatic backscatter communication, the third device and the first device are physically a same device and integrated together. However, when this embodiment of this application is applied to bistatic backscatter communication, the third device and the first device are different devices. As shown in FIG. 6, the information receiving method includes the following steps:

Step 61: The third device receives a third signal sent by a second device.

In this embodiment, the third signal is a signal obtained by modulating a first signal using a second signal (baseband signal) of the second device. The third signal includes a third part and Q fourth parts, the third part occupies M first time units, and each of the fourth parts occupies P second time units, where M is an integer greater than or equal to 2, P is an integer greater than or equal to 4, and Q is an integer greater than or equal to 1; A reference bit, carried in the third signal, of the first sub-signal, is represented by a first correlation value or a second correlation value, and the first correlation value is a correlation value of a difference value between data in adjacent first time units in the third part. In this case, the reference bit is represented by a correlation value of the third part alone. The second correlation value is a correlation value of a difference value between data in adjacent time units in a third time unit, the third time unit includes M first time units in the third part and a target second time unit in a target part, and the target part is any one of the Q fourth parts. In this case, the reference bit needs to be represented by the fourth part. The third signal carries Q information bits of the Q second sub-signals, and each information bit is represented by a correlation value corresponding to a difference value between data in adjacent second time units in the fourth part.

Optionally, a first time unit and a second time unit are time units of a same type, and may include any one of the following: symbol (symbol), slot (slot), subframe (subframe), frame (frame), or the like. For example, both the first time unit and the second time unit are slots, or both the first time unit and the second time unit are frames, or both the first time unit and the second time unit are symbols.

Optionally, a data length corresponding to the first time unit is N, and a data length corresponding to the second time unit is N, where N is a positive integer greater than a first threshold, and may be random. The first threshold is a value related to a channel delay, and is at least greater than a value of the channel delay and may be set based on actual requirements.

For example, supposing that the first signal sent by the first device (that is, a radio frequency source) is s(t), a channel from the first device to the second device (that is, a BSC transmitting device) is $h_{st}(t)$, the second signal for modulation by the second device is b(t), a channel from the first device to the third device (that is, a BSC receiving device) is $h_{st}(t)$, and a channel from the second device to the third device is $h_{tr}(t)$, and $\alpha$ is a reflection coefficient, the received signal y(t) of the third device may be expressed as:

$$y(t) = \alpha s(t - \tau_2)b(t)h_{st}h_{tr} + h_{sr}s(t - \tau_1) + w(t)$$

where, the first one $\alpha s(t - \tau_2)b(t)h_{st}h_{tr}$ is a wanted backscatter signal sent from the second device, the second one $h_{sr}s(t - \tau_1)$ is a direct link interference signal sent from the first device, w(t) is a Gaussian noise part, $\tau_1$ and $\tau_2$ are multipath delays of a direct link and a backscattering cascade link, respectively, $\tau_2 > \tau_1$, and a delay $\tau = \max\{\tau_1, \tau_2\}$ of the received signal of the third device can be defined.

Further, in symbol synchronization, after a cascade channel delay is used as a starting point, the received signals y(t)can be deformed as follows:

$$y(t) = h_{sr}(t) * s(t) + h_{tr}(t) * \alpha b(t) \cdot h_{st}(t) * s(t) + w(t)$$

$$= \big(h_{sr}(t) + h_{tr}(t) * \alpha b(t) \cdot h_{st}(t)\big) * s(t) + w(t)$$

Step 62: The third device constructs a third correlation value used when a reference bit carried in the third signal is a first value, constructs a fourth correlation value used when the reference bit carried in the third signal is a second value, and for each of the fourth parts, constructs a fifth correlation value of a difference value between data in adjacent second time units in each of the fourth parts.

In this embodiment, the reference bit corresponds to a first sub-signal included in the second signal, the third correlation value is a value related to a difference value between data in adjacent first time units in the third part, and the fourth correlation value is a value related to a difference value between data in adjacent first time units in the third part; and In some embodiments, according to a predefined or preconfigured modulation and demodulation rule, that is, a modulation rule used for generating the third signal, the third device may construct a third correlation value used when the reference bit carried in the third signal is a first value, construct a fourth correlation value used when the reference bit carried in the third signal is a second value, and for each of the fourth parts, construct a fifth correlation value of a difference value between data in adjacent second time units in each of the fourth parts.

Step 63: The third device performs demodulation based on the third correlation value, the fourth correlation value, and the fifth correlation value to obtain information bits, of Q second sub-signals included in the second signal, carried in the third signal.

Optionally, for each of the fourth parts based on a pre-established relationship between a reference bit and an information bit, the third device may determine an information bit of a corresponding second sub-signal to be a third value when a product of the fifth correlation value and the third correlation value is greater than or equal to a product of the fifth correlation value and the fourth correlation value, or determine the information bit of the corresponding second sub-signal to be a fourth value when the product of the fifth correlation value and the third correlation value is less than the product of the fifth correlation value and the fourth correlation value.

Optionally, the third value is equal to 1 and the fourth value is equal to 0; or, the third value is equal to 0 and the fourth value is equal to 1. In this way, through setting of 0 and 1, a demodulation process of the modulated signals can be simplified.

For example, using an example in which both the first time unit and the second time unit are slots and P is equal to 4, a pre-established relationship between a reference bit and an information bit may be as follows:

(1) If the first value is 1 and the second value is 0, then for an information bit corresponding to a specific fourth part, in this case, the third value is 1 and the fourth value is 0, and any one of the following can be satisfied:

A correlation value of a difference value obtained by subtracting data in slot3 from data in slot4 in the fourth part and a difference value obtained by subtracting data in slot1 from data in slot2 in the fourth part represents an information bit B = 1; or a correlation value of a difference value obtained by subtracting data in slot4 from data in slot3 in the fourth part and a difference value obtained by subtracting data in slot1 from data in slot2 in the fourth part represents an information bit B = 0.

A correlation value of a difference value obtained by subtracting data in slot3 from data in slot4 in the fourth part and a difference value obtained by subtracting data in slot1 from data in slot2 in the fourth part represents an information bit B = 1; or a correlation value of a difference value obtained by subtracting data in slot3 from data in slot4 in the fourth part and a difference value obtained by subtracting data in slot2 from data in slot1 in the fourth part represents an information bit B = 0.

A correlation value of a difference value obtained by subtracting data in slot2 from data in slot1 in the fourth part and a difference value obtained by subtracting data in slot4 from data in slot3 in the fourth part represents an information bit B = 1; or a correlation value of a difference value obtained by subtracting data in slot4 from data in slot3 in the fourth part and a difference value obtained by subtracting data in slot1 from data in slot2 in the fourth part represents an information bit B = 0.

A correlation value of a difference value obtained by subtracting data in slot2 from data in slot1 in the fourth part and a difference value obtained by subtracting data in slot4 from data in slot3 in the fourth part represents an information bit B = 1; or a correlation value of a difference value obtained by subtracting data in slot3 from data in slot4 in the fourth part and a difference value obtained by subtracting data in slot2 from data in slot1 in the fourth part represents an information bit B = 0.

(2) If the first value is 0 and the second value is 1, then for an information bit corresponding to the fourth part, at this time, the third value is 0 and the fourth value is 1, and any one of the following may be satisfied:

A correlation value of a difference value obtained by subtracting data in slot3 from data in slot4 in the fourth part and a difference value obtained by subtracting data in slot1 from data in slot2 in the fourth part represents an information bit B = 0; or a correlation value of a difference value obtained by subtracting data in slot4 from data in slot3 in the fourth part and a difference value obtained by subtracting data in slot1 from data in slot2 in the fourth part represents an information bit B = 1.

A correlation value of a difference value obtained by subtracting data in slot3 from data in slot4 in the fourth part and a difference value obtained by subtracting data in slot1 from data in slot2 in the fourth part represents an information bit B = 0; or a correlation value of a difference value obtained by subtracting data in slot3 from data in slot4 in the fourth part and a difference value obtained by subtracting data in slot2 from data in slot1 in the fourth part represents an information bit B = 1.

A correlation value of a difference value obtained by subtracting data in slot2 from data in slot1 in the fourth part and a difference value obtained by subtracting data in slot4 from data in slot3 in the fourth part represents an information bit B = 0; or a correlation value of a difference value obtained by subtracting data in slot4 from data in slot3 in the fourth part and a difference value obtained by subtracting data in slot1 from data in slot2 in the fourth part represents an information bit B = 1.

A correlation value of a difference value obtained by subtracting data in slot2 from data in slot1 in the fourth part and a difference value obtained by subtracting data in slot4 from data in slot3 in the fourth part represents an information bit B = 0; or a correlation value of a difference value obtained by subtracting data in slot3 from data in slot4 in the fourth part and a difference value obtained by subtracting data in slot2 from data in slot1 in the fourth part represents an information bit B = 1.

It should be noted that the third device performs demodulation for each fourth part separately, to obtain Q information bits of corresponding Q second sub-signals. For correlation values of different difference values, the different difference values may be obtained through correlation calculation. The correlation calculation may include, but is not limited to, multiplication, summation, or the like.

In this way, when receiving the third signal sent by the second device, the third device may also receive the first signal sent by the first device. In this case, the first signal is a direct link interference signal, data in adjacent time units in a first part of the first signal are completely the same, and data in adjacent time units in a second part of the first signal are completely the same, and a signal with repetitive structure still maintains its repetitive structure after passing through a channel. Through constructing of a correlation value of a difference value between data in adjacent first/second time units, the data in the adjacent first/second time units may be subtracted, so as to eliminate the direct link interference signal. For the modulated third signal (that is, a backscatter signal), demodulation may be performed based on the constructed correlation value in combination with the modulation rule, that is, a pre-established relationship between reference bits and information bits. Therefore, there is no need to construct a specific decision-making threshold during demodulation, and it is not limited by an effective repetition structure length and influence of channel environment such as a received signal to noise ratio (Signal to Noise Ratio, SNR). In this way, demodulation complexity of the third device can be greatly reduced, demodulation performance can be improved, and system performance of bistatic backscatter communication can be improved. In addition, one reference signal may correspond to multiple information signals, thus effectively improving frequency band efficiency.

In this embodiment of this application, based on the predefined or preconfigured modulation rule, when M is equal to 2, the correlation value of the reference bit needs to be determined in combination with a target part of the third signal. The third correlation value is a correlation value of a first difference value and a second difference value, and the fourth correlation value is a correlation value of a third difference value and a fourth difference value; where the first difference value is a difference value obtained by subtracting data in a 1st first time unit from data in a 2nd first time unit in the third part of the third signal, and the second difference value is a difference value obtained by subtracting data in a target second time unit from the data in the 2nd first time unit in the third part of the third signal; or, the first difference value is a difference value obtained by subtracting the data in the 2nd first time unit from the data in the 1st first time unit in the third part of the third signal, and the second difference value is a difference value obtained by subtracting the data in the 2nd first time unit in the third part of the third signal from the data in the target second time unit; and the third difference value is a difference value obtained by subtracting the data in the 2nd first time unit from the data in the 1st first time unit in the third part of the third signal, and the fourth difference value is a difference value obtained by subtracting the data in the target second time unit from the data in the 2nd first time unit in the third part of the third signal; or, the third difference value is a difference value obtained by subtracting the data in the 1st first time unit from the data in the 2nd first time unit in the third part of the third signal, and the fourth difference value is a difference value obtained by subtracting the data in the 2nd first time unit in the third part of the third signal from the data in the target second time unit.

Optionally, when M is equal to 3, the third part of the third signal may be used alone to determine a correlation value of the reference bit. The third correlation value is a correlation value of a fifth difference value and a sixth difference value, and the fourth correlation value is a correlation value of a seventh difference value and an eighth difference value; where the fifth difference value is a difference value obtained by subtracting the data in the 1st first time unit from the data in the 2nd first time unit in the third part of the third signal, and the sixth difference value is a difference value obtained by subtracting the data in a 3rd first time unit from the data in the 2nd first time unit in the third part of the third signal; or, the fifth difference value is a difference value obtained by subtracting the data in the 2nd first time unit from the data in the 1st first time unit in the third part of the third signal, and the sixth difference value is a difference value obtained by subtracting the data in the 2nd first time unit from the data in the 3rd first time unit in the third part of the third signal; and the seventh difference value is a difference value obtained by subtracting the data in the 2nd first time unit from the data in the 1st first time unit in the third part of the third signal, and the eighth difference value is a difference value obtained by subtracting the data in the 3rd first time unit from the data in the 2nd first time unit in the third part of the third signal; or, the seventh difference value is a difference value obtained by subtracting the data in the 1st first time unit from the data in the 2nd first time unit in the third part of the third signal, and the eighth difference value is a difference value obtained by subtracting the data in the 2nd first time unit from the data in the 3rd first time unit in the third part of the third signal.

Optionally, when M is equal to 3, the correlation value of the reference bit may be determined in combination with the target part of the third signal. The third correlation value is a correlation value of a ninth difference value and a tenth difference value, and the fourth correlation value is a correlation value of an eleventh difference value and a twelfth difference value; where the ninth difference value is a difference value obtained by subtracting the data in the 1st first time unit from the data in the 2nd first time unit in the third part of the third signal, and the tenth difference value is a difference value obtained by subtracting the data in the target second time unit from the data in the 3rd first time unit in the third part of the third signal; or, the ninth difference value is a difference value obtained by subtracting the data in the 2nd first time unit from the data in the 1st first time unit in the third part of the third signal, and the tenth difference value is a difference value obtained by subtracting the data in the 3rd first time unit in the third part from the data in the target second time unit of the third signal; and the eleventh difference value is a difference value obtained by subtracting the data in the 2nd first time unit from the data in the 1st first time unit in the third part of the third signal, and the twelfth difference value is a difference value obtained by subtracting the data in the target second time unit from the data in the 3rd first time unit in the third part of the third signal; or, the eleventh difference value is a difference value obtained by subtracting the data in the 1st first time unit from the data in the 2nd first time unit in the third part of the third signal, and the twelfth difference value is a difference value obtained by subtracting the data in the 3rd first time unit in the third part from the data in the target second time unit of the third signal.

Optionally, when M is equal to 4, the third part of the third signal may be used alone to determine a correlation value of the reference bit. The third correlation value is a correlation value of a thirteenth difference value and a fourteenth difference value, and the fourth correlation value is a correlation value of a fifteenth difference value and a sixteenth difference value; where the thirteenth difference value is a difference value obtained by subtracting the data in the 1st first time unit from the data in the 2nd first time unit in the third part of the third signal, and the fourteenth difference value is a difference value obtained by subtracting the data in a 4th first time unit from the data in the 3rd first time unit in the third part of the third signal; or, the thirteenth difference value is a difference value obtained by subtracting the data in the 2nd first time unit from the data in the 1st first time unit in the third part of the third signal, and the fourteenth difference value is a difference value obtained by subtracting the data in the 3rd first time unit from the data in the 4th first time unit in the third part of the third signal; and the fifteenth difference value is a difference value obtained by subtracting the data in the 2nd first time unit from the data in the 1st first time unit in the third part of the third signal, and the sixteenth difference value is a difference value obtained by subtracting the data in the 4th first time unit from the data in the 3rd first time unit in the third part of the third signal; or, the fifteenth difference value is a difference value obtained by subtracting the data in the 1st first time unit from the data in the 2nd first time unit in the third part of the third signal, and the sixteenth difference value is a difference value obtained by subtracting the data in the 3rd first time unit from the data in the 4th first time unit in the third part of the third signal.

Optionally, the first value is equal to 1 and the second value is equal to 0; or, the first value is equal to 0 and the second value is equal to 1. In this way, through setting of 0 and 1, a demodulation process of the modulated signals can be simplified.

It should be noted that for correlation values of different difference values, the different difference values may be obtained through correlation calculation. The correlation calculation may include, but is not limited to, multiplication, summation, or the like. For example, the correlation value of the first difference value and the second difference value may be equal to a product of the first difference value and the second difference value; the correlation value of the fifth difference value and the sixth difference value may be equal to a product of the fifth difference value and the sixth difference value; the correlation value of the ninth difference value and the tenth difference value may be equal to a product of the ninth difference value and the tenth difference value; and so on.

In this embodiment of this application, based on the predefined or preconfigured modulation rule, when P is equal to 4, the fifth correlation value is a correlation value of a seventeenth difference value and an eighteenth difference value, or the fifth correlation value is a correlation value of a nineteenth difference value and a twentieth difference value; where the seventeenth difference value is a difference value obtained by subtracting data in a 3rd second time unit from data in a 4th second time unit in a fourth part corresponding to the information bit, and the eighteenth difference value is a difference value obtained by subtracting data in a 1st second time unit from data in a 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

In this embodiment of this application, for noise smoothing, the second device may send K third signals, where K is an integer greater than or equal to 2. In this case, the third correlation value is a correlation value determined based on a first average difference value group, and the first average difference value is obtained by performing bit average on difference values included in a first difference value group in the K third signals; where the first difference value group includes a twenty-first difference value or the first difference value group includes a twenty-first difference value and a twenty-second difference value, the twenty-first difference value includes a difference value between data in adjacent first time units in the third part when the reference bit is a first value, and the twenty-second difference value includes a difference value between data in an M-th first time unit in the third part and data in a target second time unit, and the target second time unit is one second time unit in any one of the Q fourth parts; the fourth correlation value is a correlation value determined based on a second average difference value group, and the second average difference value is obtained by performing bit average on difference values included in a second difference value group in the K third signals; where the second difference value group includes a twenty-third difference value or the second difference value group includes a twenty-third difference value and a twenty-fourth difference value, the twenty-third difference value includes a difference value between data in adjacent first time units in the third part when the reference bit is a second value, and the twenty-fourth difference value includes a difference value between data in the M-th first time unit in the third part and the data in the target second time unit, and the target second time unit is one second time unit in any one of the Q fourth parts; and the fifth correlation value is a correlation value determined based on a third average difference value group, the third average difference value group is obtained by performing bit average on difference values included in a third difference value group in the K third signals, and the third difference value group includes a difference value between data in adjacent second time units in each of the fourth parts. It should be noted that the bit averaging can be understood as averaging corresponding difference values in the K third signals.

Using both the first time unit and the second time unit being slots (slot) as an example, the following describes the modulation and demodulation process in the embodiments of this application. The modulation and demodulation process is described by using a single basic signal (that is, the first signal) as an example. If there are multiple repeated first signals, the corresponding modulation and demodulation process is repeated for each first signal. In the accompany drawings corresponding to the following examples, a single first signal merely schematically includes one second part. However, it can be understood that in essence, a single first signal includes Q second parts, and modulation and demodulation may be performed separately for each second part. The modulation manner of each second part may be the same or different.

Example 1

In Example 1, using M = 2, P = 4 as an example, the first signal includes a first part and Q second parts. Supposing that the second signal b(t) includes the first sub-signal $b^R(mN + n)$ and Q second sub-signals $b^D(mN + n)$, and the Q second sub-signals $b^D(mN + n)$ may be partially or completely different signal waveforms, if mod is a remainder symbol, the first sub-signal corresponds to a first part of the first signal and is used to modulate the first part to obtain a third part of the third signal; the Q second sub-signals correspond to the Q second parts of the first signal one by one, and are used to modulate the Q second parts respectively to obtain Q fourth parts of the third signal; and the second signal b(t) can satisfy any one of the following conditions:

Case 1: The first sub-signal $b^R(mN + n)$ used to modulate the first part is:

$$b^R(mN + n) = \begin{cases} -1, \mathrm{mod}(m, 2) = 0, 0 \leq m < M \\ 1, \mathrm{mod}(m, 2) = 0, 0 \leq m < M \end{cases}$$

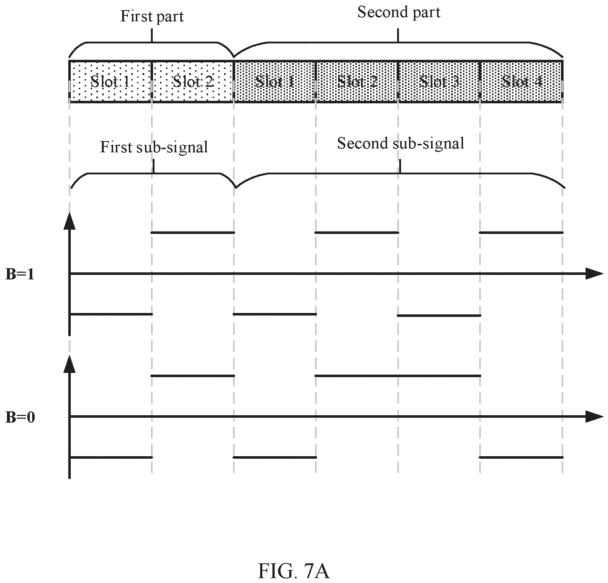

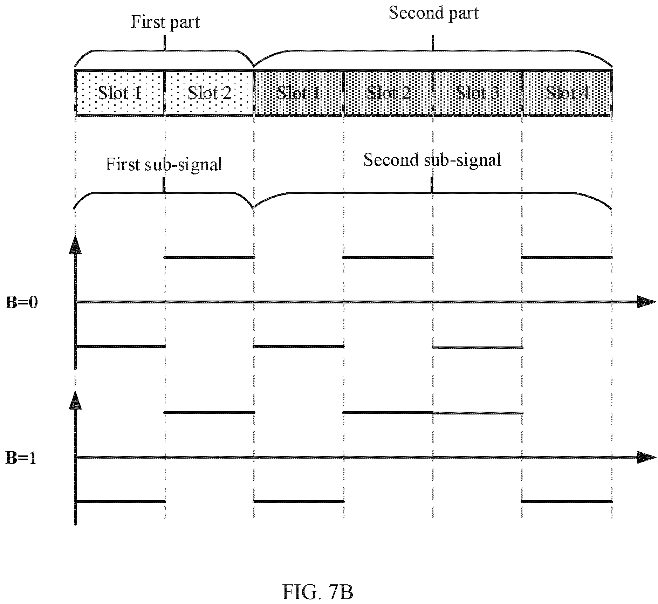

In this case, as shown in FIG. 7A and FIG. 7B, after modulation, the reference bit B = 1 is represented by a product of a difference value obtained by subtracting data in slot1 from data in slot2 in the third part (that is, the polarity changes from the 2nd slot in the third part to the 1st slot in the fourth part) and a difference value obtained by subtracting data in slot1 in the fourth part from the data in slot2 in the third part (that is, the polarity changes from the 2nd slot in the third part to the 1st slot in the fourth part); and the reference bit B = 0 is represented by a product of a difference value obtained by subtracting data in slot2 in the third part from data in slot1 in the fourth part (that is, the polarity changes from the 1st slot in the fourth part to the 2nd slot in the third part) and a difference value obtained by subtracting data in slot1 from the data in slot2 in the third part (that is, the polarity changes from the 2nd slot in the third part to the 1st slot).

In case 1, the second signal b(t) satisfies the following waveform properties: a level of the last slot (that is, slot 2) in the third part is opposite to a level of the 1st slot (that is, slot1) in the fourth part.

(I) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part (that is, the polarity changes from the 4th slot to the 3rd slot), and a difference value obtained by subtracting data in slot1 from data in slot2 of the fourth part (that is, the polarity changes from the 2nd slot to the 1st slot), then:

if the second device sends an information bit B = 1, that is, the information bit corresponding to the fourth part is 1, then as shown in FIG. 7A, a waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

However, if the second device sends an information bit B = 0, that is, the information bit corresponding to the fourth part is 0, then as shown in FIG. 7A, the waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

(II) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part (that is, the polarity changes from the 3rd slot to the 4th slot), and a difference value obtained by subtracting data in slot1 from data in slot2 of the fourth part (that is, the polarity changes from the 2nd slot to the 1st slot), then:

if the second device sends an information bit B = 0, that is, the information bit corresponding to the fourth part is 0, then as shown in FIG. 7B, the waveform of the second sub-signal corresponding to the fourth part is.

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

and if the second device sends an information bit B = 1, that is, the information bit corresponding to the fourth part is 1, then as shown in FIG. 7B, the waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

Case 2: The first sub-signal $b^R(mN + n)$ used to modulate the first part is:

$$b^R(mN + n) = \begin{cases} 1, \mathrm{mod}(m, 2) = 0, 0 \leq m < M \\ -1, \mathrm{mod}(m, 2) = 0, 0 \leq m < M \end{cases}$$

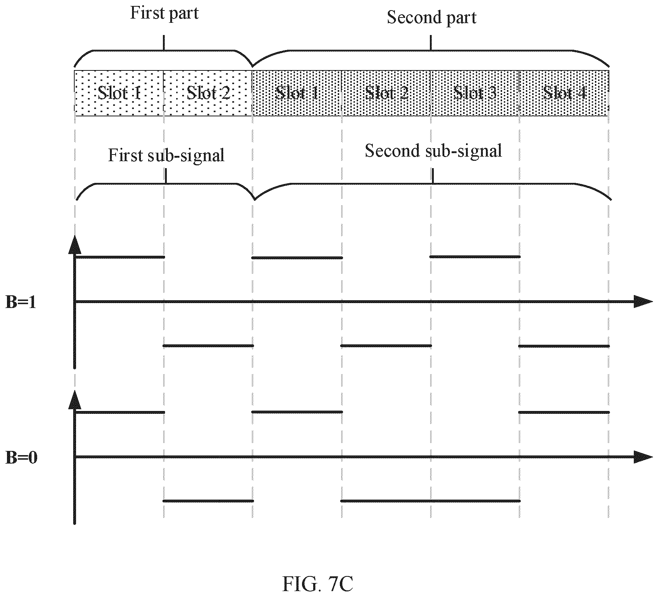

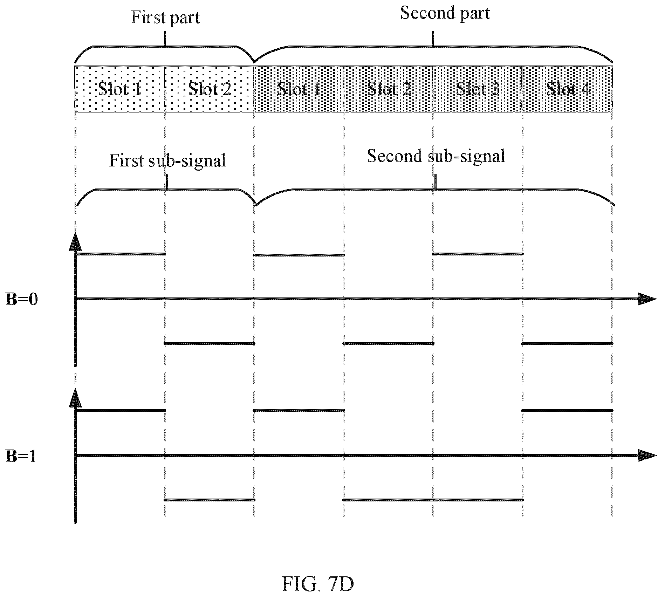

In this case, as shown in FIG. 7C and FIG. 7D, after modulation, the reference bit B = 1 is represented by a product of a difference value obtained by subtracting data in slot1 from data in slot2 in the third part (that is, the polarity changes from the 2nd slot in the third part to the 1st slot in the fourth part) and a difference value obtained by subtracting data in slot1 in the fourth part from the data in slot2 in the third part (that is, the polarity changes from the 2nd slot in the third part to the 1st slot in the fourth part); and the reference bit B = 0 is represented by a product of a difference value obtained by subtracting data in slot2 in the third part from data in slot1 in the fourth part (that is, the polarity changes from the 1st slot in the fourth part to the 2nd slot in the third part) and a difference value obtained by subtracting data in slot1 from the data in slot2 in the third part.

In case 2, the second signal b(t) satisfies the following waveform properties: a level of the last slot (that is, slot 2) in the third part is opposite to a level of the 1st slot (that is, slot1) in the fourth part.

(I) For a fourth part, if a slot range of the fourth part is M + fP $\leq$ m < M + (f + 1)P, f $\in$ (0, Q - 1), and an information bit corresponding to the fourth part is represented by a product of a difference value obtained by subtracting data in slot3 from data in slot4 in the fourth part (that is, the polarity changes from the 4th slot to the 3rd slot), and a difference value obtained by subtracting data in slot1 from data in slot2 of the fourth part (that is, the polarity changes from the 2nd slot to the 1st slot), then:

If the second device sends an information bit B = 1, that is, the information bit corresponding to the fourth part is 1, then as shown in FIG. 7C, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

If the second device sends an information bit B = 0, that is, the information bit corresponding to the fourth part is 0, as shown in FIG. 7C, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

(II) For a fourth part, if a slot range of the fourth part is M + fP $\leq$ m < M + (f + 1)P, f $\in$ (0, Q - 1), and the information bit of the fourth part is represented by a product of a difference value obtained by subtracting data in slot4 from data in slot3 of the fourth part (that is, the polarity changes from the 3rd slot to the 4th slot) and a difference value obtained by subtracting data in slot1 from data in slot2 of the fourth part (that is, the polarity changes from the 2nd slot to the 1st slot), then:

if the second device sends an information bit B = 0, that is, the information bit corresponding to the fourth part is 0, then as shown in FIG. 7D, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ 1, \mod(m - M, 4) = 2, M + fP \leq m < M + (f + 1)P \\ -1, \mod(m - M, 4) = 3, M + fP \leq m < M + (f + 1)P \end{cases}$$

If the second device sends an information bit B = 1, that is, the information bit corresponding to the fourth part is 1, then as shown in FIG. 7D, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

For the demodulation process:

First, based on third parts of M = 2 slots and according to the signal modulation rule of M = 2, P = 4, correlation values of difference values of data in adjacent slots for representing reference bits B = 1 and B = 0 are constructed, which are recorded as $C_1^{ref}, C_0^{ref}$, respectively.

(I) In signal modulation, the reference bit B = 1 is represented by a product of a difference value obtained by subtracting data in slot1 from data in slot2 in the third part and a difference value obtained by subtracting data in slot1 in the fourth part from the data in slot2 in the third part. Therefore, for one basic signal (that is, the first signal), the first two slots and the 1st slot in the fourth part are used as the generalized third part. Subtracting the data in the 1st slot from the data in the 2nd slot in the third part and subtracting the data in the 1st slot in the fourth part from the data in the 2nd slot in the third part obtain difference values respectively:

$$z_{11}(mN + n) = y\big((m + 1)N + n\big) - y(mN + n)$$

$$= \alpha s(mN + n) \left( b\big((m + 1)N + n\big) - b(mN + n) \right) h_{st} h_{tr} \quad + w\big((m + 1)N + n\big)$$

$$- w(mN + n)$$

$$z_{12}(mN + n) = y\big((m + 1)N + n\big) - y((m + 2)N + n)$$

$$= \alpha s(mN + n) \left( b\big((m + 1)N + n\big) - b\big((m + 2)N + n\big) \right) h_{st} h_{tr}$$

$$+ w\big((m + 1)N + n\big) - w\big((m + 2)N + n\big)$$

where $\tau_2 \leq n \leq N + \tau_1 - 1$, and $\mod(m, 2) = 0, 0 \leq m < M$. $z(mN + n)$ indicates a difference value of data at positions n in the corresponding two slots. It can be obtained from the above expressions that the direct link interference is eliminated because the data s(t) of two adjacent slots are completely the same; however, it also makes a noise power of the received signal rise, and the noise power becomes twice as high as before.

(II) A correlation value of a difference value representing the reference bit B = 1 is constructed, including:

$$C_1^{ref} = z_{11}(mN + n) \cdot z_{12}(mN + n)$$

(III) In signal modulation, the reference bit B = 0 is represented by a product of a difference value obtained by subtracting data in slot2 in the third part from data in slot1 in the fourth part and a difference value obtained by subtracting the data in slot1 from the data in slot2 in the third part. Therefore, for one basic signal (that is, the first signal), the first two slots and the 1st slot in the fourth part are used as the generalized third part. Subtracting the 1st slot from the 2nd slot in the third part and subtracting the 2nd slot in the third part from the 1st slot in the fourth part obtain difference values respectively:

$$z_{01}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

$$z_{02}(mN + n) = y\big((m + 2)N + n\big) - y\big((m + 1)N + n\big)$$

$$= \alpha s(mN + n)\Big(b\big((m + 2)N + n\big) - b\big((m + 1)N + n\big)\Big)h_{st}h_{tr}$$

$$+ w\big((m + 2)N + n\big) - w\big((m + 1)N + n\big)$$

where $\tau_2 \le n \le N + \tau_1 - 1$, and $\mathrm{mod}(m,2) = 0, 0 \le m < M$. $z(mN + n)$ indicates a difference value of data at positions n in the corresponding two slots. It can be obtained from the above expressions that the direct link interference is eliminated because the data s(t) of two adjacent slots are completely the same; however, it also makes a noise power of the received signal rise, and the noise power becomes twice as high as before.

(IV) A correlation value of a difference value representing the reference bit B = 0 is constructed, including:

$$C_0^{ref} = z_{01}(mN + n) \cdot z_{02}(mN + n)$$

Then, Q information bits corresponding to Q fourth parts are demodulated sequentially. For each fourth part, P slots are used as one basic unit to demodulate the corresponding information bit:

(I) According to a preset coding rule, correlation values of difference values of data in adjacent slots for representing reference bits are constructed, which are respectively recorded as $C^{inf}$.

(a1) In the signal modulation, if the reference bit is represented by a product of a difference value from the data in the 4th slot to the data in the 3rd slot in the fourth part and a difference value from the data in the 2nd slot to the data in the 1st slot, for a fourth part of one slot P = 4, data in the 1st slot is subtracted from data in the 2nd slot to obtain a difference value, and data in the 3rd slot is subtracted from data in the 4th slot to obtain a difference value:

$$z(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

where $\tau_2 \le n \le N + \tau_1 - 1$, and $\mathrm{mod}(m, 4) = \mathrm{even}, M \le m < M + P$.
(b1) Optionally, if the radio frequency source (that is, the first device) sends repeated K (K is a positive integer) basic slot blocks (that is, the first signal), then noise may be smoothed by using the K repeated basic slot blocks to obtain:

$$\text{Centralized: } \bar{z}(n) = \frac{1}{K} \sum_{k=0}^{K-1} z(k(M + PQ)N + n)$$

$$\text{Distributed: } \bar{z}(n) = \frac{1}{K} \sum_{k=0}^{K-1} z(k(M + PQ + L)N + n)$$

where L is a length of one data part (such as a data slot block (Data slots)) in the distributed structure, and the data slots are a slot block used for other functions in the radio frequency source.

(c1) A correlation value of a difference value $z(mN + n)$ or an average value $\bar{z}(n)$ of the difference values obtained for two slots in the same fourth part is solved to obtain:

$$C^{ref} = \sum_{n=\tau_2}^{N+\tau_1-1} \bar{z}(n)\bar{z}(2N + n)$$

(a2) In the signal modulation, if the reference bit is represented by a product of a difference value from the data in the 3rd slot to the data in the 4th slot in the fourth part and a difference value from the data in the 2nd slot to the data in the 1st slot, for a fourth part of one slot P = 4, data in the 1st slot is subtracted from data in the 2nd slot to obtain a difference value, and data in the 4th slot is subtracted from data in the 3rd slot to obtain a difference value:

$$z_1(mN + n) = y\big((m + 1)N + n\big) - y(mN + n)$$

$$= \alpha s(mN + n)\left(b\big((m + 1)N + n\big) - b(mN + n)\right)h_{st}h_{tr} + w\big((m + 1)N + n\big)$$

$$- w(mN + n)$$

where $\tau_2 \leq n \leq N + \tau_1 - 1$, and modem, 4) = 0, $M \leq m < M + P$.

$$z_2(mN + n) = y(mN + n) - y\big((m + 1)N + n\big)$$

$$= \alpha s(mN + n)\left(b(mN + n) - b\big((m + 1)N + n\big)\right)h_{st}h_{tr} + w(mN + n)$$

$$- w\big((m + 1)N + n\big)$$

where $\tau_2 \leq n \leq N + \tau_1 - 1$, and mod(m, 4) = 2, $M \leq m < M + P$.

(b2) Optionally, if the radio frequency source (that is, the first device) sends repeated K (K is a positive integer) basic slot blocks (that is, the first signal), then noise may be smoothed by using the K repeated basic slot blocks to obtain:

$$\text{Centralized: } \bar{z}_1(n) = \frac{1}{K} \sum_{k=0}^{K-1} z_1(k(M + PQ)N + n)$$

$$\bar{z}_2(n) = \frac{1}{K} \sum_{k=0}^{K-1} z_2(k(M + PQ)N + n)$$

Distributed:

$$\bar{z}_1(n) = \frac{1}{K}\sum_{k=0}^{K-1} z_1\big(k(M + PQ + L)N + n\big)$$

$$\bar{z}_2(n) = \frac{1}{K}\sum_{k=0}^{K-1} z_2\big(k(M + PQ + L)N + n\big)$$

where L is a length of data slots in the distributed structure, and the data slots are a slot block used for other functions in the radio frequency source.

(c2) A correlation value of a difference value $z(mN + n)$ or an average value $\bar{z}(n)$ of the difference values obtained for two slots in the same fourth part is solved to obtain:

$$C^{ref} = \sum_{n=\tau_2}^{N+\tau_1-1} \bar{z}_1(n)\,\bar{z}_2(n)$$

(II) The constructed correlation value $C^{inf}$ of the difference value in the fourth part and the constructed correlation values $C_1^{inf}, C_2^{inf}$ of the two difference values representing the reference bits B = 1 and B = 0 in the third part are used for related processing.

(III) Judgment is performed on the information bit B according to the following rule:

$$B = \begin{cases} 1, \text{if } C^{inf} \cdot C_1^{ref} \geq C^{inf} \cdot C_0^{ref} \\ 0, \text{if } C^{inf} \cdot C_1^{ref} < C^{inf} \cdot C_0^{ref} \end{cases}$$

where, Q information bits in a same basic slot block can be demodulated in sequence according to the above steps (I) to (III).

Example 2

In Example 2, using M = 3, P = 4 as an example, the first signal includes a first part and Q second parts. Supposing that the second signal b(t) includes the first sub-signal $b^R(mN + n)$ and Q second sub-signals $b^D(mN + n)$, and the Q second sub-signals $b^D(mN + n)$ may be partially or completely different signal waveforms, if mod is a remainder symbol, the first sub-signal corresponds to a first part of the first signal and is used to modulate the first part to obtain a third part of the third signal; the Q second sub-signals correspond to the Q second parts of the first signal one by one, and are used to modulate the Q second parts respectively to obtain Q fourth parts of the third signal; and the second signal b(t) can satisfy any one of the following conditions:

Case 1: The first sub-signal $b^R(mN + n)$ used to modulate the first part is:

$$b^R(mN + n) = \begin{cases} -1, \text{mod}(m, 3) = 0, 0 \leq m < M \\ 1, \text{mod}(m, 3) = 1, 0 \leq m < M \\ -1, \text{mod}(m, 3) = 2, 0 \leq m < M \end{cases}$$

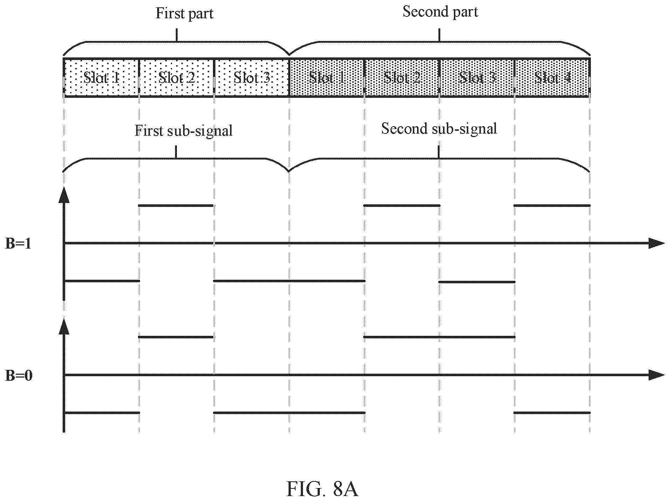

In this case, as shown in FIG. 8A to FIG. 8H, after modulation, the reference bit B = 1 is represented a product of a difference value obtained by subtracting data in slot1 from data in slot2 in the third part (that is, the polarity changes from the 2nd slot in the third part to the 1st slot in the fourth part) and a difference value obtained by subtracting data in slot3 from the data in slot2 in the third part (that is, the polarity changes from the 2nd slot in the third part to the 3rd slot); and the reference bit B = 0 is represented a product of a difference value obtained by subtracting data in slot2 from data in slot3 in the third part (that is, the polarity changes from the 3rd slot in the third part to the 2nd slot) and a difference value obtained by subtracting data in slot1 from the data in slot2 in the third part (that is, the polarity changes from the 2nd slot in the third part to the 1st slot).

(I) For a specific fourth part, if a slot range of the fourth part is $M + fP \leq m < M + (f + 1)P, f \in (0, Q - 1)$, and the information bit of the fourth part is represented by a product of a difference value obtained by subtracting data in slot3 from data in slot4 of the fourth part, and a difference value obtained by subtracting data in slot1 from data in slot2 of the fourth part, then:

(11) If the second device sends an information bit B = 1, that is, the information bit corresponding to the fourth part is 1, then as shown in FIG. 8A, a waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

However, if the second device sends an information bit B = 0, that is, the information bit corresponding to the fourth part is 0, then as shown in FIG. 8A, the waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

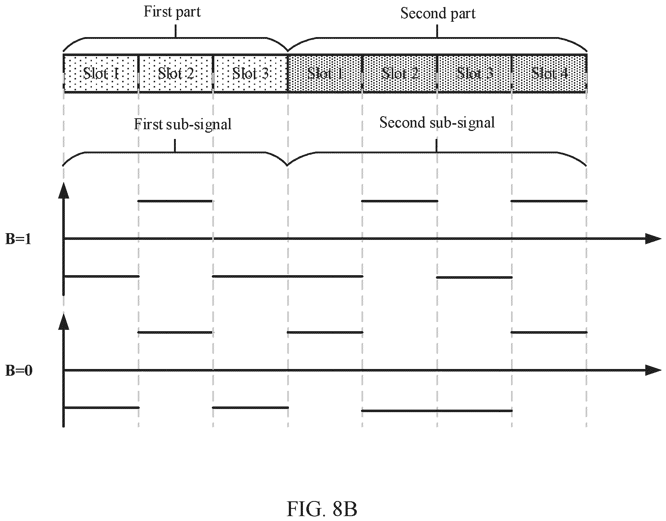

(12) If the second device sends an information bit B = 1, that is, the information bit corresponding to the fourth part is 1, then as shown in FIG. 8B, a waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

However, if the second device sends an information bit B = 0, that is, the information bit corresponding to the fourth part is 0, then as shown in FIG. 8B, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

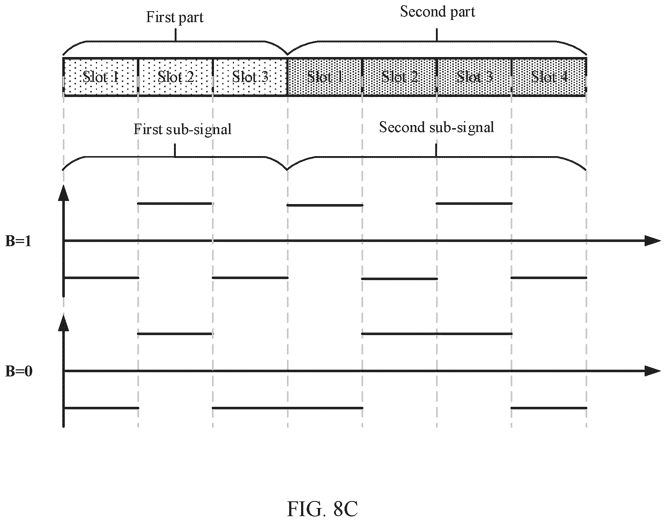

(13) If the second device sends an information bit B = 1, that is, the information bit corresponding to the fourth part is 1, then as shown in FIG. 8C, the waveform of the second sub-signal corresponding to this fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

However, if the second device sends an information bit B = 0, that is, the information bit corresponding to the fourth part is 0, as shown in FIG. 8C, the waveform of the second sub-signal corresponding to the fourth part is:

$$b^D(mN+n) = \begin{cases} -1, \mod(m-M,4) = 0, M+fP \leq m < M+(f+1)P \\ 1, \mod(m-M,4) = 1, M+fP \leq m < M+(f+1)P \\ 1, \mod(m-M,4) = 2, M+fP \leq m < M+(f+1)P \\ -1, \mod(m-M,4) = 3, M+fP \leq m < M+(f+1)P \end{cases}$$

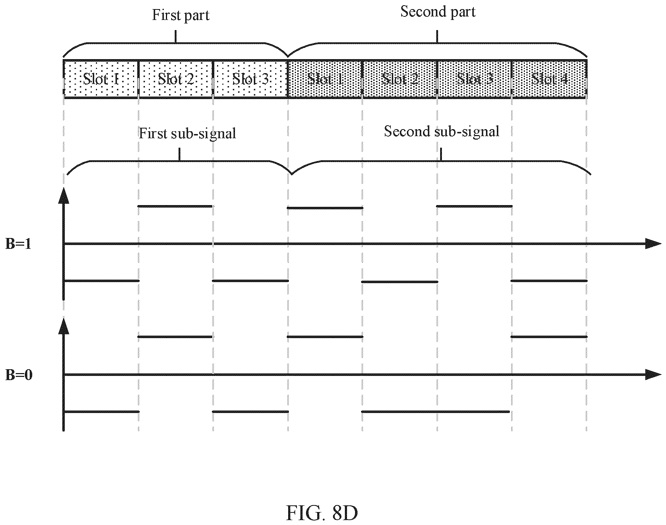

(14) If the second device sends an information bit B = 1, that is, the information bit corresponding to the fourth part is 1, then as shown in FIG. 8D, the waveform of the second sub-signal corresponding to this fourth part is:

$$b^D(mN+n) = \begin{cases} 1, \mod(m-M,4) = 0, M+fP \leq m < M+(f+1)P \\ -1, \mod(m-M,4) = 1, M+fP \leq m < M+(f+1)P \\ 1, \mod(m-M,4) = 2, M+fP \leq m < M+(f+1)P \\ -1, \mod(m-M,4) = 3, M+fP \leq m < M+(f+1)P \end{cases}$$

However, if the second device sends an information bit B = 0, that is, the information bit corresponding to the fourth part is 0, then as shown in FIG. 8D, the waveform of the second sub-signal corresponding to the fourth part is:

$$b^D(mN+n) = \begin{cases} 1, \mod(m-M,4) = 0, M+fP \leq m < M+(f+1)P \\ -1, \mod(m-M,4) = 1, M+fP \leq m < M+(f+1)P \\ -1, \mod(m-M,4) = 2, M+fP \leq m < M+(f+1)P \\ 1, \mod(m-M,4) = 3, M+fP \leq m < M+(f+1)P \end{cases}$$

(II) For a specific fourth part, if a slot range of the fourth part is $M + fP \leq m < M + (f + 1)P$, $f \in (0, Q - 1)$, and the information bit of the fourth part is represented by a product of a difference value obtained by subtracting data in slot4 from data in slot3 of the fourth part, and a difference value obtained by subtracting data in slot1 from data in slot2 of the fourth part, in this case, baseband waveforms of transmission bits B = 1 and B = 0 are just opposite to the above (11) to (14), then:

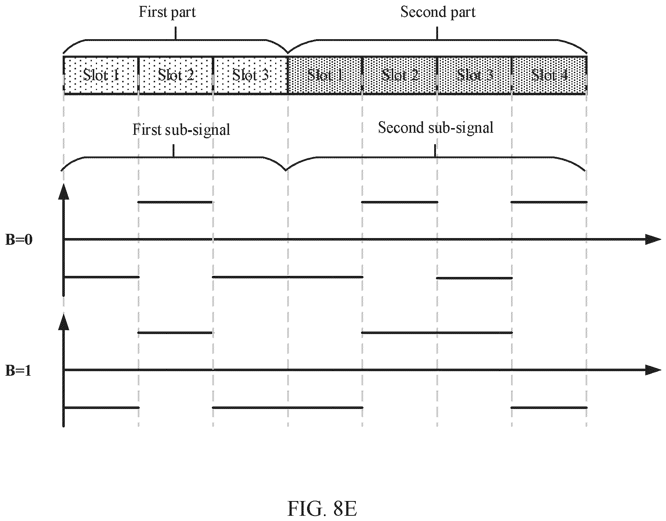

(15) If the second device sends an information bit B = 0, that is, the information bit corresponding to the fourth part is 0, then as shown in FIG. 8E, the waveform of the second sub-signal corresponding to this fourth part is:

$$b^D(mN+n) = \begin{cases} -1, \mod(m-M,4) = 0, M+fP \leq m < M+(f+1)P \\ 1, \mod(m-M,4) = 1, M+fP \leq m < M+(f+1)P \\ -1, \mod(m-M,4) = 2, M+fP \leq m < M+(f+1)P \\ 1, \mod(m-M,4) = 3, M+fP \leq m < M+(f+1)P \end{cases}$$

However, if the second device sends an information bit B = 1, that is, the information bit corresponding to the fourth part is 1, as shown in FIG. 8E, the waveform of the second sub-signal corresponding to the fourth part is:

$$b^D(mN+n) = \begin{cases} -1, \mod(m-M,4) = 0, M+fP \leq m < M+(f+1)P \\ 1, \mod(m-M,4) = 1, M+fP \leq m < M+(f+1)P \\ 1, \mod(m-M,4) = 2, M+fP \leq m < M+(f+1)P \\ -1, \mod(m-M,4) = 3, M+fP \leq m < M+(f+1)P \end{cases}$$

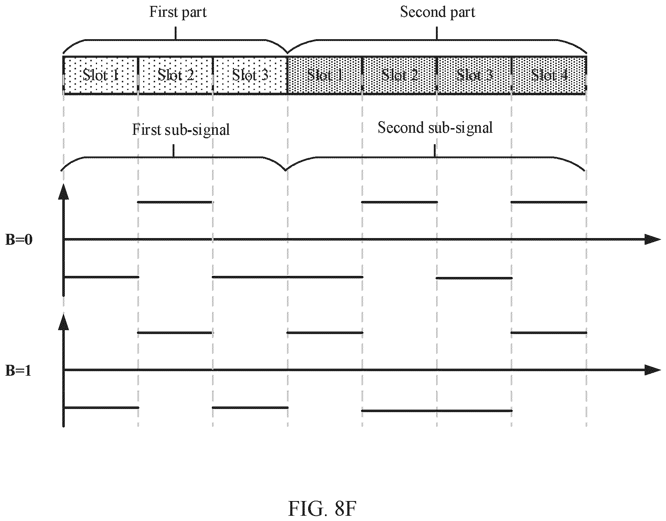

(16) If the second device sends an information bit B = 0, that is, the information bit corresponding to the fourth part is 0, then as shown in FIG. 8F, the waveform of the second sub-signal corresponding to the fourth part is:

$$b^D(mN+n) = \begin{cases} -1, \mod(m-M,4) = 0, M+fP \leq m < M+(f+1)P \\ 1, \mod(m-M,4) = 1, M+fP \leq m < M+(f+1)P \\ -1, \mod(m-M,4) = 2, M+fP \leq m < M+(f+1)P \\ 1, \mod(m-M,4) = 3, M+fP \leq m < M+(f+1)P \end{cases}$$

However, if the second device sends an information bit B = 1, that is, the information bit corresponding to the fourth part is 1, as shown in FIG. 8F, the waveform of the second sub-signal corresponding to the fourth part is:

$$b^D(mN + n) = \begin{cases} 1, & \mathrm{mod}(m - M, 4) = 0, M + fP \leq m < M + (f + 1)P \\ -1, & \mathrm{mod}(m - M, 4) = 1, M + fP \leq m < M + (f + 1)P \\ -1, & \mathrm{mod}(m - M, 4) = 2, M + fP \leq m < M + (f + 1)P \\ 1, & \mathrm{mod}(m - M, 4) = 3, M + fP \leq m < M + (f + 1)P \end{cases}$$

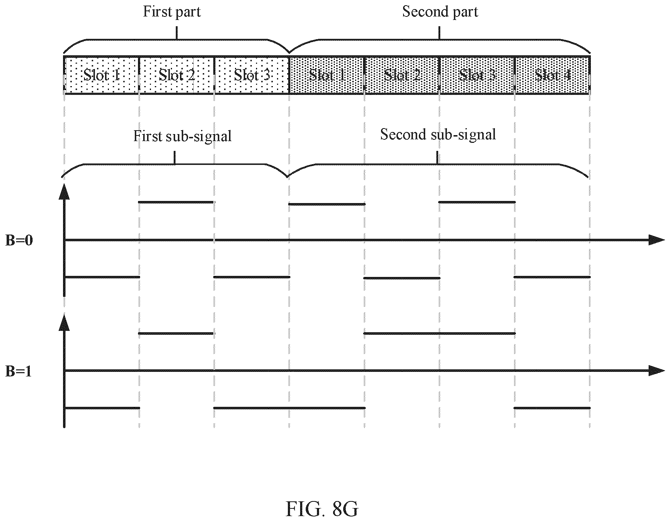

(17) If the second device sends an information bit B = 0, that is, the information bit corresponding to the fourth part is 0, then as shown in FIG. 8G, the waveform of the second sub-signal corresponding to the fourth part is:

$$b^D(mN + n) = \begin{cases} 1, & \mathrm{mod}(m - M, 4) = 0, M + fP \leq m < M + (f + 1)P \\ -1, & \mathrm{mod}(m - M, 4) = 1, M + fP \leq m < M + (f + 1)P \\ 1, & \mathrm{mod}(m - M, 4) = 2, M + fP \leq m < M + (f + 1)P \\ -1, & \mathrm{mod}(m - M, 4) = 3, M + fP \leq m < M + (f + 1)P \end{cases}$$

However, if the second device sends an information bit B = 1, that is, the information bit corresponding to the fourth part is 1, then as shown in FIG. 8G, the waveform of the second sub-signal corresponding to the fourth part is:

$$b^D(mN + n) = \begin{cases} -1, & \mathrm{mod}(m - M, 4) = 0, M + fP \leq m < M + (f + 1)P \\ 1, & \mathrm{mod}(m - M, 4) = 1, M + fP \leq m < M + (f + 1)P \\ 1, & \mathrm{mod}(m - M, 4) = 2, M + fP \leq m < M + (f + 1)P \\ -1, & \mathrm{mod}(m - M, 4) = 3, M + fP \leq m < M + (f + 1)P \end{cases}$$

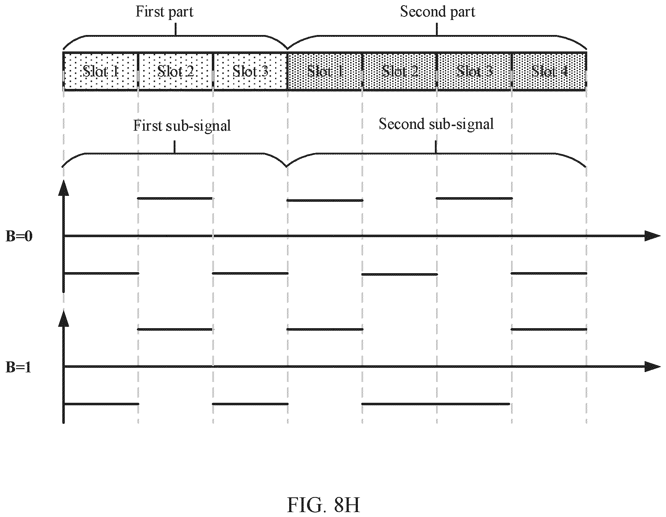

(18) If the second device sends an information bit B = 0, that is, the information bit corresponding to the fourth part is 0, then as shown in FIG. 8H, the waveform of the second sub-signal corresponding to the fourth part is:

$$b^D(mN + n) = \begin{cases} 1, & \mathrm{mod}(m - M, 4) = 0, M + fP \leq m < M + (f + 1)P \\ -1, & \mathrm{mod}(m - M, 4) = 1, M + fP \leq m < M + (f + 1)P \\ 1, & \mathrm{mod}(m - M, 4) = 2, M + fP \leq m < M + (f + 1)P \\ -1, & \mathrm{mod}(m - M, 4) = 3, M + fP \leq m < M + (f + 1)P \end{cases}$$

However, if the second device sends an information bit B = 1, that is, the information bit corresponding to the fourth part is 1, then as shown in FIG. 8H, the waveform of the second sub-signal corresponding to the fourth part is:

$$b^D(mN + n) = \begin{cases} 1, & \mathrm{mod}(m - M, 4) = 0, M + fP \leq m < M + (f + 1)P \\ -1, & \mathrm{mod}(m - M, 4) = 1, M + fP \leq m < M + (f + 1)P \\ -1, & \mathrm{mod}(m - M, 4) = 2, M + fP \leq m < M + (f + 1)P \\ 1, & \mathrm{mod}(m - M, 4) = 3, M + fP \leq m < M + (f + 1)P \end{cases}$$

Case 2: The first sub-signal $b^R(mN + n)$ used to modulate the first part is:

$$b^R(mN + n) = \begin{cases} 1, & \mathrm{mod}(m, 3) = 0, 0 \leq m < M \\ -1, & \mathrm{mod}(m, 3) = 1, 0 \leq m < M \\ 1, & \mathrm{mod}(m, 3) = 2, 0 \leq m < M \end{cases}$$

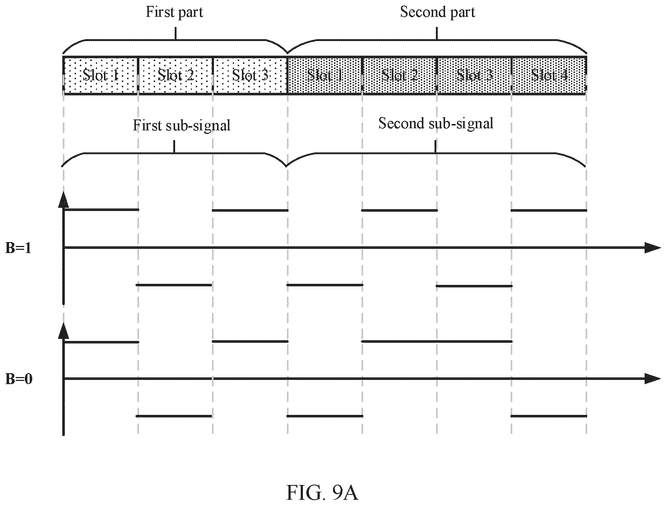

In this case, as shown in FIG. 9A to FIG. 9H, the reference bit B = 1 is represented a product of a difference value obtained by subtracting data in slot1 from data in slot2 in the third part (that is, the polarity changes from the 2nd slot in the third part to the 1st slot in the fourth part) and a difference value obtained by subtracting data in slot3 from the data in slot2 in the third part (that is, the polarity changes from the 2nd slot in the third part to the 3rd slot); and the reference bit B = 0 is represented a product of a difference value obtained by subtracting data in slot2 from data in slot3 in the third part (that is, the polarity changes from the 3rd slot in the third part to the 2nd slot) and a difference value obtained by subtracting data in slot1 from the data in slot2 in the third part (that is, the polarity changes from the 2nd slot in the third part to the 1st slot).

(I) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then:

(21) If the second device sends an information bit B = 1, that is, the information bit corresponding to the fourth part is 1, then as shown in FIG. 9A, a waveform of the second sub-signal corresponding to the fourth part is:

$$b^D(mN + n) = \begin{cases} -1, \mod(m - M, 4) = 0, M + fP \le m < M + (f + 1)P \\ 1, \mod(m - M, 4) = 1, M + fP \le m < M + (f + 1)P \\ -1, \mod(m - M, 4) = 2, M + fP \le m < M + (f + 1)P \\ 1, \mod(m - M, 4) = 3, M + fP \le m < M + (f + 1)P \end{cases}$$

However, if the second device sends an information bit B = 0, that is, the information bit corresponding to the fourth part is 0, then as shown in FIG. 9A, the waveform of the second sub-signal corresponding to the fourth part is:

$$b^D(mN + n) = \begin{cases} -1, \mod(m - M, 4) = 0, M + fP \le m < M + (f + 1)P \\ 1, \mod(m - M, 4) = 1, M + fP \le m < M + (f + 1)P \\ 1, \mod(m - M, 4) = 2, M + fP \le m < M + (f + 1)P \\ -1, \mod(m - M, 4) = 3, M + fP \le m < M + (f + 1)P \end{cases}$$

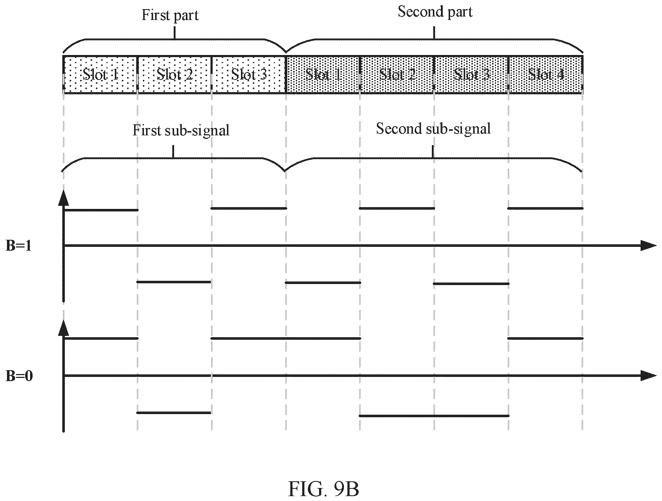

(22) If the second device sends an information bit B = 1, that is, the information bit corresponding to the fourth part is 1, then as shown in FIG. 9B, a waveform of the second sub-signal corresponding to the fourth part is:

$$b^D(mN + n) = \begin{cases} -1, \mod(m - M, 4) = 0, M + fP \le m < M + (f + 1)P \\ 1, \mod(m - M, 4) = 1, M + fP \le m < M + (f + 1)P \\ -1, \mod(m - M, 4) = 2, M + fP \le m < M + (f + 1)P \\ 1, \mod(m - M, 4) = 3, M + fP \le m < M + (f + 1)P \end{cases}$$

However, if the second device sends an information bit B = 0, that is, the information bit corresponding to the fourth part is 0, then as shown in FIG. 9B, the waveform of the second sub-signal corresponding to the fourth part is:

$$b^D(mN + n) = \begin{cases} 1, \mod(m - M, 4) = 0, M + fP \le m < M + (f + 1)P \\ -1, \mod(m - M, 4) = 1, M + fP \le m < M + (f + 1)P \\ -1, \mod(m - M, 4) = 2, M + fP \le m < M + (f + 1)P \\ 1, \mod(m - M, 4) = 3, M + fP \le m < M + (f + 1)P \end{cases}$$

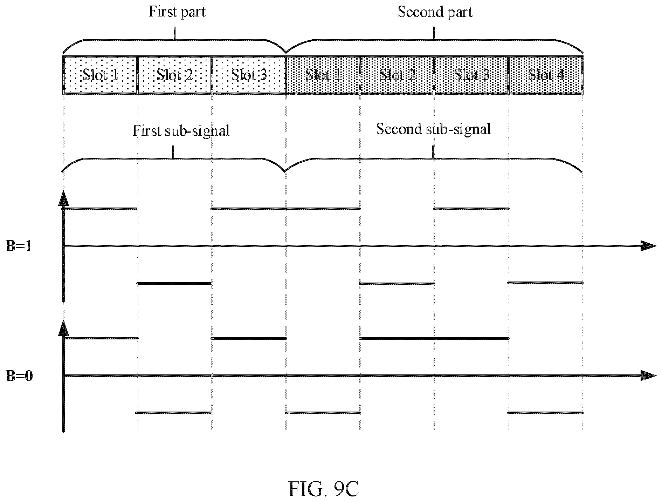

(23) If the second device sends an information bit B = 1, that is, the information bit corresponding to the fourth part is 1, then as shown in FIG. 9C, the waveform of the second sub-signal corresponding to the fourth part is:

$$b^D(mN + n) = \begin{cases} 1, \mod(m - M, 4) = 0, M + fP \le m < M + (f + 1)P \\ -1, \mod(m - M, 4) = 1, M + fP \le m < M + (f + 1)P \\ 1, \mod(m - M, 4) = 2, M + fP \le m < M + (f + 1)P \\ -1, \mod(m - M, 4) = 3, M + fP \le m < M + (f + 1)P \end{cases}$$

However, if the second device sends an information bit B = 0, that is, the information bit corresponding to the fourth part is 0, as shown in FIG. 9C, the waveform of the second sub-signal corresponding to the fourth part is:

$$b^D(mN + n) = \begin{cases} -1, \mod(m - M, 4) = 0, M + fP \leq m < M + (f + 1)P \\ 1, \mod(m - M, 4) = 1, M + fP \leq m < M + (f + 1)P \\ 1, \mod(m - M, 4) = 2, M + fP \leq m < M + (f + 1)P \\ -1, \mod(m - M, 4) = 3, M + fP \leq m < M + (f + 1)P \end{cases}$$

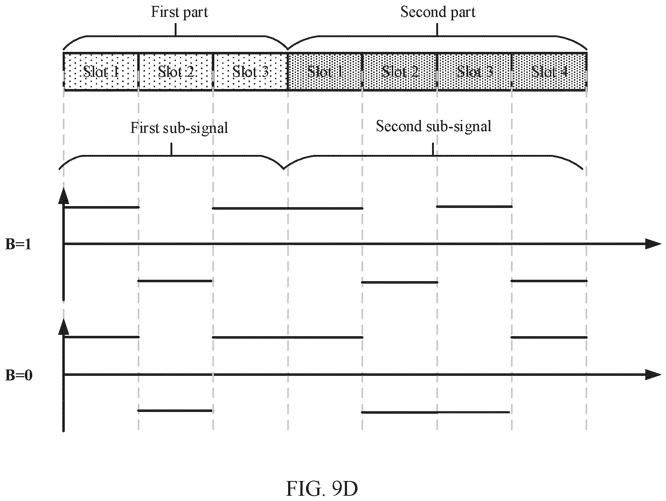

(24) If the second device sends an information bit B = 1, that is, the information bit corresponding to the fourth part is 1, then as shown in FIG. 9D, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ 1, \mod(m - M, 4) = 2, M + fP \leq m < M + (f + 1)P \\ -1, \mod(m - M, 4) = 3, M + fP \leq m < M + (f + 1)P \end{cases}$$

However, if the second device sends an information bit B = 0, that is, the information bit corresponding to the fourth part is 0, then as shown in FIG. 9D, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

(II) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, in this case, baseband waveforms of transmission bits B = 1 and B = 0 are just opposite to the above (21) to (24), then:

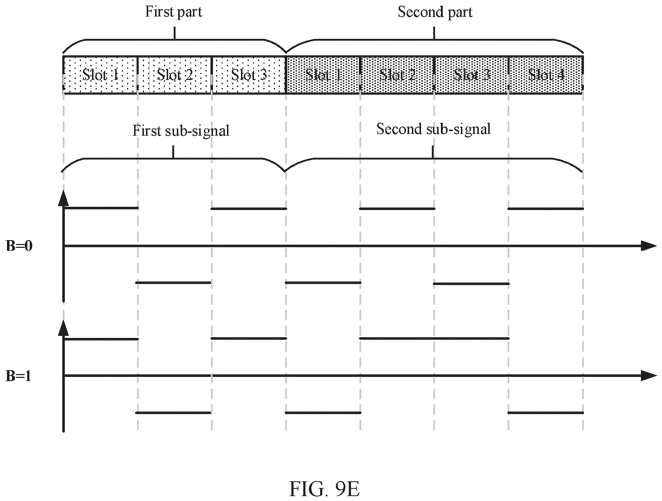

(25) If the second device sends an information bit B = 0, that is, the information bit corresponding to the fourth part is 0, then as shown in FIG. 9E, the waveform of the second sub-signal corresponding to this fourth part is:

$$b^D(mN + n) = \begin{cases} -1, \mod(m - M, 4) = 0, M + fP \leq m < M + (f + 1)P \\ 1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

However, if the second device sends an information bit B = 1, that is, the information bit corresponding to the fourth part is 1, as shown in FIG. 9E, the waveform of the second sub-signal corresponding to the fourth part is:

$$b^D(mN + n) = \begin{cases} -1, \mod(m - M, 4) = 0, M + fP \leq m < M + (f + 1)P \\ 1, \mod(m - M, 4) = 1, M + fP \leq m < M + (f + 1)P \\ 1, \mod(m - M, 4) = 2, M + fP \leq m < M + (f + 1)P \\ -1, \mod(m - M, 4) = 3, M + fP \leq m < M + (f + 1)P \end{cases}$$

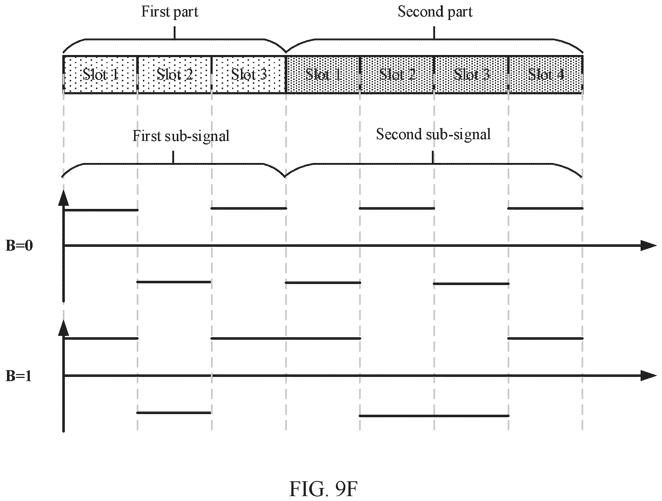

(26) If the second device sends an information bit B = 0, that is, the information bit corresponding to the fourth part is 0, then as shown in FIG. 9F, the waveform of the second sub-signal corresponding to the fourth part is:

$$b^D(mN + n) = \begin{cases} -1, \mod(m - M, 4) = 0, M + fP \leq m < M + (f + 1)P \\ 1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

However, if the second device sends an information bit B = 1, that is, the information bit corresponding to the fourth part is 1, as shown in FIG. 9F, the waveform of the second sub-signal corresponding to the fourth part is:

$$b^D(mN+n) = \begin{cases} 1, \mathrm{mod}(m-M,4) = 0, M+fP \le m < M+(f+1)P \\ -1, \mathrm{mod}(m-M,4) = 1, M+fP \le m < M+(f+1)P \\ -1, \mathrm{mod}(m-M,4) = 2, M+fP \le m < M+(f+1)P \\ 1, \mathrm{mod}(m-M,4) = 3, M+fP \le m < M+(f+1)P \end{cases}$$

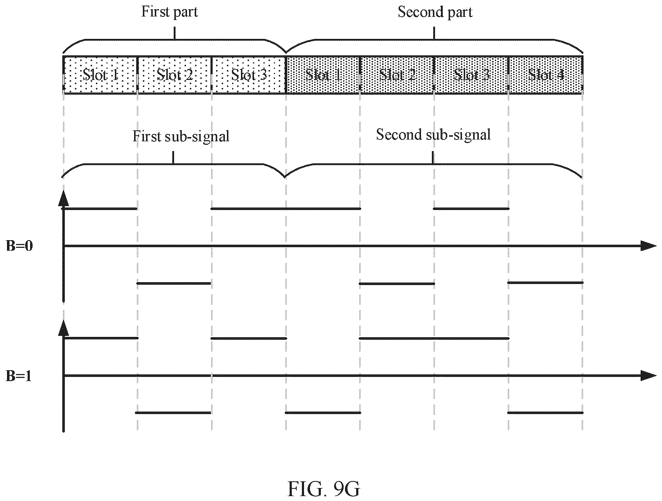

(27) If the second device sends an information bit B = 0, that is, the information bit corresponding to the fourth part is 0, then as shown in FIG. 9G, the waveform of the second sub-signal corresponding to the fourth part is:

$$b^D(mN+n) = \begin{cases} 1, \mathrm{mod}(m-M,4) = 0, M+fP \le m < M+(f+1)P \\ -1, \mathrm{mod}(m-M,4) = 1, M+fP \le m < M+(f+1)P \\ 1, \mathrm{mod}(m-M,4) = 2, M+fP \le m < M+(f+1)P \\ -1, \mathrm{mod}(m-M,4) = 3, M+fP \le m < M+(f+1)P \end{cases}$$

However, if the second device sends an information bit B = 1, that is, the information bit corresponding to the fourth part is 1, then as shown in FIG. 9G, the waveform of the second sub-signal corresponding to the fourth part is:

$$b^D(mN+n) = \begin{cases} -1, \mathrm{mod}(m-M,4) = 0, M+fP \le m < M+(f+1)P \\ 1, \mathrm{mod}(m-M,4) = 1, M+fP \le m < M+(f+1)P \\ 1, \mathrm{mod}(m-M,4) = 2, M+fP \le m < M+(f+1)P \\ -1, \mathrm{mod}(m-M,4) = 3, M+fP \le m < M+(f+1)P \end{cases}$$

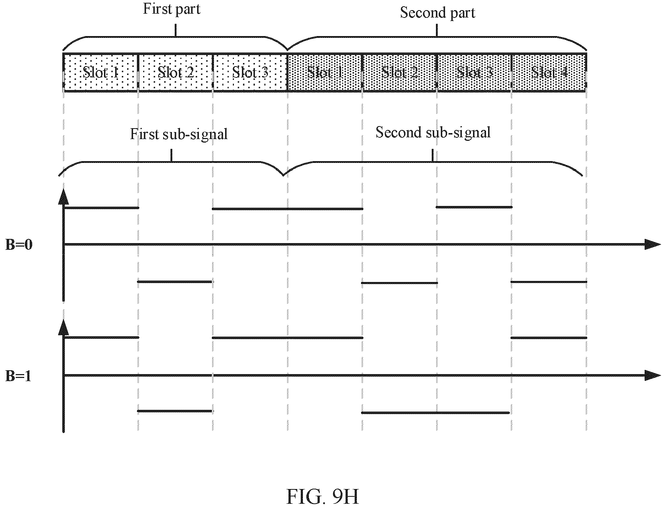

(28) If the second device sends an information bit B = 0, that is, the information bit corresponding to the fourth part is 0, then as shown in FIG. 9H, the waveform of the second sub-signal corresponding to the fourth part is:

$$b^D(mN+n) = \begin{cases} 1, \mathrm{mod}(m-M,4) = 0, M+fP \le m < M+(f+1)P \\ -1, \mathrm{mod}(m-M,4) = 1, M+fP \le m < M+(f+1)P \\ 1, \mathrm{mod}(m-M,4) = 2, M+fP \le m < M+(f+1)P \\ -1, \mathrm{mod}(m-M,4) = 3, M+fP \le m < M+(f+1)P \end{cases}$$

However, if the second device sends an information bit B = 1, that is, the information bit corresponding to the fourth part is 1, then as shown in FIG. 9H, the waveform of the second sub-signal corresponding to the fourth part is:

$$b^D(mN+n) = \begin{cases} 1, \mathrm{mod}(m-M,4) = 0, M+fP \le m < M+(f+1)P \\ -1, \mathrm{mod}(m-M,4) = 1, M+fP \le m < M+(f+1)P \\ -1, \mathrm{mod}(m-M,4) = 2, M+fP \le m < M+(f+1)P \\ 1, \mathrm{mod}(m-M,4) = 3, M+fP \le m < M+(f+1)P \end{cases}$$

Case 3: The first sub-signal $b^R(mN+n)$ used to modulate the first part is:

$$b^R(mN+n) = \begin{cases} -1, \mathrm{mod}(m,3) = 0, 0 \le m < M \\ 1, \mathrm{mod}(m,3) = 1, 0 \le m < M \\ 1, \mathrm{mod}(m,3) = 2, 0 \le m < M \end{cases}$$

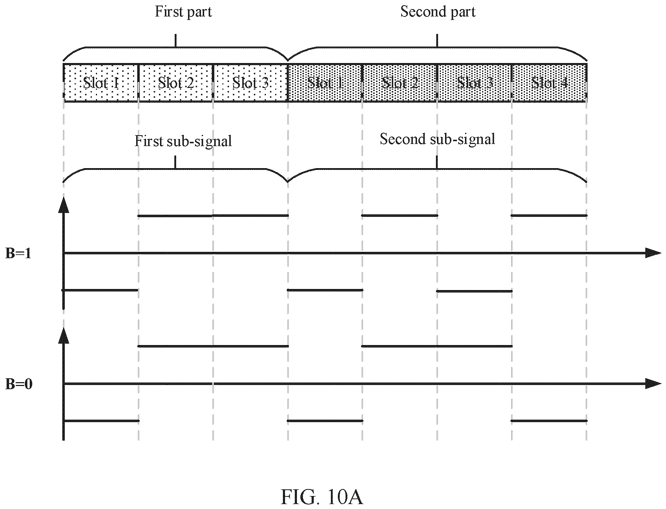

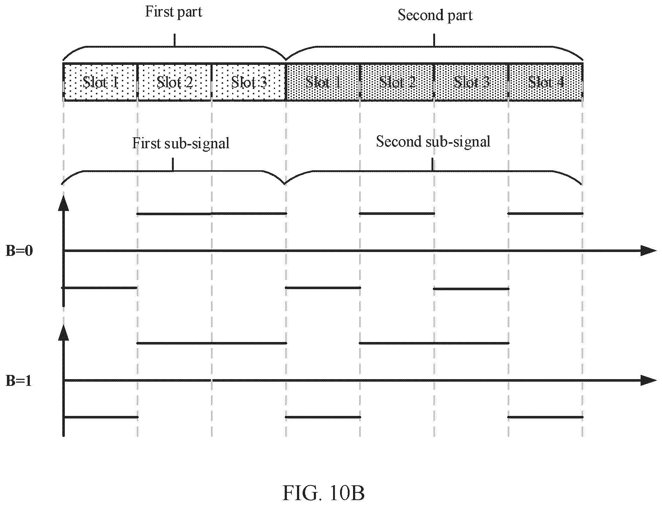

In this case, as shown in FIG. 10A and FIG. 10B, after modulation, the reference bit B = 1 is represented a product of a difference value obtained by subtracting data in slot1 from data in slot2 in the third part (that is, the polarity changes from the 2nd slot in the third part to the 1st slot in the fourth part) and a difference value obtained by subtracting data in slot1 in the fourth part from the data in slot3 in the third part (that is, the polarity changes from the 3rd slot in the third part to the 1st slot in the fourth part); and the reference bit B = 0 is represented a product of a difference value obtained by subtracting data in slot3 in the third part from data in slot1 in the fourth part (that is, the polarity changes from the 1st slot in the fourth part to the 3rd slot in the third part) and a difference value obtained by subtracting data in slot1 from the data in slot2 in the third part (that is, the polarity changes from the 2nd slot in the third part to the 1st slot).

In this case, the second signal b(t) satisfies the following waveform properties: a level of the last slot (that is, slot 2) in the third part is opposite to a level of the 1st slot (that is, slot1) in the fourth part.

(I) For a fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then: if the second device sends an information bit B = 1, that is, the information bit corresponding to the fourth part is 1, then as shown in FIG. 10A, a waveform of the second sub-signal corresponding to the fourth part is:

$$b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}$$

However, if the second device sends an information bit B = 0, that is, the information bit corresponding to the fourth part is 0, then as shown in FIG. 10A, the waveform of the second sub-signal corresponding to the fourth part is:

$$b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ 1, \mathrm{mod}(m - M, 4) = 2, M + fP \le m < M + (f + 1)P \\ -1, \mathrm{mod}(m - M, 4) = 3, M + fP \le m < M + (f + 1)P \end{cases}$$

(II) For a fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, then: if the second device sends an information bit B = 0, that is, the information bit corresponding to the fourth part is 0, then as shown in FIG. 10B, the waveform of the second sub-signal corresponding to the fourth part is.

$$b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}$$

However, if the second device sends an information bit B = 1, that is, the information bit corresponding to the fourth part is 1, then as shown in FIG. 10B, the waveform of the second sub-signal corresponding to the fourth part is:

$$b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ 1, \mathrm{mod}(m - M, 4) = 2, M + fP \le m < M + (f + 1)P \\ -1, \mathrm{mod}(m - M, 4) = 3, M + fP \le m < M + (f + 1)P \end{cases}$$

Case 4: The first sub-signal $b^R(mN + n)$ used to modulate the first part is:

$$b^R(mN + n) = \begin{cases} 1, \mathrm{mod}(m, 3) = 0, 0 \le m < M \\ -1, \mathrm{mod}(m, 3) = 1, 0 \le m < M \\ -1, \mathrm{mod}(m, 3) = 2, 0 \le m < M \end{cases}$$

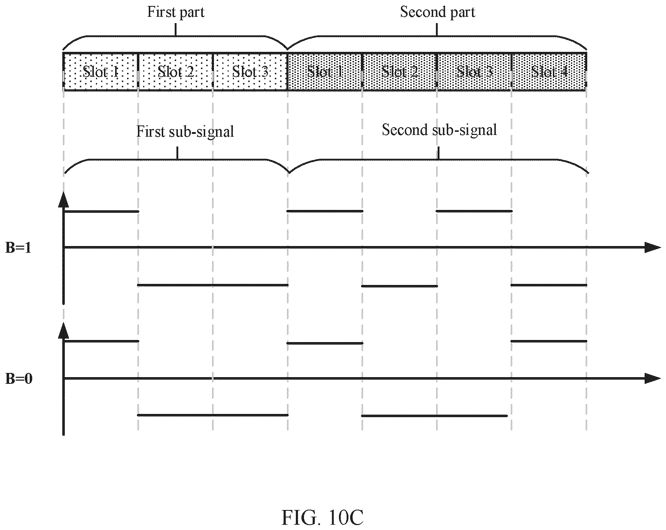

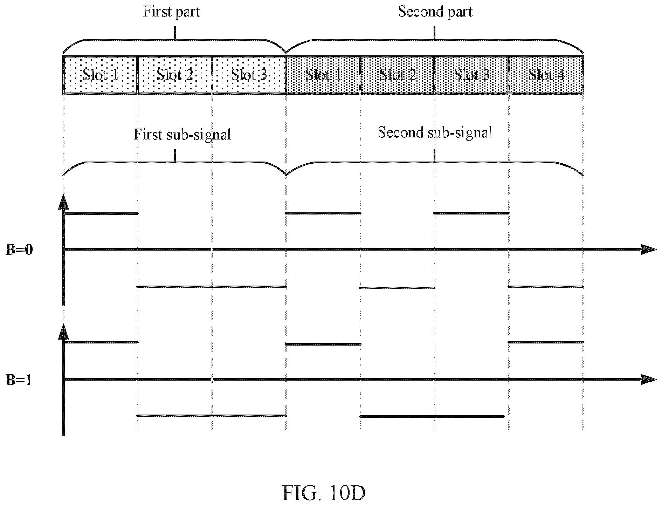

In this case, as shown in FIG. 10C and FIG. 10D, after modulation, the reference bit B = 1 is represented by a product of a difference value obtained by subtracting data in slot1 from data in slot2 in the third part and a difference value obtained by subtracting data in slot1 in the fourth part from the data in slot3 in the third part; and the reference bit B = 0 is represented by a product of a difference value obtained by subtracting data in slot3 in the third part from data in slot1 in the fourth part and a difference value obtained by subtracting data in slot1 from the data in slot2 in the third part.

In this case, the second signal b(t) satisfies the following waveform properties: a level of the last slot (that is, slot 2) in the third part is opposite to a level of the 1st slot (that is, slot1) in the fourth part.

(I) For a fourth part, if a slot range of the fourth part is M + fP ≤ m < M + (f + 1)P, f ∈ (0, Q - 1), and the information bit B of the fourth part is represented by a product of a difference value obtained by subtracting data in slot3 from data in slot4 of the fourth part, and a difference value obtained by subtracting data in slot1 from data in slot2 of the fourth part, then: If the second device sends an information bit B = 1, that is, the information bit corresponding to the fourth part is 1, then as shown in FIG. 10C, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

and if the second device sends an information bit B = 0, that is, the information bit corresponding to the fourth part is 0, as shown in FIG. 10C, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

(II) For a fourth part, if a slot range of the fourth part is M + fP ≤ m < M + (f + 1)P, f ∈ (0, Q - 1), and the information bit B of the fourth part is represented by a product of a difference value obtained by subtracting data in slot4 from data in slot3 of the fourth part, and a difference value obtained by subtracting data in slot1 from data in slot2 of the fourth part, then: If the second device sends an information bit B = 0, that is, the information bit corresponding to the fourth part is 0, then as shown in FIG. 10D, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

However, if the second device sends an information bit B = 1, that is, the information bit corresponding to the fourth part is 1, then as shown in FIG. 10D, the waveform of the second sub-signal corresponding to the fourth part is:

$$b^D(mN + n) = \begin{cases} 1, \mathrm{mod}(m - M, 4) = 0, M + fP \leq m < M + (f + 1)P \\ -1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

For the demodulation process:
First, based on third parts of M = 3 slots and according to the signal modulation rule of M = 3, P = 4, correlation values of difference values of data in adjacent slots for representing reference bits B = 1 and B = 0 are constructed, which are recorded as $C_1^{ref}, C_0^{ref}$, respectively.

(I) In signal modulation, the reference bit B = 1 is represented by a product of a difference value obtained by subtracting data in slot1 from data in slot2 in the third part and a difference value obtained by subtracting data in slot3 from the data in slot2 in the third part. Therefore, for one basic signal (that is, the first signal), the first three slots are used as the third part. Subtracting the data in the 1st slot from the data in the 2nd slot and subtracting the data in the 3rd slot from the data in the 2nd slot obtain difference values respectively:

$$z_{11}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

$$z_{12}(mN + n) = y\big((m + 1)N + n\big) - y\big((m + 2)N + n\big)$$

$$= \alpha s(mN + n)\Big(b\big((m + 1)N + n\big) - b\big((m + 2)N + n\big)\Big)h_{st}h_{tr}$$

$$+ w\big((m + 1)N + n\big) - w\big((m + 2)N + n\big)$$

where $\tau_2 \leq n \leq N + \tau_1 - 1$, and $\mathrm{mod}(m, 2) = 0, 0 \leq m < M$. $z(mN + n)$ indicates a difference value of data at positions n in the corresponding two slots. It can be obtained from the above expressions that the direct link interference is eliminated because the data s(t) of two adjacent slots are completely the same; however, it also makes a noise power of the received signal rise, and the noise power becomes twice as high as before. A correlation value of a difference value representing the reference bit B = 1 is constructed, including:

$$C_1^{\mathrm{ref}} = z_{11}(mN + n) \cdot z_{12}(mN + n)$$

Similarly, in signal modulation, the reference bit B = 0 is represented by a product of a difference value obtained by subtracting data in slot2 from data in slot3 in the third part and a difference value obtained by subtracting data in slot1 from the data in slot2 in the third part. Therefore, for one basic signal (that is, the first signal), the first three slots are used as the third part. Subtracting the data in the 1st slot from the data in the 2nd slot and subtracting the data in the 2nd slot from the data in the 3rd slot obtain difference values respectively:

$$z_{01}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

$$z_{02}(mN + n) = y\big((m + 2)N + n\big) - y\big((m + 1)N + n\big)$$

$$= \alpha s(mN + n)\Big(b\big((m + 2)N + n\big) - b\big((m + 1)N + n\big)\Big)h_{st}h_{tr}$$

$$+ w\big((m + 2)N + n\big) - w\big((m + 1)N + n\big)$$

where $\tau_2 \leq n \leq N + \tau_1 - 1$, and $\mathrm{mod}(m, 2) = 0, 0 \leq m < M$. Then, a correlation value of a difference value representing the reference bit B = 0 is constructed, including:

$$C_0^{\mathrm{ref}} = z_{01}(mN + n) \cdot z_{02}(mN + n)$$

(II) In signal modulation, the reference bit B = 1 is represented by a product of a difference value obtained by subtracting data in slot1 from data in slot2 in the third part and a difference value obtained by subtracting data in slot1 in the 1st fourth part from the data in slot3 in the third part. Therefore, for one basic signal (that is, the first signal), the first three slots and the 1st slot in the fourth part are used as the generalized third part. Subtracting the data in the 1st slot from the data in the 2nd slot in the third part and subtracting the data in the 1st slot in the fourth part from the data in the 3rd slot in the third part obtain difference values respectively:

$$z_{11}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$
$$- w(mN + n)$$

$$z_{12}(mN + n) = y\big((m + 2)N + n\big) - y\big((m + 3)N + n\big)$$

$$= \alpha s(mN + n)\Big(b\big((m + 2)N + n\big) - b\big((m + 3)N + n\big)\Big)h_{st}h_{tr}$$

$$+ w\big((m + 2)N + n\big) - w\big((m + 3)N + n\big)$$

where $\tau_2 \le n \le N + \tau_1 - 1$, and $\bmod(m, 2) = 0, 0 \le m < M$. $z(mN + n)$ indicates a difference value of data at positions n in the corresponding two slots. It can be obtained from the above expressions that the direct link interference is eliminated because the data s(t) of two adjacent slots are completely the same; however, it also makes a noise power of the received signal rise, and the noise power becomes twice as high as before. A correlation value of a difference value representing the reference bit B = 1 is constructed, including:

$$C_1^{ref} = z_{11}(mN + n) \cdot z_{12}(mN + n)$$

Similarly, in signal modulation, the reference bit B = 0 is represented by a product of a difference value obtained by subtracting data in slot3 in the third part from data in slot1 in the fourth part and a difference value obtained by subtracting the data in slot1 from the data in slot2 in the third part. Therefore, for one basic signal (that is, the first signal), the first three slots and the 1st slot in the fourth part are used as the generalized third part. Subtracting the data in the 1st slot from the data in the 2nd slot in the third part and subtracting the data in the 3rd slot in the third part from the data in the 1st slot in the fourth part obtain difference values respectively:

$$z_{01}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$
$$- w(mN + n)$$

$$z_{02}(mN + n) = y\big((m + 3)N + n\big) - y\big((m + 2)N + n\big)$$

$$= \alpha s(mN + n)\Big(b\big((m + 3)N + n\big) - b\big((m + 2)N + n\big)\Big)h_{st}h_{tr}$$

$$+ w\big((m + 3)N + n\big) - w\big((m + 2)N + n\big)$$

where $\tau_2 \le n \le N + \tau_1 - 1$, and $\bmod(m, 2) = 0, 0 \le m < M$. Then, a correlation value of a difference value representing the reference bit B = 0 is constructed, including:

$$C_0^{ref} = z_{01}(mN + n) \cdot z_{02}(mN + n)$$

Then, Q information bits corresponding to Q fourth parts are demodulated sequentially. For each fourth part, P slots are used as one basic unit to demodulate the corresponding information bit:

(I) According to a preset coding rule, correlation values of difference values of data in adjacent slots for representing reference bits are constructed, which are respectively recorded as $C^{inf}$.

(a1) In the signal modulation, if the reference bit is represented by a product of a difference value from the data in the 4th slot to the data in the 3rd slot in the fourth part and a difference value from the data in the 2nd slot to the data in the 1st slot, for a fourth part of one slot P = 4, data in the 1st slot is subtracted from data in the 2nd slot to obtain a difference value, and data in the 3rd slot is subtracted from data in the 4th slot to obtain a difference value:

$$z(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

where $\tau_2 \le n \le N + \tau_1 - 1$, and mod(m, 4) = even, $M \le m < M + P$.

(b1) Optionally, if the radio frequency source (that is, the first device) sends repeated K (K is a positive integer) basic slot blocks (that is, the first signal), then noise may be smoothed by using the K repeated basic slot blocks to obtain:

$$\text{Centralized: } \bar{z}(n) = \frac{1}{K}\sum_{k=0}^{K-1} z(k(M + PQ)N + n)$$

$$\text{Distributed: } \bar{z}(n) = \frac{1}{K}\sum_{k=0}^{K-1} z(k(M + PQ + L)N + n)$$

where L is a length of data slots in the distributed structure, and the data slots are a slot block used for other functions in the radio frequency source.

(c1) A correlation value of a difference value z(mN + n) or an average value $\bar{z}(n)$ of the difference values obtained for two slots in the same fourth part is solved to obtain:

$$C^{ref} = \sum_{n=\tau_2}^{N+\tau_1-1} \bar{z}(n)\bar{z}(2N + n)$$

(a2) In the signal modulation, if the reference bit is represented by a product of a difference value from the data in the 3rd slot to the data in the 4th slot in the fourth part and a difference value from the data in the 2nd slot to the data in the 1st slot, for a fourth part of one slot P = 4, data in the 1st slot is subtracted from data in the 2nd slot to obtain a difference value, and data in the 4th slot is subtracted from data in the 3rd slot to obtain a difference value:

$$z_1(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

where $\tau_2 \le n \le N + \tau_1 - 1$, and modem, 4) = 0, $M \le m < M + P$.

$$z_2(mN + n) = y(mN + n) - y\big((m + 1)N + n\big)$$

$$= \alpha s(mN + n)\Big(b(mN + n) - b\big((m + 1)N + n\big)\Big)h_{st}h_{tr} \quad + w(mN + n)$$

$$- w\big((m + 1)N + n\big)$$

where $\tau_2 \leq n \leq N + \tau_1 - 1$, and mod(m, 4) = 2, M ≤ m < M + P.

(b2) Optionally, if the radio frequency source (that is, the first device) sends repeated K (K is a positive integer) basic slot blocks (that is, the first signal), then noise may be smoothed by using the K repeated basic slot blocks to obtain:

$$\text{Centralized: } \bar{z}_1(n) = \frac{1}{K} \sum_{k=0}^{K-1} z_1(k(M + PQ)N + n)$$

$$\bar{z}_2(n) = \frac{1}{K} \sum_{k=0}^{K-1} z_2(k(M + PQ)N + n)$$

$$\text{Distributed: } \bar{z}_1(n) = \frac{1}{K} \sum_{k=0}^{K-1} z_1(k(M + PQ + L)N + n)$$

$$\bar{z}_2(n) = \frac{1}{K} \sum_{k=0}^{K-1} z_2(k(M + PQ + L)N + n)$$

where L is a length of data slots in the distributed structure, and the data slots are a slot block used for other functions in the radio frequency source.

(c2) A correlation value of a difference value z(mN + n) or an average value $\bar{z}(n)$ of the difference values obtained for two slots in the same fourth part is solved to obtain:

$$C^{\text{ref}} = \sum_{n=\tau_2}^{N+\tau_1-1} \bar{z}_1(n) \bar{z}_2(n)$$

(II) The constructed correlation value $C^{\text{inf}}$ of the difference value in the fourth part and the constructed correlation values $C_1^{\text{inf}}, C_2^{\text{inf}}$ of the two difference values representing the reference bits B = 1 and B = 0 in the third part are used for related processing.

(III) Judgment is performed on the information bit B according to the following rule:

$$B = \begin{cases} 1, \text{if } C^{\text{inf}} \cdot C_1^{\text{ref}} \geq C^{\text{inf}} \cdot C_0^{\text{ref}} \\ 0, \text{if } C^{\text{inf}} \cdot C_1^{\text{ref}} < C^{\text{inf}} \cdot C_0^{\text{ref}} \end{cases}$$

where, Q information bits in a same basic slot block can be demodulated in sequence according to the above steps (I) to (III).

Example 3

In Example 3, using M = 4, P = 4 as an example, the first signal includes a first part and Q second parts. Supposing that the second signal b(t) includes the first sub-signal $b^R(mN + n)$ and Q second sub-signals $b^D(mN + n)$, and the Q second sub-signals $b^D(mN + n)$ may be partially or completely different signal waveforms, if mod is a remainder symbol, the first sub-signal corresponds to a first part of the first signal and is used to modulate the first part to obtain a third part of the third signal; the Q second sub-signals correspond to the Q second parts of the first signal one by one, and are used to modulate the Q second parts respectively to obtain Q fourth parts of the third signal; and the second signal b(t) can satisfy any one of the following conditions:

Case 1: The first sub-signal $b^R(mN + n)$ used to modulate the first part is:

$$b^R(mN + n) = \begin{cases} -1, \mathrm{mod}(m, 4) = 0, 0 \leq m < M \\ 1, \mathrm{mod}(m, 4) = 0, 0 \leq m < M \\ -1, \mathrm{mod}(m, 4) = 0, 0 \leq m < M \\ 1, \mathrm{mod}(m, 4) = 0, 0 \leq m < M \end{cases}$$

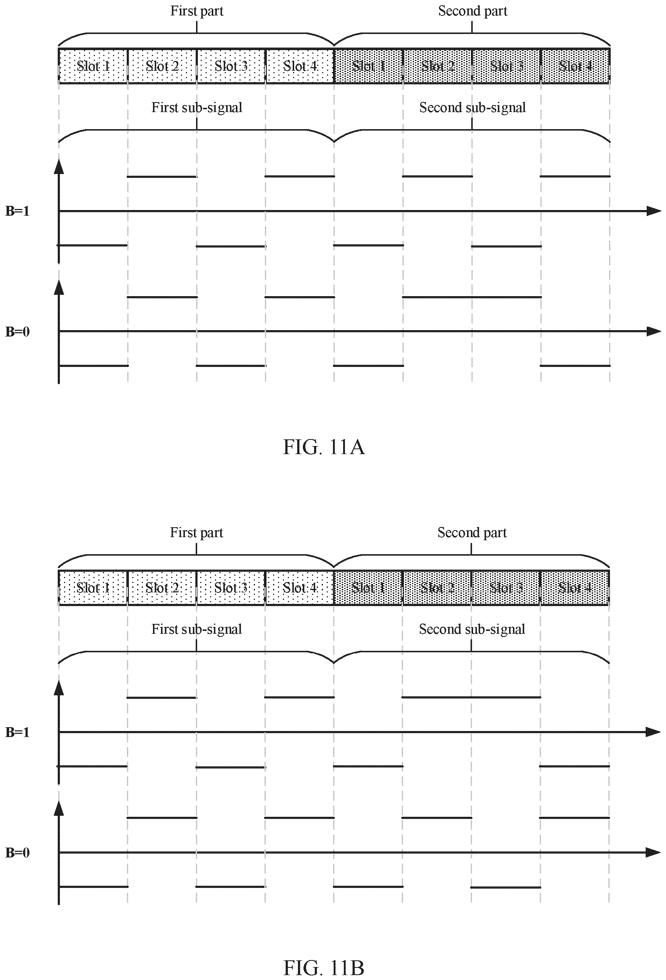

In this case, as shown in FIG. 11A and FIG. 11B, after modulation, the reference bit B = 1 is represented a product of a difference value obtained by subtracting data in slot3 from data in slot4 in the third part (that is, the polarity changes from the 4th slot in the third part to the 3rd slot) and a difference value obtained by subtracting data in slot1 from the data in slot2 in the third part (that is, the polarity changes from the 2nd slot in the third part to the 1st slot); and the reference bit B = 0 is represented a product of a difference value obtained by subtracting data in slot4 from data in slot3 in the third part (that is, the polarity changes from the 3rd slot in the third part to the 4th slot) and a difference value obtained by subtracting data in slot1 from the data in slot2 in the third part (that is, the polarity changes from the 2nd slot in the third part to the 1st slot).

(I) For a specific fourth part, if a slot range of the fourth part is M + fP $\leq$ m < M + (f + 1)P, f $\in$ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then:
if the second device sends an information bit B = 1, that is, the information bit corresponding to the fourth part is 1, then as shown in FIG. 11A, a waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ -1, \mathrm{mod}(m - M, 4) = 2, M + fP \leq m < M + (f + 1)P \\ 1, \mathrm{mod}(m - M, 4) = 3, M + fP \leq m < M + (f + 1)P \end{cases}$$

However, if the second device sends an information bit B = 0, that is, the information bit corresponding to the fourth part is 0, then as shown in FIG. 11A, the waveform of the second sub-signal corresponding to the fourth part is:

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

(II) For a specific fourth part, if a slot range of the fourth part is M + fP $\leq$ m < M + (f + 1)P, f $\in$ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, then:
if the second device sends an information bit B = 1, that is, the information bit corresponding to the fourth part is 1, then as shown in FIG. 11B, the waveform of the second sub-signal corresponding to the fourth part is.

$$b^D(mN + n) = \begin{cases} -1, \mathrm{mod}(m - M, 4) = 0, M + fP \leq m < M + (f + 1)P \\ 1, \mathrm{mod}(m - M, 4) = 1, M + fP \leq m < M + (f + 1)P \\ 1, \mathrm{mod}(m - M, 4) = 2, M + fP \leq m < M + (f + 1)P \\ -1, \mathrm{mod}(m - M, 4) = 3, M + fP \leq m < M + (f + 1)P \end{cases}$$

However, if the second device sends an information bit B = 0, that is, the information bit corresponding to the fourth part is 0, then as shown in FIG. 11B, the waveform of the second sub-signal corresponding to the fourth part is:

$$b^D(mN + n) = \begin{cases} -1, \mod(m - M, 4) = 0, M + fP \leq m < M + (f + 1)P \\ 1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

In addition, there are more waveforms representing bits B=1 and B=0, which are similar to some cases in Example 2 above, and will not be repeated here.

Case 2: The first sub-signal $b^R(mN + n)$ used to modulate the first part is:

$$b^R(mN + n) = \begin{cases} 1, \mod(m, 4) = 0, 0 \leq m < M \\ -1, \mod(m, 4) = 0, 0 \leq m < M \\ 1, \mod(m, 4) = 0, 0 \leq m < M \\ -1, \mod(m, 4) = 0, 0 \leq m < M \end{cases}$$

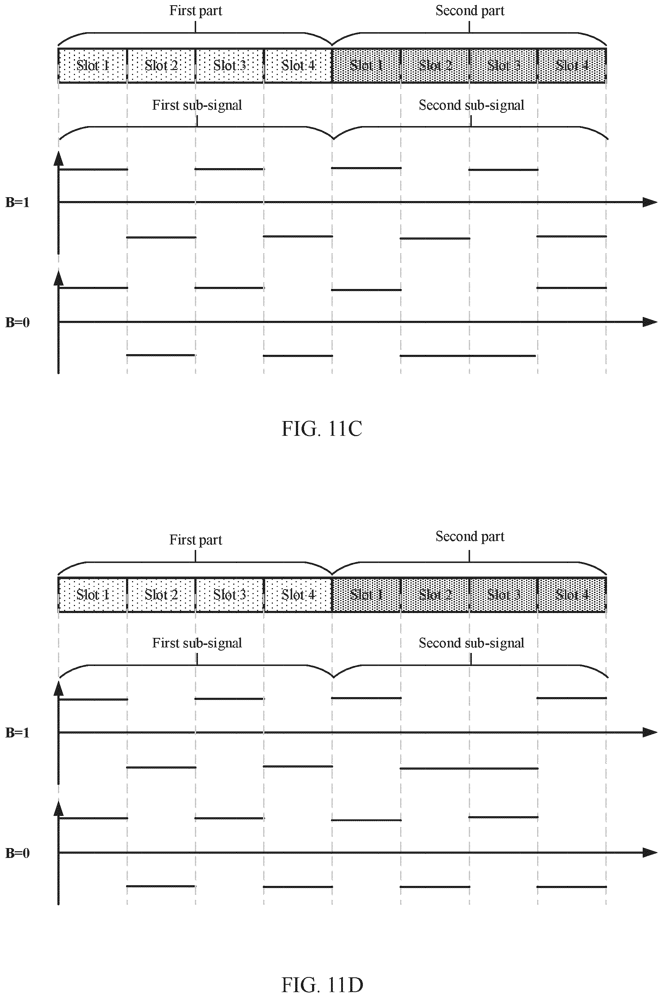

In this case, as shown in FIG. 11C and FIG. 11D, after modulation, the reference bit B = 1 is represented a product of a difference value obtained by subtracting data in slot3 from data in slot4 in the third part (that is, the polarity changes from the 4th slot in the third part to the 3rd slot) and a difference value obtained by subtracting data in slot1 from the data in slot2 in the third part (that is, the polarity changes from the 2nd slot in the third part to the 1st slot); and the reference bit B = 0 is represented a product of a difference value obtained by subtracting data in slot4 from data in slot3 in the third part (that is, the polarity changes from the 3rd slot in the third part to the 4th slot) and a difference value obtained by subtracting data in slot1 from the data in slot2 in the third part (that is, the polarity changes from the 2nd slot in the third part to the 1st slot).

(I) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then:

If the second device sends an information bit B = 1, that is, the information bit corresponding to the fourth part is 1, then as shown in FIG. 11C, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ 1, \mod(m - M, 4) = 2, M + fP \leq m < M + (f + 1)P \\ -1, \mod(m - M, 4) = 3, M + fP \leq m < M + (f + 1)P \end{cases}$$

However, if the second device sends an information bit B = 0, that is, the information bit corresponding to the fourth part is 0, as shown in FIG. 11C, the waveform of the second sub-signal corresponding to the fourth part is:

$$b^D(mN + n) = \begin{cases} 1, \mod(m - M, 4) = 0, M + fP \leq m < M + (f + 1)P \\ -1, \mod(m - M, 4) = 1, M + fP \leq m < M + (f + 1)P \\ -1, \mod(m - M, 4) = 2, M + fP \leq m < M + (f + 1)P \\ 1, \mod(m - M, 4) = 3, M + fP \leq m < M + (f + 1)P \end{cases}$$

(II) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, then:

If the second device sends an information bit B = 1, that is, the information bit corresponding to the fourth part is 1, then as shown in FIG. 11D, the waveform of the second sub-signal corresponding to the fourth part is:

$$b^D(mN + n) = \begin{cases} 1, \mathrm{mod}(m - M, 4) = 0, M + fP \le m < M + (f + 1)P \\ -1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}$$

However, if the second device sends an information bit B = 0, that is, the information bit corresponding to the fourth part is 0, then as shown in FIG. 11D, the waveform of the second sub-signal corresponding to the fourth part is:

$$b^D(mN + n) = \begin{cases} 1, \mathrm{mod}(m - M, 4) = 0, M + fP \le m < M + (f + 1)P \\ -1, \mathrm{mod}(m - M, 4) = 1, M + fP \le m < M + (f + 1)P \\ 1, \mathrm{mod}(m - M, 4) = 2, M + fP \le m < M + (f + 1)P \\ -1, \mathrm{mod}(m - M, 4) = 3, M + fP \le m < M + (f + 1)P \end{cases}$$

In addition, there are more waveforms representing bits B=1 and B=0, which are similar to some cases in Example 2 above, and will not be repeated here.
Case 3: The first sub-signal $b^R(mN + n)$ used to modulate the first part is:

$$b^R(mN + n) = \begin{cases} -1, \mathrm{mod}(m, 4) = 0, 0 \le m < M \\ 1, \mathrm{mod}(m, 4) = 0, 0 \le m < M \\ 1, \mathrm{mod}(m, 4) = 0, 0 \le m < M \\ -1, \mathrm{mod}(m, 4) = 0, 0 \le m < M \end{cases}$$

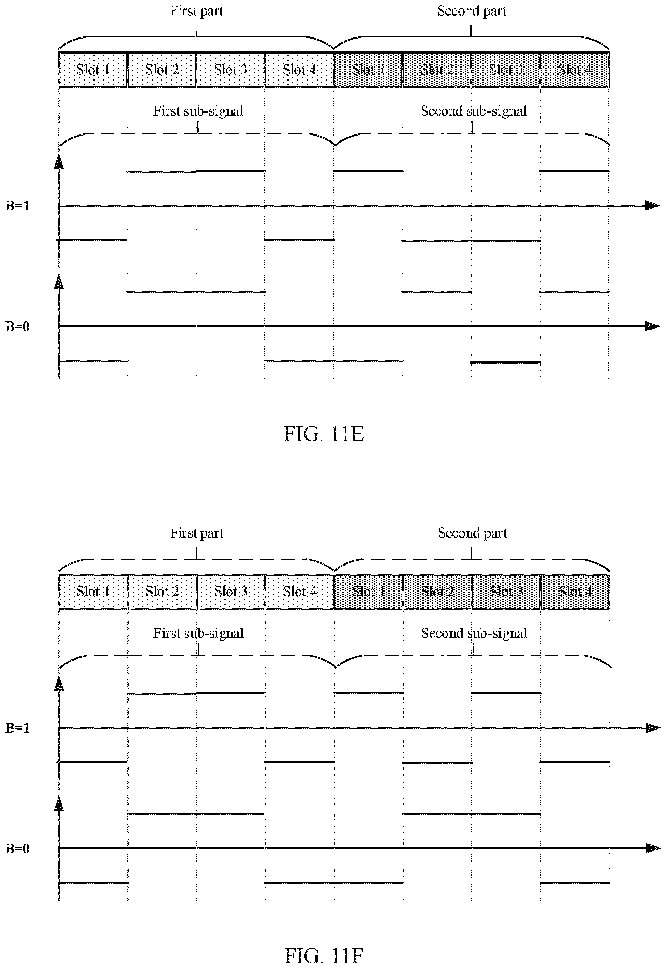

In this case, as shown in FIG. 11E and FIG. 11F, after modulation, the reference bit B = 1 is represented a product of a difference value obtained by subtracting data in slot4 from data in slot3 in the third part (that is, the polarity changes from the 3rd slot in the third part to the 4th slot) and a difference value obtained by subtracting data in slot1 from the data in slot2 in the third part (that is, the polarity changes from the 2nd slot in the third part to the 1st slot); and the reference bit B = 0 is represented a product of a difference value obtained by subtracting data in slot3 from data in slot4 in the third part (that is, the polarity changes from the 4th slot in the third part to the 3rd slot) and a difference value obtained by subtracting data in slot1 from the data in slot2 in the third part (that is, the polarity changes from the 2nd slot in the third part to the 1st slot).

(I) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, then:
If the second device sends an information bit B = 1, that is, the information bit corresponding to the fourth part is 1, then as shown in FIG. 11E, the waveform of the second sub-signal corresponding to the fourth part is:

$$b^D(mN + n) = \begin{cases} 1, \mathrm{mod}(m - M, 4) = 0, M + fP \le m < M + (f + 1)P \\ -1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}$$

However, if the second device sends an information bit B = 0, that is, the information bit corresponding to the fourth part is 0, as shown in FIG. 11E, the waveform of the second sub-signal corresponding to the fourth part is:

$$b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}$$

(II) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then:

If the second device sends an information bit B = 1, that is, the information bit corresponding to the fourth part is 1, then as shown in FIG. 11F, the waveform of the second sub-signal corresponding to the fourth part is:

$$
b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ -1, \mathrm{mod}(m - M, 4) = 2, M + fP \le m < M + (f + 1)P \\ 1, \mathrm{mod}(m - M, 4) = 3, M + fP \le m < M + (f + 1)P \end{cases}
$$

However, if the second device sends an information bit B = 0, that is, the information bit corresponding to the fourth part is 0, as shown in FIG. 11F, the waveform of the second sub-signal corresponding to the fourth part is:

$$
b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ 1, \mathrm{mod}(m - M, 4) = 2, M + fP \le m < M + (f + 1)P \\ -1, \mathrm{mod}(m - M, 4) = 3, M + fP \le m < M + (f + 1)P \end{cases}
$$

In addition, there are more waveforms representing bits B=1 and B=0, which are similar to some cases in Example 2 above, and will not be repeated here.

Case 4: The first sub-signal $b^R(mN + n)$ used to modulate the first part is:

$$
b^R(mN + n) = \begin{cases} 1, \mathrm{mod}(m, 4) = 0, 0 \le m < M \\ -1, \mathrm{mod}(m, 4) = 0, 0 \le m < M \\ -1, \mathrm{mod}(m, 4) = 0, 0 \le m < M \\ 1, \mathrm{mod}(m, 4) = 0, 0 \le m < M \end{cases}
$$

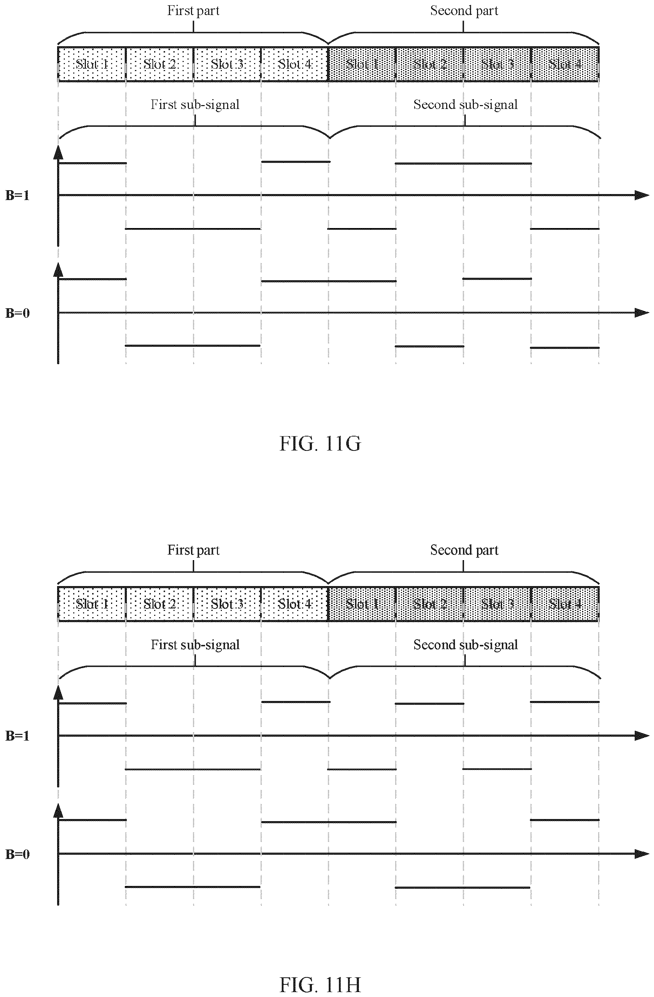

In this case, as shown in FIG. 11G and FIG. 11H, after modulation, the reference bit B = 1 is represented a product of a difference value obtained by subtracting data in slot4 from data in slot3 in the third part (that is, the polarity changes from the 3rd slot in the third part to the 4th slot) and a difference value obtained by subtracting data in slot1 from the data in slot2 in the third part (that is, the polarity changes from the 2nd slot in the third part to the 1st slot); and the reference bit B = 0 is represented a product of a difference value obtained by subtracting data in slot3 from data in slot4 in the third part (that is, the polarity changes from the 4th slot in the third part to the 3rd slot) and a difference value obtained by subtracting data in slot1 from the data in slot2 in the third part (that is, the polarity changes from the 2nd slot in the third part to the 1st slot).

(I) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot4 from data in slot3 of the fourth part, and a difference value obtained by subtracting data in slot1 from data in slot2 of the fourth part, then:

If the second device sends an information bit B = 1, that is, the information bit corresponding to the fourth part is 1, then as shown in FIG. 11G, the waveform of the second sub-signal corresponding to the fourth part is:

$$
b^D(mN + n) = \begin{cases} -1, \mathrm{mod}(m - M, 4) = 0, M + fP \le m < M + (f + 1)P \\ 1, \mathrm{mod}(m - M, 4) = 1, M + fP \le m < M + (f + 1)P \\ 1, \mathrm{mod}(m - M, 4) = 2, M + fP \le m < M + (f + 1)P \\ -1, \mathrm{mod}(m - M, 4) = 3, M + fP \le m < M + (f + 1)P \end{cases}
$$

However, if the second device sends an information bit B = 0, that is, the information bit corresponding to the fourth part is 0, then as shown in FIG. 11G, the waveform of the second sub-signal corresponding to the fourth part is:

$$b^D(mN + n) = \begin{cases} 1, \text{mod}(m - M, 4) = 0, M + fP \le m < M + (f + 1)P \\ -1, \text{mod}(m - M, 4) = 1, M + fP \le m < M + (f + 1)P \\ 1, \text{mod}(m - M, 4) = 2, M + fP \le m < M + (f + 1)P \\ -1, \text{mod}(m - M, 4) = 3, M + fP \le m < M + (f + 1)P \end{cases}$$

(II) For a specific fourth part, if a slot range of the fourth part is M + fP ≤ m < M + (f + 1)P, f ∈ (0, Q - 1), and the information bit of the fourth part is represented by a product of a difference value obtained by subtracting data in slot3 from data in slot4 of the fourth part, and a difference value obtained by subtracting data in slot1 from data in slot2 of the fourth part, then:

If the second device sends an information bit B = 1, that is, the information bit corresponding to the fourth part is 1, then as shown in FIG. 11H, the waveform of the second sub-signal corresponding to the fourth part is:

$$b^D(mN + n) = \begin{cases} -1, \text{mod}(m - M, 4) = 0, M + fP \le m < M + (f + 1)P \\ 1, \text{mod}(m - M, 4) = 1, M + fP \le m < M + (f + 1)P \\ -1, \text{mod}(m - M, 4) = 2, M + fP \le m < M + (f + 1)P \\ 1, \text{mod}(m - M, 4) = 3, M + fP \le m < M + (f + 1)P \end{cases}$$

However, if the second device sends an information bit B = 0, that is, the information bit corresponding to the fourth part is 0, then as shown in FIG. 11H, the waveform of the second sub-signal corresponding to the fourth part is:

$$b^D(mN + n) = \begin{cases} 1, \text{mod}(m - M, 4) = 0, M + fP \le m < M + (f + 1)P \\ -1, \text{mod}(m - M, 4) = 1, M + fP \le m < M + (f + 1)P \\ -1, \text{mod}(m - M, 4) = 2, M + fP \le m < M + (f + 1)P \\ 1, \text{mod}(m - M, 4) = 3, M + fP \le m < M + (f + 1)P \end{cases}$$

In addition, there are more waveforms representing bits B=1 and B=0, which are similar to some cases in Example 2 above, and will not be repeated here.

For the demodulation process:

First, based on third parts of M = 4 slots and according to the signal modulation rule of M = 4, P = 4, correlation values of difference values of data in adjacent slots for representing reference bits B = 1 and B = 0 are constructed, which are recorded as $C_1^{ref}, C_0^{ref}$, respectively.

(I) In signal modulation, the reference bit B = 1 is represented by a product of a difference value obtained by subtracting data in slot1 from data in slot2 in the third part and a difference value obtained by subtracting data in slot3 from the data in slot4 in the third part. Therefore, for one basic signal (that is, the first signal), the first four slots are used as the third part. Subtracting the data in the 1st slot from the data in the 2nd slot and subtracting the data in the 3rd slot from the data in the 4th slot obtain difference values respectively:

$$z_{11}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} + w\big((m + 1)N + n\big) - w(mN + n)$$

$$z_{12}(mN + n) = y\big((m + 3)N + n\big) - y\big((m + 2)N + n\big)$$

$$= \alpha s(mN + n)\Big(b\big((m + 3)N + n\big) - b\big((m + 2)N + n\big)\Big)h_{st}h_{tr} + w\big((m + 3)N + n\big) - w\big((m + 2)N + n\big)$$

where $\tau_2 \leq n \leq N + \tau_1 - 1$, and $\mathrm{mod}(m, 2) = 0, 0 \leq m < M$. $z(mN + n)$ indicates a difference value of data at positions n in the corresponding two slots. It can be obtained from the above expressions that the direct link interference is eliminated because the data s(t) of two adjacent slots are completely the same; however, it also makes a noise power of the received signal rise, and the noise power becomes twice as high as before. A correlation value of a difference value representing the reference bit B = 1 is constructed, including:

$$C_1^{\mathrm{ref}} = z_{11}(mN + n) \cdot z_{12}(mN + n)$$

Similarly, in signal modulation, the reference bit B = 0 is represented by a product of a difference value obtained by subtracting data in slot4 from data in slot3 in the third part and a difference value obtained by subtracting data in slot1 from the data in slot2 in the third part. Therefore, for one basic signal (that is, the first signal), the first four slots are used as the third part. Subtracting the data in the 1st slot from the data in the 2nd slot and subtracting the data in the 4th slot from the data in the 3rd slot obtain difference values respectively:

$$z_{01}(mN + n) = y\big((m + 1)N + n\big) - y(mN + n)$$

$$= \alpha s(mN + n)\left(b\big((m + 1)N + n\big) - b(mN + n)\right)h_{st}h_{tr} \quad + w\big((m + 1)N + n\big)$$

$$- w(mN + n)$$

$$z_{02}(mN + n) = y\big((m + 2)N + n\big) - y\big((m + 3)N + n\big)$$

$$= \alpha s(mN + n)\left(b\big((m + 2)N + n\big) - b\big((m + 3)N + n\big)\right)h_{st}h_{tr}$$

$$+ w\big((m + 2)N + n\big) - w\big((m + 3)N + n\big)$$

where $\tau_2 \leq n \leq N + \tau_1 - 1$, and $\mathrm{mod}(m, 2) = 0, 0 \leq m < M$. Then, a correlation value of a difference value representing the reference bit B = 0 is constructed, including:

$$C_0^{\mathrm{ref}} = z_{01}(mN + n) \cdot z_{02}(mN + n)$$

(II) In the signal modulation, the reference bit B = 1 is represented by a product of a difference value obtained by subtracting data in slot1 from data in slot2 in the third part and a difference value obtained by subtracting data in slot4 from the data in slot3 in the third part. Therefore, for one basic signal (that is, the first signal), the first four slots are used as the third part. Subtracting the data in the 1st slot from the data in the 2nd slot and subtracting the data in the 4th slot from the data in the 3rd slot obtain difference values respectively:

$$z_{11}(mN + n) = y\big((m + 1)N + n\big) - y(mN + n)$$

$$= \alpha s(mN + n)\left(b\big((m + 1)N + n\big) - b(mN + n)\right)h_{st}h_{tr} \quad + w\big((m + 1)N + n\big)$$

$$- w(mN + n)$$

$$z_{12}(mN + n) = y\big((m + 2)N + n\big) - y\big((m + 3)N + n\big)$$

$$= \alpha s(mN + n)\left(b\big((m + 2)N + n\big) - b\big((m + 3)N + n\big)\right)h_{st}h_{tr}$$

$$+ w\big((m + 2)N + n\big) - w\big((m + 3)N + n\big)$$

where $\tau_2 \leq n \leq N + \tau_1 - 1$, and $\mathrm{mod}(m, 2) = 0, 0 \leq m < M$. A correlation value of a difference value representing the reference bit B = 1 is constructed, including:

$$C_1^{ref} = z_{11}(mN + n) \cdot z_{12}(mN + n)$$

Similarly, in signal modulation, the reference bit B = 0 is represented by a product of a difference value obtained by subtracting data in slot3 from data in slot4 in the third part and a difference value obtained by subtracting data in slot1 from the data in slot2 in the third part. Therefore, for one basic signal (that is, the first signal), the first four slots are used as the third part. Subtracting the data in the 1st slot from the data in the 2nd slot and subtracting the data in the 3rd slot from the data in the 4th slot obtain difference values respectively:

$$z_{01}(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$
$$- w(mN + n)$$

$$z_{02}(mN + n) = y\big((m + 3)N + n\big) - y((m + 2)N + n)$$

$$= \alpha s(mN + n)\Big(b\big((m + 3)N + n\big) - b\big((m + 2)N + n\big)\Big)h_{st}h_{tr}$$

$$+ w\big((m + 3)N + n\big) - w\big((m + 2)N + n\big)$$

where $\tau_2 \leq n \leq N + \tau_1 - 1$, and mod(m, 2) = 0, $0 \leq m < M$. Then, a correlation value of a difference value representing the reference bit B = 0 is constructed, including:

$$C_0^{ref} = z_{01}(mN + n) \cdot z_{02}(mN + n)$$

Then, Q information bits corresponding to Q fourth parts are demodulated sequentially. For each fourth part, P slots are used as one basic unit to demodulate the corresponding information bit:

(I) According to a preset coding rule, correlation values of difference values of data in adjacent slots for representing reference bits are constructed, which are respectively recorded as $C^{inf}$.

(a1) In the signal modulation, if the reference bit is represented by a product of a difference value from the data in the 4th slot to the data in the 3rd slot in the fourth part and a difference value from the data in the 2nd slot to the data in the 1st slot, for a fourth part of one slot P = 4, data in the 1st slot is subtracted from data in the 2nd slot to obtain a difference value, and data in the 3rd slot is subtracted from data in the 4th slot to obtain a difference value:

$$z(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$
$$- w(mN + n)$$

where $\tau_2 \leq n \leq N + \tau_1 - 1$, and mod(m, 4) = even, $M \leq m < M + P$.
(b1) Optionally, if the radio frequency source (that is, the first device) sends repeated K (K is a positive integer) basic slot blocks (that is, the first signal), then noise may be smoothed by using the K repeated basic slot blocks to obtain:

$$\text{Centralized: } \bar{z}(n) = \frac{1}{K} \sum_{k=0}^{K-1} z(k(M + PQ)N + n)$$

$$\text{Distributed: } \bar{z}(n) = \frac{1}{K} \sum_{k=0}^{K-1} z(k(M + PQ + L)N + n)$$

where L is a length of data slots in the distributed structure, and the data slots are a slot block used for other functions in the radio frequency source.

(c1) A correlation value of a difference value $z(mN + n)$ or an average value $\bar{z}(n)$ of the difference values obtained for two slots in the same fourth part is solved to obtain:

$$C^{ref} = \sum_{n=\tau_2}^{N+\tau_1-1} \bar{z}(n)\bar{z}(2N + n)$$

(a2) In the signal modulation, if the reference bit is represented by a product of a difference value from the data in the 3rd slot to the data in the 4th slot in the fourth part and a difference value from the data in the 2nd slot to the data in the 1st slot, for a fourth part of one slot $P = 4$, data in the 1st slot is subtracted from data in the 2nd slot to obtain a difference value, and data in the 4th slot is subtracted from data in the 3rd slot to obtain a difference value:

$$z_1(mN + n) = y\big((m + 1)N + n\big) - y(mN + n)$$

$$= \alpha s(mN + n)\Big(b\big((m + 1)N + n\big) - b(mN + n)\Big)h_{st}h_{tr} \quad + w\big((m + 1)N + n\big)$$

$$- w(mN + n)$$

where $\tau_2 \le n \le N + \tau_1 - 1$, and modem, 4) = 0, $M \le m < M + P$.

$$z_2(mN + n) = y(mN + n) - y\big((m + 1)N + n\big)$$

$$= \alpha s(mN + n)\Big(b(mN + n) - b\big((m + 1)N + n\big)\Big)h_{st}h_{tr} \quad + w(mN + n)$$

$$- w\big((m + 1)N + n\big)$$

where $\tau_2 \le n \le N + \tau_1 - 1$, and $\text{mod}(m, 4) = 2$, $M \le m < M + P$.

(b2) Optionally, if the radio frequency source (that is, the first device) sends repeated K (K is a positive integer) basic slot blocks (that is, the first signal), then noise may be smoothed by using the K repeated basic slot blocks to obtain:

Centralized:

$$\bar{z}_1(n) = \frac{1}{K} \sum_{k=0}^{K-1} z_1(k(M + PQ)N + n)$$

$$\bar{z}_2(n) = \frac{1}{K} \sum_{k=0}^{K-1} z_2(k(M + PQ)N + n)$$

Distributed:

$$\overline{z}_1(n) = \frac{1}{K} \sum_{k=0}^{K-1} z_1(k(M + PQ + L)N + n)$$

$$\overline{z}_2(n) = \frac{1}{K} \sum_{k=0}^{K-1} z_2(k(M + PQ + L)N + n)$$

where L is a length of data slots in the distributed structure, and the data slots are a slot block used for other functions in the radio frequency source.

(c2) A correlation value of a difference value z(mN + n) or an average value $\overline{z}(n)$ of the difference values obtained for two slots in the same fourth part is solved to obtain:

$$C^{ref} = \sum_{n=\tau_2}^{N+\tau_1-1} \overline{z}_1(n) \overline{z}_2(n)$$

(II) The constructed correlation value $C^{inf}$ of the difference value in the fourth part and the constructed correlation values $C_1^{inf}, C_2^{inf}$ of the two difference values representing the reference bits B = 1 and B = 0 are used in the third part for related processing.

(III) Judgment is performed on the information bit B according to the following rule:

$$B = \begin{cases} 1, \text{if } C^{inf} \cdot C_1^{ref} \geq C^{inf} \cdot C_0^{ref} \\ 0, \text{if } C^{inf} \cdot C_1^{ref} < C^{inf} \cdot C_0^{ref} \end{cases}$$

where, Q information bits in a same basic slot block can be demodulated in sequence according to the above steps (I) to (III).

The execution subject of the information sending method provided in the embodiments of this application may be an information sending apparatus. In the embodiments of this application, the information sending apparatus provided in the embodiments of this application is described by using the information sending method as an example.

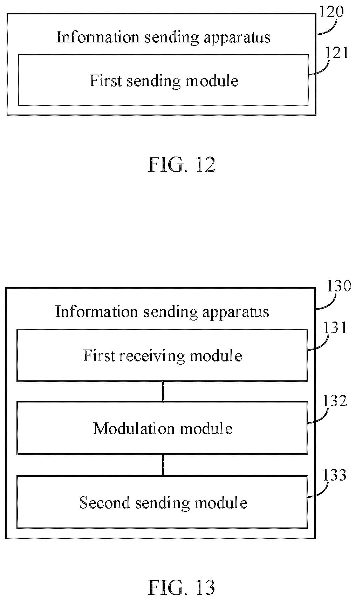

Refer to FIG. 12. FIG. 12 is a schematic structural diagram of an information sending apparatus according to an embodiment of this application. The apparatus is applied to a first device, and the first device is a radio frequency source, including but not limited to a device sending radio frequency signals/carrier signals, such as a base station and a television tower. As shown in FIG. 12, the information sending apparatus 120 includes:

a first sending module 121 configured to send a first signal, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1.

Optionally, the first time unit and the second time unit are time units of a same type, including any one of the following: symbol, slot, subframe, and frame.

Optionally, the data in the first time unit and the second time unit are non-random sequences or random sequences.

Optionally, the first sending module 121 is specifically configured to send K repeated first signals, where the K repeated first signals are distributed in a centralized manner or a distributed manner, and K is an integer greater than or equal to 2.

Optionally, a data length corresponding to the first time unit is N, and a data length corresponding to the second time unit is N, where N is a positive integer greater than a first threshold.

The information sending apparatus 120 provided in this embodiment of this application is capable of implementing the processes implemented in the method embodiments in FIG. 2, with the same technical effects achieved. To avoid repetition, details are not described herein again.

Refer to FIG. 13, FIG. 13 is a schematic structural diagram of an information sending apparatus according to an embodiment of this application. The apparatus is applied to a second device, and the second device is a BSC transmitting device, including but not limited to a tag (Tag), a passive or semi-passive Internet of things (IoT) device, and the like. As shown in FIG. 13, the information sending apparatus 130 includes:

a first receiving module 131, configured to receive a first signal sent by a first device, where the first signal includes a first part and Q second parts, the first part occupies M first time units, data in the M first time units is the same, each of the second parts occupies P second time units, data in the P second time units is the same, and the data in the first time unit is the same as or opposite to the data in the second time unit, where M is an integer greater than or equal to 2, P is an integer greater than or equal to 4, and Q is an integer greater than or equal to 1;

a modulation module 132, configured to perform backscatter modulation on the first signal by using a second signal to generate a third signal; where the second signal includes a first sub-signal and Q second sub-signals, the third signal includes a third part and Q fourth parts, the first sub-signal is used for modulating the first part to obtain the third part, and the Q second sub-signals are used for modulating the Q second parts to obtain the Q fourth parts respectively; a reference bit, of the first sub-signal, carried in the third signal is represented by a first correlation value or a second correlation value, the first correlation value is a correlation value of a difference value between data in adjacent first time units in the third part, and a second correlation value is a correlation value of a difference value between data in adjacent time units in a third time unit, the third time unit includes M first time units in the third part and a target second time unit in a target part, the target part is any one of the Q fourth parts, the third signal carries Q information bits of the Q second sub-signals, and each information bit is represented by a correlation value corresponding to a difference value between data in adjacent second time units in the fourth part; and

a second sending module 133, configured to send the third signal.

Optionally, the first time unit and the second time unit are time units of a same type, including any one of the following: symbol, slot, subframe, and frame.

Optionally, polarity of data in the M-th first time unit in the third part is opposite to polarity of data in the target second time unit.

Optionally, the target part is the 1st fourth part in the Q fourth parts, and the target second time unit is the 1st second time unit in the target part.

Optionally, when M is equal to 2, if the reference bit is a first value, the reference bit is represented by a correlation value of a first difference value and a second difference value, or if the reference bit is a second value, the reference bit is represented by a correlation value of a third difference value and a fourth difference value; where the first difference value is a difference value obtained by subtracting the data in the 1st first time unit from the data in the 2nd first time unit in the third part, and the second difference value is a difference value obtained by subtracting the data in the target second time unit from the data in the 2nd first time unit in the third part; or, the first difference value is a difference value obtained by subtracting the data in the 2nd first time unit from the data in the 1st first time unit in the third part, and the second difference value is a difference value obtained by subtracting the data in the 2nd first time unit in the third part from the data in the target second time unit; and the third difference value is a difference value obtained by subtracting the data in the 2nd first time unit from the data in the 1st first time unit in the third part, and the fourth difference value is a difference value obtained by subtracting the data in the target second time unit from the data in the 2nd first time unit in the third part; or, the third difference value is a difference value obtained by subtracting the data in the 1st first time unit from the data in the 2nd first time unit in the third part, and the fourth difference value is a difference value obtained by subtracting the data in the 2nd first time unit in the third part from the data in the target second time unit.

Optionally, when M is equal to 3, if the reference bit is a first value, the reference bit is represented by a correlation value of a fifth difference value and a sixth difference value, or if the reference bit is a second value, the reference bit is represented by a correlation value of a seventh difference value and an eighth difference value; where the fifth difference value is a difference value obtained by subtracting the data in the 1st first time unit from the data in the 2nd first time unit in the third part, and the sixth difference value is a difference value obtained by subtracting the data in the 3rd first time unit from the data in the 2nd first time unit in the third part; or, the fifth difference value is a difference value obtained by subtracting the data in the 2nd first time unit from the data in the 1st first time unit in the third part, and the sixth difference value is a difference value obtained by subtracting the data in the 2nd first time unit from the data in the 3rd first time unit in the third part; and the seventh difference value is a difference value obtained by subtracting the data in the 2nd first time unit from the data in the 1st first time unit in the third part, and the eighth difference value is a difference value obtained by subtracting the data in the 3rd first time unit from the data in the 2nd first time unit in the third part; or, the seventh difference value is a difference value obtained by subtracting the data in the 1st first time unit from the data in the 2nd first time unit in the third part, and the eighth difference value is a difference value obtained by subtracting the data in the 2nd first time unit from the data in the 3rd first time unit in the third part.

Optionally, when M is equal to 3, if the reference bit is a first value, the reference bit is represented by a correlation value of a ninth difference value and a tenth difference value, or if the reference bit is a second value, the reference bit is represented by a correlation value of an eleventh difference value and a twelfth difference value; where the ninth difference value is a difference value obtained by subtracting the data in the 1st first time unit from the data in the 2nd first time unit in the third part, and the tenth difference value is a difference value obtained by subtracting the data in the target second time unit from the data in the 3rd first time unit in the third part; or, the ninth difference value is a difference value obtained by subtracting the data in the 2nd first time unit from the data in the 1st first time unit in the third part, and the tenth difference value is a difference value obtained by subtracting the data in the 3rd first time unit in the third part from the data in the target second time unit; and the eleventh difference value is a difference value obtained by subtracting the data in the 2nd first time unit from the data in the 1st first time unit in the third part, and the twelfth difference value is a difference value obtained by subtracting the data in the target second time unit from the data in the 3rd first time unit in the third part; or, the eleventh difference value is a difference value obtained by subtracting the data in the 1st first time unit from the data in the 2nd first time unit in the third part, and the twelfth difference value is a difference value obtained by subtracting the data in the 3rd first time unit in the third part from the data in the target second time unit.

Optionally, when M is equal to 4, if the reference bit is a first value, the reference bit is represented by a correlation value of a thirteenth difference value and a fourteenth difference value, or if the reference bit is a second value, the reference bit is represented by a correlation value of a fifteenth difference value and a sixteenth difference value; where the thirteenth difference value is a difference value obtained by subtracting the data in the 1st first time unit from the data in the 2nd first time unit in the third part, and the fourteenth difference value is a difference value obtained by subtracting the data in the 4th first time unit from the data in the 3rd first time unit in the third part; or, the thirteenth difference value is a difference value obtained by subtracting the data in the 2nd first time unit from the data in the 1st first time unit in the third part, and the fourteenth difference value is a difference value obtained by subtracting the data in the 3rd first time unit from the data in the 4th first time unit in the third part; and the fifteenth difference value is a difference value obtained by subtracting the data in the 2nd first time unit from the data in the 1st first time unit in the third part, and the sixteenth difference value is a difference value obtained by subtracting the data in the 4th first time unit from the data in the 3rd first time unit in the third part; or, the fifteenth difference value is a difference value obtained by subtracting the data in the 1st first time unit from the data in the 2nd first time unit in the third part, and the sixteenth difference value is a difference value obtained by subtracting the data in the 3rd first time unit from the data in the 4th first time unit in the third part.

Optionally, the first value is equal to 1 and the second value is equal to 0; or, the first value is equal to 0 and the second value is equal to 1.

Optionally, when P is equal to 4, if the information bit is equal to a third value, the information bit is represented by a correlation value of a seventeenth difference value and an eighteenth difference value, or if the information bit is equal to a fourth value, the information bit is represented by a correlation value of a nineteenth difference value and a twentieth difference value; where the seventeenth difference value is a difference value obtained by subtracting data in the 3rd second time unit from data in the 4th second time unit in a fourth part corresponding to the information bit, and the eighteenth difference value is a difference value obtained by subtracting data in the 1st second time unit from data in the 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

Optionally, the third value is equal to 1 and the fourth value is equal to 0; or, the third value is equal to 0 and the fourth value is equal to 1.

The information sending apparatus 130 provided in this embodiment of this application is capable of implementing the processes implemented in the method embodiments in FIG. 5, with the same technical effects achieved. To avoid repetition, details are not described herein again.

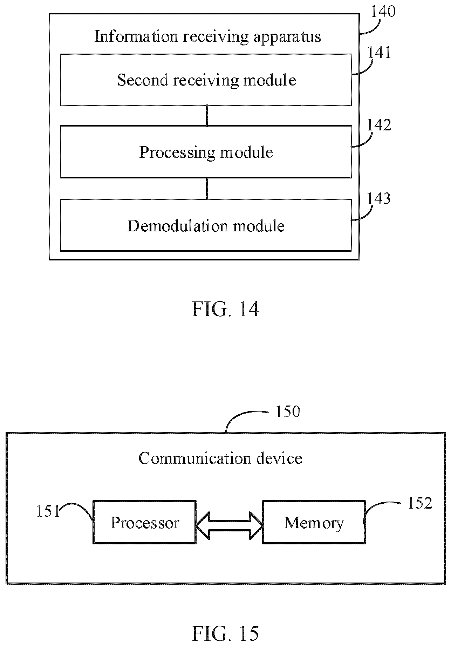

Refer to FIG. 14, FIG. 14 is a schematic structural diagram of an information receiving apparatus according to an embodiment of this application. The apparatus is applied to a third device, and the third device is a BSC receiving device, including but not limited to a reader and the like. As shown in FIG. 14, the information receiving apparatus 140 includes:

a second receiving module 141, configured to receive a third signal sent by a second device; where the third signal includes a third part and Q fourth parts, the third part occupies M first time units, and each of the fourth parts occupies P second time units, where M is an integer greater than or equal to 2, P is an integer greater than or equal to 4, and Q is an integer greater than or equal to 1;

a processing module 142, configured to construct a third correlation value used when a reference bit carried in the third signal is a first value, construct a fourth correlation value used when the reference bit carried in the third signal is a second value, and for each of the fourth parts, construct a fifth correlation value of a difference value between data in adjacent second time units in each of the fourth parts; where the reference bit corresponds to a first sub-signal included in a second signal, the third correlation value is a value related to a difference value between data in adjacent first time units in the third part, and the fourth correlation value is a value related to a difference value between data in adjacent first time units in the third part; and

a demodulation module 143, configured to perform demodulation based on the third correlation value, the fourth correlation value, and the fifth correlation value to obtain information bits, of Q second sub-signals included in the second signal, carried in the third signal.

Optionally, the first time unit and the second time unit are time units of a same type, including any one of the following: symbol, slot, subframe, and frame.

Optionally, when M is equal to 2, the third correlation value is a correlation value of a first difference value and a second difference value, and the fourth correlation value is a correlation value of a third difference value and a fourth difference value; where the first difference value is a difference value obtained by subtracting data in the 1st first time unit from data in the 2nd first time unit in the third part, and the second difference value is a difference value obtained by subtracting data in the target second time unit from the data in the 2nd first time unit in the third part; or, the first difference value is a difference value obtained by subtracting the data in the 2nd first time unit from the data in the 1st first time unit in the third part, and the second difference value is a difference value obtained by subtracting the data in the 2nd first time unit in the third part from the data in the target second time unit; and the third difference value is a difference value obtained by subtracting the data in the 2nd first time unit from the data in the 1st first time unit in the third part, and the fourth difference value is a difference value obtained by subtracting the data in the target second time unit from the data in the 2nd first time unit in the third part; or, the third difference value is a difference value obtained by subtracting the data in the 1st first time unit from the data in the 2nd first time unit in the third part, and the fourth difference value is a difference value obtained by subtracting the data in the 2nd first time unit in the third part from the data in the target second time unit.

Optionally, when M is equal to 3, the third correlation value is a correlation value of a fifth difference value and a sixth difference value, and the fourth correlation value is a correlation value of a seventh difference value and an eighth difference value; where the fifth difference value is a difference value obtained by subtracting data in the 1st first time unit from data in the 2nd first time unit in the third part, and the sixth difference value is a difference value obtained by subtracting data in the 3rd first time unit from the data in the 2nd first time unit in the third part; or, the fifth difference value is a difference value obtained by subtracting the data in the 2nd first time unit from the data in the 1st first time unit in the third part, and the sixth difference value is a difference value obtained by subtracting the data in the 2nd first time unit from the data in the 3rd first time unit in the third part; and the seventh difference value is a difference value obtained by subtracting the data in the 2nd first time unit from the data in the 1st first time unit in the third part, and the eighth difference value is a difference value obtained by subtracting the data in the 3rd first time unit from the data in the 2nd first time unit in the third part; or, the seventh difference value is a difference value obtained by subtracting the data in the 1st first time unit from the data in the 2nd first time unit in the third part, and the eighth difference value is a difference value obtained by subtracting the data in the 2nd first time unit from the data in the 3rd first time unit in the third part.

Optionally, when M is equal to 3, the third correlation value is a correlation value of a ninth difference value and a tenth difference value, and the fourth correlation value is a correlation value of an eleventh difference value and a twelfth difference value; where the ninth difference value is a difference value obtained by subtracting data in the 1st first time unit from data in the 2nd first time unit in the third part, and the tenth difference value is a difference value obtained by subtracting data in the target second time unit from data in the 3rd first time unit in the third part; or, the ninth difference value is a difference value obtained by subtracting the data in the 2nd first time unit from the data in the 1st first time unit in the third part, and the tenth difference value is a difference value obtained by subtracting the data in the 3rd first time unit in the third part from the data in the target second time unit; and the eleventh difference value is a difference value obtained by subtracting the data in the 2nd first time unit from the data in the 1st first time unit in the third part, and the twelfth difference value is a difference value obtained by subtracting the data in the target second time unit from the data in the 3rd first time unit in the third part; or, the eleventh difference value is a difference value obtained by subtracting the data in the 1st first time unit from the data in the 2nd first time unit in the third part, and the twelfth difference value is a difference value obtained by subtracting the data in the 3rd first time unit in the third part from the data in the target second time unit.

Optionally, when M is equal to 4, the third correlation value is a correlation value of a thirteenth difference value and a fourteenth difference value, and the fourth correlation value is a correlation value of a fifteenth difference value and a sixteenth difference value; where the thirteenth difference value is a difference value obtained by subtracting data in the 1st first time unit from data in the 2nd first time unit in the third part, and the fourteenth difference value is a difference value obtained by subtracting data in the 4th first time unit from data in the 3rd first time unit in the third part; or, the thirteenth difference value is a difference value obtained by subtracting the data in the 2nd first time unit from the data in the 1st first time unit in the third part, and the fourteenth difference value is a difference value obtained by subtracting the data in the 3rd first time unit from the data in the 4th first time unit in the third part; and the fifteenth difference value is a difference value obtained by subtracting the data in the 2nd first time unit from the data in the 1st first time unit in the third part, and the sixteenth difference value is a difference value obtained by subtracting the data in the 4th first time unit from the data in the 3rd first time unit in the third part; or, the fifteenth difference value is a difference value obtained by subtracting the data in the 1st first time unit from the data in the 2nd first time unit in the third part, and the sixteenth difference value is a difference value obtained by subtracting the data in the 3rd first time unit from the data in the 4th first time unit in the third part.

Optionally, the first value is equal to 1 and the second value is equal to 0; or, the first value is equal to 0 and the second value is equal to 1.

Optionally, when P is equal to 4, the fifth correlation value is a correlation value of a seventeenth difference value and an eighteenth difference value, or the fifth correlation value is a correlation value of a nineteenth difference value and a twentieth difference value; where the seventeenth difference value is a difference value obtained by subtracting data in the 3rd second time unit from data in the 4th second time unit in a fourth part corresponding to the information bit, and the eighteenth difference value is a difference value obtained by subtracting data in the 1st second time unit from data in the 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

Optionally, if the second device sends K third signals, where K is an integer greater than or equal to 2;

the third correlation value is a correlation value determined based on a first average difference value group, and the first average difference value is obtained by performing bit average on difference values included in a first difference value group in the K basic signals; where the first difference value group includes a twenty-first difference value or the first difference value group includes a twenty-first difference value and a twenty-second difference value, the twenty-first difference value includes a difference value between data in adjacent first time units in the third part when the reference bit is a first value, and the twenty-second difference value includes a difference value between data in the M-th first time unit in the third part and data in a target second time unit, and the target second time unit is one second time unit in any one of the Q fourth parts;

the fourth correlation value is a correlation value determined based on a second average difference value group, and the second average difference value is obtained by performing bit average on difference values included in a second difference value group in the K basic signals; where the second difference value group includes a twenty-third difference value or the second difference value group includes a twenty-third difference value and a twenty-fourth difference value, the twenty-third difference value includes a difference value between data in adjacent first time units in the third part when the reference bit is a second value, and the twenty-fourth difference value includes a difference value between data in the M-th first time unit in the third part and the data in the target second time unit, and the target second time unit is one second time unit in any one of the Q fourth parts; and

the fifth correlation value is a correlation value determined based on a third average difference value group, the third average difference value group is obtained by performing bit average on difference values included in a third difference value group in the K basic signals, and the third difference value group includes a difference value between data in adjacent second time units in each of the fourth parts.

Optionally, the demodulation module 143 is specifically configured to: for each of the fourth parts based on a pre-established relationship between a reference bit and an information bit, determine an information bit of a corresponding second sub-signal to be a third value when a product of the fifth correlation value and the third correlation value is greater than or equal to a product of the fifth correlation value and the fourth correlation value, or determine the information bit of the corresponding second sub-signal to be a fourth value when the product of the fifth correlation value and the third correlation value is less than the product of the fifth correlation value and the fourth correlation value.

Optionally, the third value is equal to 1 and the fourth value is equal to 0; or, the third value is equal to 0 and the fourth value is equal to 1.

The information receiving apparatus 140 provided in this embodiment of this application is capable of implementing the processes implemented in the method embodiments in FIG. 6, with the same technical effects achieved. To avoid repetition, details are not described herein again.

Optionally, as shown in FIG. 15, an embodiment of this application further provides a communication device 150, including a processor 151 and a memory 152. A program or instructions capable of running on the processor 151 are stored in the memory 152. For example, when the communication device 150 is the first device and when the program or the instructions are executed by the processor 151, the steps of the foregoing embodiments of the information sending method are implemented, with the same technical effects achieved. When the communication device 150 is the second device and when the program or instructions are executed by the processor 151, the steps of the foregoing embodiments of the information sending method shown in FIG. 5 are implemented, with the same technical effects achieved. When the communication device 150 is the third device and when the program or instruction is executed by the processor 151, the steps of the foregoing embodiments of the information receiving method shown in FIG. 6 are implemented, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the information sending method or the processes of the foregoing embodiments of the information receiving method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the information sending method or the processes of the foregoing embodiments of the information receiving method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the information sending method or the processes of the foregoing embodiments of the information receiving method, with the same technical effects achieved. To avoid repetition, details are not repeated herein.

An embodiment of this application further provides a communication system, where the communication system includes at least two of a first device, a second device, and a third device, where the first device is configured to implement the steps of the information sending method shown in FIG. 2, the second device is configured to implement the steps of the information sending method shown in FIG. 5, and the third device is configured to implement the steps of the information receiving method shown in FIG. 6.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. An information sending method, comprising:
   sending, by a first device, a first signal, wherein the first signal comprises a first part and Q second parts, the first part occupies M first time units, data in the M first time units is the same, each of the second parts occupies P second time units, data in the P second time units is the same, and the data in the first time unit is the same as or opposite to the data in the second time unit, wherein M is an integer greater than or equal to 2, P is an integer greater than or equal to 4, and Q is an integer greater than or equal to 1.

2. The method according to claim 1, wherein the first time unit and the second time unit are time units of a same type, comprising any one of the following: symbol, slot, subframe, and frame.

3. The method according to claim 1 or 2, wherein the data in the first time unit and the data in the second time unit are non-random sequences or random sequences.

4. The method according to claim 1 or 2, wherein the sending a first signal comprises:
   sending, by the first device, K repeated first signals, wherein the K repeated first signals are distributed in a centralized manner or a distributed manner, and K is an integer greater than or equal to 2.

5. The method according to claim 1, wherein a data length corresponding to the first time unit is N, a data length corresponding to the second time unit is N, and N is a positive integer greater than a first threshold.

6. An information sending method, comprising:

   receiving, by a second device, a first signal sent by a first device, wherein the first signal comprises a first part and Q second parts, the first part occupies M first time units, data in the M first time units is the same, each of the second parts occupies P second time units, data in the P second time units is the same, and the data in the first time unit is the same as or opposite to the data in the second time unit, wherein M is an integer greater than or equal to 2, P is an integer greater than or equal to 4, and Q is an integer greater than or equal to 1;
   performing, by the second device, backscatter modulation on the first signal by using a second signal to generate a third signal; wherein the second signal comprises a first sub-signal and Q second sub-signals, the third signal comprises a third part and Q fourth parts, the first sub-signal is used for modulating the first part to obtain the third part, and the Q second sub-signals are used for modulating the Q second parts to obtain the Q fourth parts respectively; a reference bit, of the first sub-signal, carried in the third signal is represented by a first correlation value or a second correlation value, the first correlation value is a correlation value of a difference value between data in adjacent first time units in the third part, and a second correlation value is a correlation value of a difference value between data in adjacent time units in a third time unit, the third time unit comprises M first time units in the third part and a target second time unit in a target part, the target part is any one of the Q fourth parts, the third signal carries Q information bits of the Q second sub-signals, and each information bit is represented by a correlation value corresponding to a difference value between data in adjacent second time units in the fourth part; and
   sending, by the second device, the third signal.

7. The method according to claim 6, wherein the first time unit and the second time unit are time units of a same type, comprising any one of the following: symbol, slot, subframe, and frame.

8. The method according to claim 6 or 7, wherein polarity of data in an M-th first time unit in the third part is opposite to polarity of data in the target second time unit.

9. The method according to claim 6 or 7, wherein the target part is a 1st fourth part in the Q fourth parts, and the target second time unit is a 1st second time unit in the target part.

10. The method according to any one of claims 6 to 9, wherein when M is equal to 2,

if the reference bit is a first value, the reference bit is represented by a correlation value of a first difference value and a second difference value, or if the reference bit is a second value, the reference bit is represented by a correlation value of a third difference value and a fourth difference value; wherein
the first difference value is a difference value obtained by subtracting data in a 1st first time unit from data in a 2nd first time unit in the third part, and the second difference value is a difference value obtained by subtracting data in the target second time unit from the data in the 2nd first time unit in the third part; or, the first difference value is a difference value obtained by subtracting the data in the 2nd first time unit from the data in the 1st first time unit in the third part, and the second difference value is a difference value obtained by subtracting the data in the 2nd first time unit in the third part from the data in the target second time unit; and
the third difference value is a difference value obtained by subtracting the data in the 2nd first time unit from the data in the 1st first time unit in the third part, and the fourth difference value is a difference value obtained by subtracting the data in the target second time unit from the data in the 2nd first time unit in the third part; or, the third difference value is a difference value obtained by subtracting the data in the 1st first time unit from the data in the 2nd first time unit in the third part, and the fourth difference value is a difference value obtained by subtracting the data in the 2nd first time unit in the third part from the data in the target second time unit.

11. The method according to claim 6 or 7, wherein when M is equal to 3,

if the reference bit is a first value, the reference bit is represented by a correlation value of a fifth difference value and a sixth difference value, or if the reference bit is a second value, the reference bit is represented by a correlation value of a seventh difference value and an eighth difference value; wherein
the fifth difference value is a difference value obtained by subtracting data in the 1st first time unit from data in the 2nd first time unit in the third part, and the sixth difference value is a difference value obtained by subtracting data in a 3rd first time unit from the data in the 2nd first time unit in the third part; or, the fifth difference value is a difference value obtained by subtracting the data in the 2nd first time unit from the data in the 1st first time unit in the third part, and the sixth difference value is a difference value obtained by subtracting the data in the 2nd first time unit from the data in the 3rd first time unit in the third part; and
the seventh difference value is a difference value obtained by subtracting the data in the 2nd first time unit from the data in the 1st first time unit in the third part, and the eighth difference value is a difference value obtained by subtracting the data in the 3rd first time unit from the data in the 2nd first time unit in the third part; or, the seventh difference value is a difference value obtained by subtracting the data in the 1st first time unit from the data in the 2nd first time unit in the third part, and the eighth difference value is a difference value obtained by subtracting the data in the 2nd first time unit from the data in the 3rd first time unit in the third part.

12. The method according to any one of claims 6 to 9, wherein when M is equal to 3,

if the reference bit is a first value, the reference bit is represented by a correlation value of a ninth difference value and a tenth difference value, or if the reference bit is a second value, the reference bit is represented by a correlation value of an eleventh difference value and a twelfth difference value; wherein
the ninth difference value is a difference value obtained by subtracting data in the 1st first time unit from data in the 2nd first time unit in the third part, and the tenth difference value is a difference value obtained by subtracting data in the target second time unit from data in the 3rd first time unit in the third part; or, the ninth difference value is a difference value obtained by subtracting the data in the 2nd first time unit from the data in the 1st first time unit in the third part, and the tenth difference value is a difference value obtained by subtracting the data in the 3rd first time unit in the third part from the data in the target second time unit; and
the eleventh difference value is a difference value obtained by subtracting the data in the 2nd first time unit from the data in the 1st first time unit in the third part, and the twelfth difference value is a difference value obtained by subtracting the data in the target second time unit from the data in the 3rd first time unit in the third part; or, the eleventh difference value is a difference value obtained by subtracting the data in the 1st first time unit from the data in the 2nd first time unit in the third part, and the twelfth difference value is a difference value obtained by subtracting the data in the 3rd first time unit in the third part from the data in the target second time unit.

13. The method according to claim 6 or 7, wherein when M is equal to 4,

if the reference bit is a first value, the reference bit is represented by a correlation value of a thirteenth difference value and a fourteenth difference value, or if the reference bit is a second value, the reference bit is represented by a correlation value of a fifteenth difference value and a sixteenth difference value; wherein

the thirteenth difference value is a difference value obtained by subtracting data in the 1st first time unit from data in the 2nd first time unit in the third part, and the fourteenth difference value is a difference value obtained by subtracting data in a 4th first time unit from data in the 3rd first time unit in the third part; or, the thirteenth difference value is a difference value obtained by subtracting the data in the 2nd first time unit from the data in the 1st first time unit in the third part, and the fourteenth difference value is a difference value obtained by subtracting the data in the 3rd first time unit from the data in the 4th first time unit in the third part; and

the fifteenth difference value is a difference value obtained by subtracting the data in the 2nd first time unit from the data in the 1st first time unit in the third part, and the sixteenth difference value is a difference value obtained by subtracting the data in the 4th first time unit from the data in the 3rd first time unit in the third part; or, the fifteenth difference value is a difference value obtained by subtracting the data in the 1st first time unit from the data in the 2nd first time unit in the third part, and the sixteenth difference value is a difference value obtained by subtracting the data in the 3rd first time unit from the data in the 4th first time unit in the third part.

14. The method according to any one of claims 10 to 13, wherein the first value is equal to 1 and the second value is equal to 0; or, the first value is equal to 0 and the second value is equal to 1.

15. The method according to claim 6, wherein when P is equal to 4,

if the information bit is equal to a third value, the information bit is represented by a correlation value of a seventeenth difference value and an eighteenth difference value, or if the information bit is equal to a fourth value, the information bit is represented by a correlation value of a nineteenth difference value and a twentieth difference value; wherein

the seventeenth difference value is a difference value obtained by subtracting data in the 3rd second time unit from data in the 4th second time unit in a fourth part corresponding to the information bit, and the eighteenth difference value is a difference value obtained by subtracting data in the 1st second time unit from data in the 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and

the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

16. The method according to claim 15, wherein the third value is equal to 1 and the fourth value is equal to 0; or, the third value is equal to 0 and the fourth value is equal to 1.

17. An information receiving method, comprising:

receiving, by a third device, a third signal sent by a second device; wherein the third signal comprises a third part and Q fourth parts, the third part occupies M first time units, and each of the fourth parts occupies P second time units, wherein M is an integer greater than or equal to 2, P is an integer greater than or equal to 4, and Q is an integer greater than or equal to 1;

constructing, by the third device, a third correlation value used when a reference bit carried in the third signal is a first value, constructing a fourth correlation value used when the reference bit carried in the third signal is a second value, and for each of the fourth parts, constructing a fifth correlation value of a difference value between data in adjacent second time units in each of the fourth parts; wherein the reference bit corresponds to a first sub-signal comprised in a second signal, the third correlation value is a value related to a difference value between data in adjacent first time units in the third part, and the fourth correlation value is a value related to a difference value between data in adjacent first time units in the third part; and

performing, by the third device, demodulation based on the third correlation value, the fourth correlation value, and the fifth correlation value to obtain information bits, of Q second sub-signals comprised in the second signal, carried in the third signal.

18. The method according to claim 17, wherein the first time unit and the second time unit are time units of a same type, comprising any one of the following: symbol, slot, subframe, and frame.

19. The method according to claim 17 or 18, wherein when M is equal to 2,

the third correlation value is a correlation value of a first difference value and a second difference value, and the fourth correlation value is a correlation value of a third difference value and a fourth difference value; wherein the first difference value is a difference value obtained by subtracting data in a 1st first time unit from data in a 2nd first time unit in the third part, and the second difference value is a difference value obtained by subtracting data in a target second time unit from the data in the 2nd first time unit in the third part; or, the first difference value is a difference value obtained by subtracting the data in the 2nd first time unit from the data in the 1st first time unit in the third part, and the second difference value is a difference value obtained by subtracting the data in the 2nd first time unit in the third part from the data in the target second time unit; and
the third difference value is a difference value obtained by subtracting the data in the 2nd first time unit from the data in the 1st first time unit in the third part, and the fourth difference value is a difference value obtained by subtracting the data in the target second time unit from the data in the 2nd first time unit in the third part; or, the third difference value is a difference value obtained by subtracting the data in the 1st first time unit from the data in the 2nd first time unit in the third part, and the fourth difference value is a difference value obtained by subtracting the data in the 2nd first time unit in the third part from the data in the target second time unit.

20. The method according to claim 17 or 18, wherein when M is equal to 3,

the third correlation value is a correlation value of a fifth difference value and a sixth difference value, and the fourth correlation value is a correlation value of a seventh difference value and an eighth difference value; wherein the fifth difference value is a difference value obtained by subtracting data in the 1st first time unit from data in the 2nd first time unit in the third part, and the sixth difference value is a difference value obtained by subtracting data in a 3rd first time unit from the data in the 2nd first time unit in the third part; or, the fifth difference value is a difference value obtained by subtracting the data in the 2nd first time unit from the data in the 1st first time unit in the third part, and the sixth difference value is a difference value obtained by subtracting the data in the 2nd first time unit from the data in the 3rd first time unit in the third part; and
the seventh difference value is a difference value obtained by subtracting the data in the 2nd first time unit from the data in the 1st first time unit in the third part, and the eighth difference value is a difference value obtained by subtracting the data in the 3rd first time unit from the data in the 2nd first time unit in the third part; or, the seventh difference value is a difference value obtained by subtracting the data in the 1st first time unit from the data in the 2nd first time unit in the third part, and the eighth difference value is a difference value obtained by subtracting the data in the 2nd first time unit from the data in the 3rd first time unit in the third part.

21. The method according to claim 17 or 18, wherein when M is equal to 3,

the third correlation value is a correlation value of a ninth difference value and a tenth difference value, and the fourth correlation value is a correlation value of an eleventh difference value and a twelfth difference value; wherein
the ninth difference value is a difference value obtained by subtracting data in the 1st first time unit from data in the 2nd first time unit in the third part, and the tenth difference value is a difference value obtained by subtracting data in the target second time unit from data in the 3rd first time unit in the third part; or, the ninth difference value is a difference value obtained by subtracting the data in the 2nd first time unit from the data in the 1st first time unit in the third part, and the tenth difference value is a difference value obtained by subtracting the data in the 3rd first time unit in the third part from the data in the target second time unit; and
the eleventh difference value is a difference value obtained by subtracting the data in the 2nd first time unit from the data in the 1st first time unit in the third part, and the twelfth difference value is a difference value obtained by subtracting the data in the target second time unit from the data in the 3rd first time unit in the third part; or, the eleventh difference value is a difference value obtained by subtracting the data in the 1st first time unit from the data in the 2nd first time unit in the third part, and the twelfth difference value is a difference value obtained by subtracting the data in the 3rd first time unit in the third part from the data in the target second time unit.

22. The method according to claim 17 or 18, wherein when M is equal to 4,

the third correlation value is a correlation value of a thirteenth difference value and a fourteenth difference value, and the fourth correlation value is a correlation value of a fifteenth difference value and a sixteenth difference value; wherein
the thirteenth difference value is a difference value obtained by subtracting data in the 1st first time unit from data in the 2nd first time unit in the third part, and the fourteenth difference value is a difference value obtained by subtracting data in a 4th first time unit from data in the 3rd first time unit in the third part; or, the thirteenth difference value is a difference value obtained by subtracting the data in the 2nd first time unit from the data in the 1st first time unit in the third part, and the fourteenth difference value is a difference value obtained by subtracting the data in the 3rd first time unit from the data in the 4th first time unit in the third part; and
the fifteenth difference value is a difference value obtained by subtracting the data in the 2nd first time unit from the data in the 1st first time unit in the third part, and the sixteenth difference value is a difference value obtained by subtracting the data in the 4th first time unit from the data in the 3rd first time unit in the third part; or, the fifteenth difference value is a difference value obtained by subtracting the data in the 1st first time unit from the data in the 2nd first time unit in the third part, and the sixteenth difference value is a difference value obtained by subtracting the data in the 3rd first time unit from the data in the 4th first time unit in the third part.

23. The method according to any one of claims 19 to 22, wherein the first value is equal to 1 and the second value is equal to 0; or, the first value is equal to 0 and the second value is equal to 1.

24. The method according to claim 17, wherein when P is equal to 4,

the fifth correlation value is a correlation value of a seventeenth difference value and an eighteenth difference value, or the fifth correlation value is a correlation value of a nineteenth difference value and a twentieth difference value; wherein
the seventeenth difference value is a difference value obtained by subtracting data in a 3rd second time unit from data in a 4th second time unit in a fourth part corresponding to the information bit, and the eighteenth difference value is a difference value obtained by subtracting data in a 1st second time unit from data in a 2nd second time unit in the fourth part corresponding to the information bit; or, the seventeenth difference value is a difference value obtained by subtracting the data in the 2nd second time unit from the data in the 1st second time unit in the fourth part corresponding to the information bit, and the eighteenth difference value is a difference value obtained by subtracting the data in the 4th second time unit from the data in the 3rd second time unit in the fourth part corresponding to the information bit; and
the nineteenth difference value is a difference value obtained by subtracting the data in the 4th second time unit from the data in the 3rd second time unit in the fourth part corresponding to the information bit, and the twentieth difference value is a difference value obtained by subtracting the data in the 1st second time unit from the data in the 2nd second time unit in the fourth part corresponding to the information bit; or, the nineteenth difference value is a difference value obtained by subtracting the data in the 3rd second time unit from the data in the 4th second time unit in the fourth part corresponding to the information bit, and the twentieth difference value is a difference value obtained by subtracting the data in the 2nd second time unit from the data in the 1st second time unit in the fourth part corresponding to the information bit.

25. The method according to claim 17, wherein if the second device sends K third signals, wherein K is an integer greater than or equal to 2;

the third correlation value is a correlation value determined based on a first average difference value group, and the first average difference value is obtained by performing bit average on difference values comprised in a first difference value group in the K third signals; wherein the first difference value group comprises a twenty-first difference value or the first difference value group comprises a twenty-first difference value and a twenty-second difference value, the twenty-first difference value comprises a difference value between data in adjacent first time units in the third part when the reference bit is a first value, and the twenty-second difference value comprises a difference value between data in an M-th first time unit in the third part and data in a target second time unit, and the target second time unit is one second time unit in any one of the Q fourth parts;
the fourth correlation value is a correlation value determined based on a second average difference value group, and the second average difference value is obtained by performing bit average on difference values comprised in a second difference value group in the K third signals; wherein the second difference value group comprises a twenty-third difference value or the second difference value group comprises a twenty-third difference value and a twenty-fourth difference value, the twenty-third difference value comprises a difference value between data in adjacent first time units in the third part when the reference bit is a second value, and the twenty-fourth difference value comprises a difference value between data in the M-th first time unit in the third part and the data in the target second time unit, and the target second time unit is one second time unit in any one of the Q fourth parts; and the fifth correlation value is a correlation value determined based on a third average difference value group, the third average difference value group is obtained by performing bit average on difference values comprised in a third difference value group in the K third signals, and the third difference value group comprises a difference value between data in adjacent second time units in each of the fourth parts.

26. The method according to any one of claims 17 to 25, wherein the performing demodulation based on the third correlation value, the fourth correlation value, and the fifth correlation value to obtain information bits of Q second sub-signals comprised in the second signal comprises:
for each of the fourth parts, based on a pre-established relationship between a reference bit and an information bit, determining, by the third device, an information bit of a corresponding second sub-signal to be a third value when a product of the fifth correlation value and the third correlation value is greater than or equal to a product of the fifth correlation value and the fourth correlation value, or determining the information bit of the corresponding second sub-signal to be a fourth value when the product of the fifth correlation value and the third correlation value is less than the product of the fifth correlation value and the fourth correlation value.

27. The method according to claim 26, wherein the third value is equal to 1 and the fourth value is equal to 0; or, the third value is equal to 0 and the fourth value is equal to 1.

28. An information sending apparatus, comprising:
a first sending module, configured to send a first signal, wherein the first signal comprises a first part and Q second parts, the first part occupies M first time units, data in the M first time units is the same, each of the second parts occupies P second time units, data in the P second time units is the same, and the data in the first time unit is the same as or opposite to the data in the second time unit, wherein M is an integer greater than or equal to 2, P is an integer greater than or equal to 4, and Q is an integer greater than or equal to 1.

29. An information sending apparatus, comprising:

a first receiving module, configured to receive a first signal sent by a first device, wherein the first signal comprises a first part and Q second parts, the first part occupies M first time units, data in the M first time units is the same, each of the second parts occupies P second time units, data in the P second time units is the same, and the data in the first time unit is the same as or opposite to the data in the second time unit, wherein M is an integer greater than or equal to 2, P is an integer greater than or equal to 4, and Q is an integer greater than or equal to 1; a modulation module, configured to perform backscatter modulation on the first signal by using a second signal to generate a third signal; wherein the second signal comprises a first sub-signal and Q second sub-signals, the third signal comprises a third part and Q fourth parts, the first sub-signal is used for modulating the first part to obtain the third part, the Q second sub-signals are used for modulating the Q second parts to obtain the Q fourth parts respectively, a reference bit, of the first sub-signal, carried in the third signal is represented by a first correlation value or a second correlation value, the first correlation value is a correlation value of a difference value between data in adjacent first time units in the third part, a second correlation value is a correlation value of a difference value between data in adjacent time units in a third time unit, the third time unit comprises M first time units in the third part and a target second time unit in a target part, the target part is any one of the Q fourth parts, the third signal carries Q information bits of the Q second sub-signals, and each information bit is represented by a correlation value corresponding to a difference value between data in adjacent second time units in the fourth part; and a second sending module, configured to send the third signal.

30. An information sending apparatus, comprising:

a second receiving module, configured to receive a third signal sent by a second device; wherein the third signal comprises a third part and Q fourth parts, the third part occupies M first time units, and each of the fourth parts occupies P second time units, wherein M is an integer greater than or equal to 2, P is an integer greater than or equal to 4, and Q is an integer greater than or equal to 1; a processing module, configured to construct a third correlation value used when a reference bit carried in the third signal is a first value, construct a fourth correlation value used when the reference bit carried in the third signal is a second value, and for each of the fourth parts, construct a fifth correlation value of a difference value between data in adjacent second time units in each of the fourth parts; wherein the reference bit corresponds to a first sub-signal comprised in a second signal, the third correlation value is a value related to a difference value between data in adjacent first time units in the third part, and the fourth correlation value is a value related to a difference value between data in adjacent first time units in the third part; and

a demodulation module, configured to perform demodulation based on the third correlation value, the fourth correlation value, and the fifth correlation value to obtain information bits, of Q second sub-signals comprised in the second signal, carried in the third signal.

31. A communication device, comprising a processor and a memory, wherein the memory stores a program or instructions capable of running on the processor, and when the program or the instructions are executed by the processor, the steps of the information sending method according to any one of claims 1 to 5, or the steps of the information sending method according to any one of claims 6 to 16, or the steps of the information receiving method according to any one of claims 17 to 27 are implemented.

32. A readable storage medium, wherein the readable storage medium stores a program or instructions, and when the program or the instructions are executed by a processor, the steps of the information sending method according to any one of claims 1 to 5, or the steps of the information sending method according to any one of claims 6 to 16, or the steps of the information receiving method according to any one of claims 17 to 27 are implemented.

RF radio frequency
source &
BSC receiving device

BSC
transmitting
device

FIG. 1A

RF radio
frequency
source

BSC receiving
device

BSC
transmitting
device

FIG. 1B

A first device sends a first signal

21

FIG. 2

First part        Second part #1        Second part #Q

s(t)    | Slot 1 | Slot 2 | ... | Slot M | Slot 1 | Slot 2 | ... | Slot P | ... | Slot 1 | Slot 2 | ... | Slot P |

$N$

## FIG. 3

First signal 1        First signal 2        First signal $K$

| First part | Second part | First part | Second part | ⋯ | First part | Second part |

## FIG. 4A

First signal 1        First signal 2        First signal $K$

| First part | Second part | Data | First part | Second part | Data | ⋯ | First part | Second part | Data |

## FIG. 4B

```
┌────────────────────────────────────────────────────────────────┐ 51
│                                                                │ ⌐
│     A second device receives a first signal sent by a first device │
│                                                                │
└────────────────────────────────────────────────────────────────┘
                               │
                               ▼
┌────────────────────────────────────────────────────────────────┐ 52
│ The second device performs backscatter modulation on the first signal │
│         by using a second signal to generate a third signal    │
│                                                                │
└────────────────────────────────────────────────────────────────┘
                               │
                               ▼
┌────────────────────────────────────────────────────────────────┐ 53
│                                                                │
│            The second device sends the third signal            │
│                                                                │
└────────────────────────────────────────────────────────────────┘
```

FIG. 5

```
┌────────────────────────────────────────────────────────────────┐ 61
│                                                                │
│    A third device receives a third signal sent by a second device │
│                                                                │
└────────────────────────────────────────────────────────────────┘
                               │
                               ▼
┌────────────────────────────────────────────────────────────────┐ 62
│ The third device constructs a third correlation value used when a reference bit │
│ carried in the third signal is a first value, constructs a fourth correlation value │
│ used when the reference bit carried in the third signal is a second value, and for │
│ each of the fourth parts, constructs a fifth correlation value of a difference value │
│ between data in adjacent second time units in each of the fourth parts │
└────────────────────────────────────────────────────────────────┘
                               │
                               ▼
┌────────────────────────────────────────────────────────────────┐ 63
│ The third device performs demodulation based on the third correlation value, the │
│   fourth correlation value, and the fifth correlation value to obtain information │
│  bits, of Q second sub-signals included in the second signal, carried in the third │
│                              signal                            │
└────────────────────────────────────────────────────────────────┘
```

FIG. 6

FIG. 7A

First part                    Second part

Slot 1    Slot 2    Slot 1    Slot 2    Slot 3    Slot 4

First sub-signal        Second sub-signal

B=0

B=1

FIG. 7B

FIG. 7C

FIG. 7D

FIG. 8A

FIG. 8B

FIG. 8C

First part      Second part

| Slot 1 | Slot 2 | Slot 3 | Slot 1 | Slot 2 | Slot 3 | Slot 4 |

First sub-signal     Second sub-signal

B=1

B=0

FIG. 8D

FIG. 8E

FIG. 8F

FIG. 8G

FIG. 8H

First part                    Second part

| Slot 1 | Slot 2 | Slot 3 | Slot 1 | Slot 2 | Slot 3 | Slot 4 |

First sub-signal              Second sub-signal

**B=1**

**B=0**

FIG. 9A

First part

Second part

| Slot 1 | Slot 2 | Slot 3 | Slot 1 | Slot 2 | Slot 3 | Slot 4 |

First sub-signal

Second sub-signal

B=1

B=0

FIG. 9B

FIG. 9C

FIG. 9D

First part                    Second part

Slot 1   Slot 2   Slot 3   Slot 1   Slot 2   Slot 3   Slot 4

First sub-signal              Second sub-signal

B=0

B=1

FIG. 9E

First part

Second part

| Slot 1 | Slot 2 | Slot 3 | Slot 1 | Slot 2 | Slot 3 | Slot 4 |

First sub-signal

Second sub-signal

B=0

B=1

FIG. 9F

FIG. 9G

FIG. 9H

FIG. 10A

FIG. 10B

FIG. 10C

FIG. 10D

FIG. 11A

FIG. 11B

FIG. 11C

FIG. 11D

FIG. 11E

FIG. 11F

FIG. 11G

FIG. 11H

120

Information sending apparatus

121

First sending module

FIG. 12

130

Information sending apparatus

131

First receiving module

132

Modulation module

133

Second sending module

FIG. 13

140

Information receiving apparatus

141

Second receiving module

142

Processing module

143

Demodulation module

FIG. 14

150

Communication device

151

Processor

152

Memory

FIG. 15

## INTERNATIONAL SEARCH REPORT

| | International application No. |
|---|---|
| | **PCT/CN2023/101019** |

| A. | CLASSIFICATION OF SUBJECT MATTER |
|---|---|

H04L 25/03(2006.01)i

According to International Patent Classification (IPC) or to both national classification and IPC

| B. | FIELDS SEARCHED |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, IEEE: 反向散射, 信号, 序列, 第一, 第二, 时间单元, 时域单元, 符号, 时隙, 帧, 相同, 相反, 反复, 重复, 参考, 信息, 比特, 相邻, 差, 相关值, backscatter, signal, sequence, first, second, time unit, time domain unit, symbol, slot, frame, identical, opposite, repeat, reference, information, bit, neighbor, difference, correlation value

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112073082 A (CHENGDU HUAWEI TECHNOLOGIES CO., LTD.) 11 December 2020 (2020-12-11) <br> description, paragraphs 0057-0236, and figures 1-6 | 1-5, 28, 31-32 |
| X | WO 2021097597 A1 (HUAWEI TECHNOLOGIES CO., LTD.) 27 May 2021 (2021-05-27) <br> description, page 9, line 27-page 24, line 21, and figures 1-17 | 1-5, 28, 31-32 |
| A | CN 106506426 A (UNIVERSITY OF ELECTRONIC SCIENCE AND TECHNOLOGY OF CHINA) 15 March 2017 (2017-03-15) <br> entire document | 1-32 |
| A | WO 2021163149 A1 (NEC LABORATORIES AMERICA, INC.) 19 August 2021 (2021-08-19) <br> entire document | 1-32 |

| ☑ | Further documents are listed in the continuation of Box C. | ☑ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2023** | **20 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/101019**

**C.    DOCUMENTS CONSIDERED TO BE RELEVANT**

| Category* | Citation of document, with indication, where appropriate, of the relevant passages | Relevant to claim No. |
|---|---|---|
| A | YANG, Gang et al. "Modulation in the Air: Backscatter Communication Over Ambient OFDM Carrier" *IEEE TRANSACTIONS ON COMMUNICATIONS,* Vol. 66, No. 3, 31 March 2018 (2018-03-31), entire document | 1-32 |

Form PCT/ISA/210 (second sheet) (July 2022)

INTERNATIONAL SEARCH REPORT
Information on patent family members

International application No.

**PCT/CN2023/101019**

| Patent document cited in search report | | | Publication date (day/month/year) | Patent family member(s) | | | Publication date (day/month/year) |
|---|---|---|---|---|---|---|---|
| CN | 112073082 | A | 11 December 2020 | WO | 2020233231 | A1 | 26 November 2020 |
|  |  |  |  | EP | 3952119 | A1 | 09 February 2022 |
|  |  |  |  | US | 2022077886 | A1 | 10 March 2022 |
| WO | 2021097597 | A1 | 27 May 2021 | EP | 4044483 | A1 | 17 August 2022 |
|  |  |  |  | US | 2022278886 | A1 | 01 September 2022 |
|  |  |  |  | KR | 20220098371 | A | 12 July 2022 |
|  |  |  |  | CN | 114556842 | A | 27 May 2022 |
| CN | 106506426 | A | 15 March 2017 | None | | | |
| WO | 2021163149 | A1 | 19 August 2021 | US | 2021264122 | A1 | 26 August 2021 |
|  |  |  |  | US | 2020334513 | A1 | 22 October 2020 |

Form PCT/ISA/210 (patent family annex) (July 2022)

**REFERENCES CITED IN THE DESCRIPTION**

**Patent documents cited in the description**

- CN 202210731471